# EUROPÄISCHE PATENTSCHRIFT

(11) **EP 4 341 058 B1**
(45) Veröffentlichungstag und Bekanntmachung des Hinweises auf die Patenterteilung: **23.04.2025**
(21) Anmeldenummer: 22728866.9
(22) Anmeldetag: 12.05.2022
(51) Int. Cl.: B27D 5/00, B05D 1/26, B05D 3/06, B05D 7/08

(54) **KANTENBESCHICHTUNG VON INSBESONDERE PLATTENFÖRMIGEN SUBSTRATEN**
EDGE COATING OF SUBSTRATES, ESPECIALLY PLATE-SHAPED SUBSTRATES
REVÊTEMENT DE BORDS DE SUBSTRATS, EN PARTICULIER DE SUBSTRATS EN FORME DE PLAQUE

(30) Priorität: 02.07.2021 DE 102021117136; 11.08.2021 DE 102021120894; 01.09.2021 DE 102021122622
(43) Veröffentlichungstag der Anmeldung: 27.03.2024
(73) Patentinhaber: Jowat SE, 32758 Detmold (DE)
(72) Erfinder: BENZ, Ina, 32758 Detmold (DE); GÖRDER, Tim, 32758 Detmold (DE); TERFLOTH, Christian, 32758 Detmold (DE)
(74) Vertreter: Strehlke, Ingo Kurt
(86) Internationale Anmeldenummer: PCT/EP2022/062926
(87) Internationale Veröffentlichungsnummer: WO 2023/274613

(56) Entgegenhaltungen:
- WO-A1-00/53387
- WO-A1-2020/165040
- DE-A1- 102006 030 624
- DE-A1- 102008 010 738
- DE-A1- 102015 118 055
- DE-A1- 102015 219 108
- DE-A1- 102019 133 335
- US-B2- 10 695 941

## Beschreibung

Die vorliegende Erfindung betrifft das technische Gebiet der Kunststoff- bzw. Klebstofftechnologie und insbesondere den Bereich der Kantenbeschichtung von plattenförmigen (Werkstoff-)Substraten, wie beispielsweise plattenförmigen Holz- bzw. Möbelteilen, insbesondere in Form von Arbeitsplatten für Küchen oder dergleichen.

Die vorliegende Erfindung betrifft in diesem Zusammenhang insbesondere ein Verfahren zur Kantenbeschichtung (synonym auch als Schmalseitenbeschichtung bzw. Schmalflächenbeschichtung bezeichnet) eines plattenförmigen Substrats (synonym auch als Werkstoffsubstrat bezeichnet) auf Basis eines hitzeklebrigen (synonym auch als heißklebrig bezeichnet) thermoplastischen Kunststoffstrangs, wobei das Verfahren das Aufbringen einer speziellen Bedruckung auf dem thermoplastischen Kunststoffstrang bzw. der Kantenbeschichtung umfasst. Wie nachfolgend noch ausgeführt, kann der Kunststoffstrang im Rahmen der vorliegenden Erfindung insbesondere als Kunststoffprofilstrang (synonym auch als Kunststoffprofil bezeichnet) oder als Kunststofffilm (synonym auch als Kunststofffolie bezeichnet) ausgebildet sein bzw. vorliegen.

Die vorliegende Erfindung betrifft gleichermaßen ein System (synonym auch als Anlage bezeichnet), welches insbesondere zur Durchführung des erfindungsgemäßen Verfahrens zur Kantenbeschichtung geeignet ist bzw. hierzu ausgebildet ist.

Bei der Herstellung bzw. dem Zuschnitt von insbesondere plattenförmigen Werkstoffen, wie Holz-, Spanplatten oder dergleichen, welche insbesondere im Bereich der Möbelindustrie Verwendung finden, beispielsweise für bzw. als (Schreib-)Tische, Regale, Dekorelemente, (Küchen-)Arbeitsplatten oder dergleichen, resultieren oftmals offene bzw. unversiegelte Kanten, welche zum einen optisch unattraktiv sind und zum anderen nachteilig im Hinblick auf die Haltbarkeit bzw. Beständigkeit der zugrundeliegenden Materialien sind, beispielsweise was den Einfluss von Feuchtigkeit oder dergleichen anbelangt. Diese Kanten begrenzen bzw. bilden insbesondere die Schmalseite bzw. -fläche des Werkstoffs und werden von daher im Allgemeinen auch als Schmalkanten bzw. Schmalseiten des insbesondere plattenförmigen Werkstoffs bezeichnet.

Im Stand der Technik besteht ein großer Bedarf, entsprechende Kanten zu versiegeln bzw. zu beschichten, um sowohl deren optische Eigenschaften als auch deren Beständigkeit bzw. Beanspruchbarkeit zu erhöhen. Hierzu werden im Stand der Technik oftmals vorgefertigte bzw. herkömmliche Kantenbänder eingesetzt, die mittels Verwendung eines Klebstoffs auf die Kante, insbesondere Schmalseite bzw. Schmalkante aufgebracht werden, wobei der zugrundeliegende insbesondere plattenförmige Werkstoff als Substrat bzw. insbesondere plattenförmiges Substrat für die mittels Verklebung aufzubringenden Kantenbänder fungiert.

Die für das Verkleben herkömmlicher Kantenbänder bekannten Verfahren sind im Allgemeinen jedoch relativ aufwendig und gehen mit einem erhöhten Materialbedarf bzw. -verbrauch einher, wobei zudem eine optische Anpassung bzw. optische Kompatibilität des Kantenbandes in Bezug auf die Optik, insbesondere das Dekor, des zugrundeliegenden Werkstoffs mitunter nur begrenzt oder gar nicht realisiert werden kann. Zudem ist ausgehend von vorgefertigten Kantenbändern eine nachträgliche optische Anpassung grundsätzlich nicht möglich bzw. allenfalls nur unter großem Aufwand zu realisieren.

Im Stand der Technik werden zur Versiegelung von Kanten (Schmalseiten, Schmalflächen) somit im Allgemeinen vorgefertigte Kantenbänder typischerweise an plattenförmigen Substraten, wie beispielsweise einer Spanplatte, MDF-Platte oder dergleichen, wie sie beispielsweise für Tische, Schränke, Regale, (Küchen-) Arbeitsplatten, Dekorelemente oder dergleichen verwendet werden können, geklebt. Dabei wird ein herkömmliches Kantenband (z. B. aus PVC, ABS, PP, PMMA, PET, Melamin, Holz oder Aluminium oder dergleichen) mit einem Klebstoff an die Schmalseite bzw. Schmalfläche des Substrats geklebt. Üblicherweise werden im Stand der Technik herkömmliche bzw. unter Verwendung eines Klebstoffs zu befestigende Kantenbänder in sogenannten Durchlaufmaschinen, wie beispielsweise Kanten(band)-Bearbeitungsmaschinen, mit Hilfe von Kanten(band)-Anleimaggregaten auf den Schmalseiten bzw. Schmalflächen plattenförmiger Substrate angebracht. Hierbei ist es im Allgemeinen vorgesehen, die Schmalfläche bzw. Schmalseite unmittelbar vor dem Anfahren bzw. Anbringen des Kantenbands mit einem Schmelzklebstoff, synonym auch als sogenannter *"Hotmelt"* bezeichnet, zu beaufschlagen.

Bei der Anbringung von herkömmlichen Kantenbändern in Durchlaufmaschinen mit unmittelbar vor dem Anfahren des Kantenbands erfolgenden Schmelzklebstoffauftrag handelt es sich grundsätzlich um etablierte Verfahren, welche sich auch zur Herstellung größerer Stückzahlen eignen. Dennoch bringen diese Verfahren eine Vielzahl an Nachteilen mit sich. So ist zwingend ein zusätzlicher Klebstoff erforderlich, und dies gegebenenfalls zudem in verhältnismäßig großen Mengen, wodurch die zwischen Kantenband und Substrat bzw. Trägermaterial resultierende Klebefuge deutlich sichtbar ist und hinsichtlich ästhetischer Gesichtspunkte oftmals nicht zufriedenstellend ausgestaltet ist bzw. werden kann. Weiterhin führt der Einsatz des Klebstoffs in großen Mengen beim anschließenden Andrücken des Kantenbandes an das Werkstück mitunter zu einem Herausquellen von Klebstoff aus der Klebefuge, was zu Verschmutzungen sowohl des Werkstücks als auch der Verarbeitungsmaschine führt. Um dies zu verhindern, muss das Werkstück vor Verfahrensbeginn aufwendig und kostenintensiv mit Trennmitteln behandelt werden.

Darüber hinaus sind solche Verfahren nicht sehr flexibel, da diese Verfahren nur wirtschaftlich sind, wenn direkt große Mengen an mit Kantenbändern beschichtetem Material hergestellt werden, so dass auch von daher eine individuelle Gestaltung nur begrenzt möglich ist. Vor allem wird in diesem Zusammenhang ein fertig vorgegebenes statisches Muster aufgebracht, und der Endkunde kann keine persönlichen Gestaltungen, insbesondere in kleinen Mengen, erhalten.

Aufgrund der zuvor geschilderten Nachteile dieses Verfahrens wird seit geraumer Zeit nach alternativen Möglichkeiten zur Anbringung von Kantenbändern auf Schmalflächen von plattenförmigen Werkstücken gesucht. Weitere Verfahren des Standes der Technik versuchen die zuvor geschilderten Nachteile beispielsweise durch Bereitstellung von mit Klebstoff vorbeschichteten Kantenbändern zu vermeiden, welche die nachträgliche Anbringung an die Schmalfläche zu einem flexiblen Zeitpunkt nach dem Klebstoffauftrag ermöglichen.

Zur Erzeugung von mit Klebstoff vorbeschichteten Kantenbändern sind verschiedene Verfahren im Stand der Technik bekannt. Zwar führen derartige Verfahren zu einer Verbesserung in Bezug auf die zuvor genannten Nachteile und ermöglichen insbesondere eine flexiblere Verfahrensführung, sind aber dennoch in vielfacher Hinsicht mitunter nicht zufriedenstellend.

Eine Möglichkeit zur Herstellung von vorbeschichteten Kantenbändern besteht in der Koextrusion. Dabei werden thermoplastische Kantenbänder mit einer nachträglich aktivierbaren Kunststoff- bzw. Klebstoffschicht hergestellt, d.h. die Herstellung des Kantenbandes einerseits und die Beaufschlagung mit Kunststoff bzw. Klebstoff andererseits erfolgen sozusagen zeitgleich. Mittels Koextrusion lassen sich auch Polymere mit einem hohen Molekulargewicht verarbeiten, was zu stabilen Klebeverbindungen führt. Koextrusionsverfahren erfordern jedoch hohe Investitionen in Bezug auf die Produktionsanlage, da diese an den jeweiligen Prozess immer individuell angepasst werden muss. Folglich sind derartige Verfahren nur für große Chargen wirtschaftlich; ist die Produktion individueller Ausgestaltungen, welche nicht in großen Mengen vertrieben werden, auch bei diesem Verfahren nicht wirtschaftlich, wobei in diesem Zusammenhang auch nur eine beschränkte Auswahl vorgegebener Muster zur Verfügung steht.

Darüber hinaus sind derartige Verfahren auch in technischer Hinsicht mitunter nachteilig, da bei Koextrusionsverfahren die direkte Verbindung von thermoplastischem Kantenband und Kunststoff- bzw. Klebstoffschicht ohne die Verwendung eines Haftvermittlers erfolgen muss. Aufgrund der fehlenden Haftvermittlerschicht kann folglich nur zwischen gleichartigen bzw. zueinander kompatiblen Materialien eine ausreichende Adhäsion erzielt werden.

Insgesamt besteht somit nur eine begrenzte Auswahl an Materialien bzw. eine begrenzte Auswahl an Materialkombinationen, welche zur Produktion von vorbeschichteten Kantenbändern eingesetzt werden können. Jedoch ist die Stabilität bzw. Qualität der Klebeverbindung mitunter nicht zufriedenstellend. Die zuvor beschriebenen allgemeinen Nachteile von Koextrusionsverfahren werden auch nicht überwunden und aufgrund der häufig vorliegenden verhältnismäßig dicken Klebstoffschicht ist eine zielgerichtete und effiziente Reaktivierung des Klebstoffs nur begrenzt möglich.

Durch Koextrusion erzeugte Kunststoffkanten sind beispielsweise aus der EP 1 163 864 A1, der DE 10 2006 021 171 A1 sowie der WO 2009/026977 A1 bekannt.

Neben der Herstellung von beschichteten Kantenbändern mittels Koextrusion ist es auch möglich, Kantenbänder im Rahmen von sogenannten Offline-Prozessen mit einem Schmelzklebstoff bzw. Hotmelt zu beschichten. Bei diesen Verfahren wird zunächst das Kantenband als solches hergestellt und erst später, beispielsweise durch einen Lohnbeschichter oder einen Hersteller von Möbelteilen, mit einem nachträglich aktivierbaren Klebstoff beschichtet. Derartige Offline-Prozesse bieten insgesamt eine gewisse Flexibilität in Bezug auf die zu beschichtenden Kantenwerkstoffe und erlauben aufgrund der kostengünstigen Verfahrensführung auch die Ausrüstung kleiner Chargen bzw. Mengen. Derartige Verfahren können jedoch mit gravierenden Nachteilen verbunden sein: Besonders problematisch ist, dass der Einsatz von Polymeren mit hohen Molekulargewichten und niedrigen Schmelzindizes nicht möglich ist, da die hierfür erforderlichen hohen Temperaturen nicht im Offline-Betrieb erreicht werden können. Zwar lassen sich im Rahmen derartiger Offline-Prozesse die Kantenbänder deutlich kostengünstiger beschichten, allerdings sind die resultierenden Klebeverbindungen den mittels Koextrusion hergestellten Kantenbändern in Bezug auf die Gebrauchseigenschaften oftmals unterlegen.

Das zur nachfolgenden Anbringung des Kantenbandes an einen Werkstoff erforderliche Aufschmelzen der Klebstoffschicht sowohl von durch Koextrusion erzeugten als auch von nachbeschichteten Kantenbändern ist oftmals mit einem nur schwach ausgeprägten bzw. schlecht steuerbaren Energietransfer auf den Klebstoff verbunden, so dass die Erwärmung verhältnismäßig langwierig bzw. unspezifisch ist. Darüber hinaus wird insbesondere aufgrund der schlechten Steuerbarkeit typischerweise das Kantenband selbst miterwärmt. Die ist jedoch der Qualität des Kantenbandes abträglich, da eine Erwärmung des Kantenbandes zu einer Materialschädigung führen kann, was wiederum in einer Einschränkung der Kantenbandmaterialien auf unempfindliche Materialien resultiert.

Darüber hinaus gehen mit dem zuvor geschilderten Stand der Technik noch weitere Probleme einher: Zum einen muss von Möbelherstellern stets eine ausreichende Menge an Kantenband gelagert werden, was zu logistischen Problemen führen kann. Zum anderen kann das Kantenband von seiner (Oberflächen-)Struktur und Optik nicht individuell an die jeweilige Kantenstruktur angepasst werden, weil es sich um bereits vorgefertigtes Material handelt, welches nicht mehr ohne weiteres verformt oder optisch verändert werden kann. In diesem Zusammenhang kann es insbesondere auch dazu kommen, dass nicht die erforderliche Menge an Kantenbänder in einem gewünschten Design verfügbar ist oder alternativ eine zu große Menge eines bestimmten Designs eingelagert wird, wobei zusätzlich noch spezifische Lagerbedingungen eingehalten werden müssen, um so die Materialqualität nicht nachteilig zu beeinflussen. Die Verfahren aus dem Stand der Technik erfordern somit mitunter auch eine sehr aufwendige und frühzeitige Planung bzw. Logistik seitens der Möbelhersteller.

Insbesondere müssen die Lieferketten exakt eingehalten werden, um Verzögerungen in der Herstellung der Endprodukte zu verhindern. Vor allem müssen die Herstellung des Substrats bzw. Werkstoffs und die Bereitstellung des spezifischen Kantenbandes zeitlich und räumlich exakt aufeinander abgestimmt bzw. koordiniert werden.

Darüber hinaus entstehen hohe Produktions- und Transportkosten, da die Kantenbänder typischerweise nicht vom Möbelhersteller selbst produziert werden. Hinzu kommt dann auch noch der innerbetriebliche Transport vom Lagerort zu der entsprechenden Kantenbearbeitungs- bzw. Kantenanleimmaschinen. Anschließend müssen überschüssige Kantenbänder bzw. Verschnitt entweder zurück zum Lager transportiert oder aber entsorgt werden, wobei insbesondere die Entsorgung von Verschnitt unwirtschaftlich und unökonomisch ist.

Die DE 10 2015 219 108 A1 betrifft ein Verfahren zur Schmalflächenbeschichtung bzw. zur Erstellung eines Kantenverschlusses an der Schmalfläche von vorzugsweise plattenförmigen Werkstücken, wobei es sich bei den Werkstücken insbesondere um Elemente bzw. Bauteile aus der Möbel- bzw. Bauelementindustrie handelt.

Darüber hinaus betrifft die DE 10 2008 010 738 A1 ein Verfahren zur Herstellung eines dekorierten Profilkörpers, umfassend die Schritte: Bereitstellen eines Substrats; Auftragen eines Dekorgrundes; und Auftragen einer dem Dekorgrund zumindest abschnittsweise bedeckenden Dekorveredelung im Digitaldruckverfahren, wobei der Dekorgrund und die Dekorveredelung zusammen ein Dekor des Profilkörpers bilden, wobei der Dekorgrund einen Farbaufbau aus einem gegenüber der Dekorveredelung erweiterten Farbraum aufweist, wobei der Farbaufbau des Dekorgrundes derart ausgewählt ist, dass zwischen dem Dekor des Profilkörpers und einem dazu ähnlichen, vorzugsweise identischen Referenzdekors im Wesentlichen kein Metamerie-Effekt auftritt.

Die WO 00/53387 A1 betrifft eine Vorrichtung zum Anbringen eines Kunststoffkantenstreifens an einer Kante eines plattenförmigen Werkstücks, wie beispielsweise einer Holzplatte, einer Spanplatte, einer Platte aus holzähnlichen Spänen oder dergleichen, umfassend Extrusionsmittel zum Extrudieren eines Strangs aus Kunststoffmaterial auf eine Kante des Werkstücks und Formmittel zum Formen des extrudierten Strangs aus Kunststoffmaterial in ein gewünschtes Profil sowie ein entsprechendes Verfahren zum Anbringen eines Kunststoffkantenstreifens an eine Kante eines plattenförmigen Werkstücks und ein plattenförmiges Werkstück mit einem darauf extrudierten Kunststoffstrang.

Weiterhin betrifft die DE 10 2019 133 335 A1 eine Vorrichtung mit zumindest einer Vorbehandlungseinrichtung zum Vorbehandeln einer zu beschichtenden Fläche, eine Einrichtung zum Herbeiführen einer Relativbewegung zwischen der Vorbehandlungsvorrichtung und dem Werkstück, und mindestens einer Druckeinrichtung, insbesondere eine Inkjet-Druckeinrichtung, wobei die Druckeinrichtung mindestens einen digitalen Druckkopf umfasst, wobei die Vorbehandlungseinrichtung derart eingerichtet ist, dass ein Vorbehandlungsmaterial auf die zu bedruckende Fläche des Werkstücks aufgetragen wird.

Darüber hinaus betrifft die US 10,695,941 B2 eine Vorrichtung zum Anbringen eines Kantenprofils an einer Schmalfläche eines plattenförmigen Materials in einer Kantenleimvorrichtung mit einem Plattenträger zur Aufnahme eines plattenförmigen Materials, wobei der Plattenträger einen in einer Ebene verlaufenden Oberseite mit einer Kantenprofil-Zuführeinrichtung und einer Kantenprofil-Führung aufweist, wobei die Führung mindestens ein Führungsmittel aufweist, entlang oder durch das das Kantenprofil führbar ist, wobei mindestens ein Führungsmittel relativ zu dem Plattenträger in einer Richtung bewegbar ist, die unter einem Winkel zu der Ebene verläuft, in der die obere Seite des Plattenträgers verläuft, sowie ein entsprechendes Verfahren zum Anbringen eines Kantenprofils und ein dadurch hergestelltes Möbelteil.

Weiterhin betrifft die DE 10 2015 118 055 A1 ein Kantenprofil für einen plattenförmigen Werkstoff, umfassend einen Schichtaufbau mit einem Grundkörper aus Kunststoff, der einen ersten Grundfarbton aufweist, mit einem Dekorgrund, der einen zweiten Grundfarbton aufweist, und mit einem Dekordruck, wobei ein Enddekor, das einen dritten Grundfarbton aufweist, zumindest gemeinsam aus Dekorgrund und Dekordruck gebildet wird, wobei der Dekorgrund eine zwischen Grundkörper und Dekordruck angeordnete Schicht ist, wobei der Dekorgrund eine mit dem Grundkörper koextrudierte Schicht aus Kunststoff ist, sowie einen entsprechenden plattenförmigen Werkstoff mit einem entsprechenden Kantenprofil.

Darüber hinaus betrifft die WO 2020/165040 A1 ein Verfahren zum Beschichten einer Schmalseite eines plattenförmigen Werkstücks mit einem Beschichtungsmaterial, insbesondere einem streifenförmigen oder bandförmigen Beschichtungsmaterial, mit einer Beschichtungsvorrichtung, wobei das Beschichtungsmaterial vor dem Anbringen an der Schmalseite des Werkstücks zumindest in einem Randbereich, der einer Haftfläche des Beschichtungsmaterials zugeordnet ist, mit einer Grundfarbe eingefärbt wird oder das Beschichtungsmaterial vollständig mit der Grundfarbe eingefärbt wird, wobei die Grundfarbe auf ein Farbton und/oder ein Muster und/oder Dekor einer Oberfläche des Werkstücks farblich abgestimmt wird, sodass nach dem Anbringen des Beschichtungsmaterials an der Schmalseite des Werkstücks ein abgestimmter Farbübergang zwischen dem eingefärbten Beschichtungsmaterial und dem Farbton und/oder Muster und/oder Dekor der Oberfläche des Werkstücks ausgebildet wird, sowie eine Beschichtungsvorrichtung, die ein solches Verfahren ausführt.

Schließlich betrifft die DE 10 2006 030 624 A1 ein Verfahren zur Herstellung einer bedruckten Kantenleiste, umfassend die Schritte: a) Bereitstellen einer Kantenleiste mit einem neutralen Dekor; b) Bedrucken der Kantenleiste entsprechend einer elektronischen Bilddatei als Druckvorlage in einem Digitaldruckverfahren; c) Ablängen der Kantenleiste und d) Montieren der Kantenleiste an einer Möbelkante, wobei die Schritte a) bis d) in einem im Wesentlichen kontinuierlichen Verfahren ausgeführt werden.

Vor diesem technischen Hintergrund liegt daher der vorliegenden Erfindung die Aufgabe zugrunde, ein Verfahren zur Kantenbeschichtung bereitzustellen, welches die zuvor geschilderten Nachteile des Standes der Technik zumindest weitgehend vermeidet oder aber wenigstens abzuschwächen imstande ist.

Insbesondere ist eine Aufgabe der vorliegenden Erfindung auch darin zu sehen, ein Verfahren zur Kantenbeschichtung bereitzustellen, welches eine hohe Flexibilität aufweist.

Insbesondere soll im Rahmen der vorliegenden Erfindung ein Verfahren bereitgestellt werden, anhand dessen eine individuelle optische Ausbildung der resultierenden Versiegelung bzw. Kantenbeschichtung ermöglicht wird, und zwar auch im Hinblick auf eine optische Anpassung bzw. Kompatibilität zu dem zugrundeliegenden Werkstoffteil bzw. -substrat. Insbesondere soll auch eine individuelle Anpassung im Rahmen der Verfahrensführung selbst möglich sein. Insbesondere soll auch eine individuelle optische Ausbildung bzw. ein individuelles Aussehen der Kantenbeschichtung ermöglicht werden. Insbesondere soll das Verfahren eine hohe und individuelle optische Anpassbarkeit der optischen Gestaltung der Beschichtung auch im Hinblick auf das zugrundeliegende Aussehen bzw. die Optik des Substrats selbst (Oberflächendekor) ermöglichen, beispielsweise im Hinblick auf (Küchen-)Arbeitsplatten oder dergleichen.

Darüber hinaus ist eine weitere Aufgabe der vorliegenden Erfindung, ein Verfahren zur Kantenbeschichtung bereitzustellen, welches wirtschaftlich und ökonomisch ist, insbesondere ein Verfahren, bei welchem die benötigte Rohstoffmenge sowie die Abfallmenge reduziert werden.

Auch ist es eine Aufgabe der vorliegenden Erfindung, ein Verfahren zur Kantenbeschichtung bereitzustellen, durch welches sowohl Transportkosten als auch Lagerkosten insgesamt, insbesondere auch von Zwischenprodukten, reduziert werden können.

Zudem ist eine weitere Aufgabe der vorliegenden Erfindung auch darin zu sehen, entsprechende plattenförmige Substrate bereitzustellen, deren Schmalkante bzw. Schmalseite mit einer dauerhaften Versiegelung bzw. (Kanten-)Beschichtung versehen ist, welche eine hohe Widerstandsfähigkeit bzw. Beanspruchbarkeit gegenüber mechanischer Belastung bzw. Umwelteinflüssen, wie Feuchtigkeit, UV-Licht oder dergleichen, aufweist.

Die der vorliegenden Erfindung zugrundeliegende Aufgabe wird - gemäß einem **ersten** Aspekt der vorliegenden Erfindung - durch das erfindungsgemäße Verfahren zur Kantenbeschichtung (Schmalseitenbeschichtung, Schmalflächenbeschichtung) eines plattenförmigen Substrats (Werkstoffsubstrats) gemäß Anspruch 1 gelöst. Weitere, vorteilhafte Ausgestaltungen des erfindungsgemäßen Verfahrens sind Gegenstand der diesbezüglichen Unteransprüche.

Weiterer Gegenstand der vorliegenden Erfindung - gemäß einem **zweiten** Aspekt der vorliegenden Erfindung - ist zudem das erfindungsgemäße System (Anlage), welches zur Durchführung des Verfahrens nach der Erfindung bzw. zur Durchführung eines Verfahrens zur Kantenbeschichtung, konzipiert ist, gemäß dem diesbezüglichen, das erfindungsgemäße System betreffenden unabhängigen Anspruch. Weitere, vorteilhafte Ausgestaltungen des erfindungsgemäßen Systems sind Gegenstand der diesbezüglichen Unteransprüche.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird die vorliegende Erfindung im Folgenden näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit ein Verfahren zur Kantenbeschichtung eines plattenförmigen Substrats, vorzugsweise eines plattenförmigen Holz- und/oder Möbelteils, insbesondere Verfahren zur Anbringung einer Kantenbeschichtung auf mindestens eine Kante eines plattenförmigen Substrats, vorzugsweise eines plattenförmigen Holz- und/oder Möbelteils,
wobei das Verfahren die nachfolgen Verfahrensschritte umfasst:
   (a) Erzeugung eines hitzeklebrigen thermoplastischen Kunststoffstrangs, insbesondere Kunststoffprofilstrangs oder Kunststofffilms, vorzugsweise in Form eines Kantenbandes, bevorzugt mittels Extrusion,
   (b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante des plattenförmigen Substrats derart, dass eine Kantenbeschichtung des plattenförmigen Substrats resultiert und/oder dass ein Verbund des plattenförmigen Substrats mit der hieran aufgebrachten und/oder fixierten Kantenbeschichtung resultiert,
   (c) Aufbringen einer Bedruckung auf dem thermoplastischen Kunststoffstrang, insbesondere Kunststoffprofilstrang oder Kunststofffilm, und/oder auf der Kantenbeschichtung,
wobei in Verfahrensschritt (c) das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei in Verfahrensschritt (c) das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrangs und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung und/oder vor Verfahrensschritt (c) die optische Ausbildung des plattenförmigen Substrats elektronisch erfasst und/oder analysiert wird und nachfolgend in Verfahrensschritt (c) die Bedruckung in Abhängigkeit von der optischen Ausbildung ausgebildet und/oder hieran angepasst wird.

Im Rahmen der vorliegenden Erfindung wird insgesamt ein Verfahren zur Kantenbeschichtung bereitgestellt, welches eine hohe Flexibilität sowohl in Bezug auf das Design als auch in Bezug auf die Produktion ermöglicht und welches insgesamt ökonomisch durchführbar ist. Vor allem werden sowohl die benötige Rohstoffmenge als auch Transport- und Lagerkosten signifikant reduziert.

Im Rahmen der vorliegenden Erfindung bezieht sich der Begriff "Schmalseite" bzw. "Schmalfläche" bzw. "Kante" insbesondere auf eine Stirnseite des plattenförmigen Substrats bzw. Werkstoffsubstrats. Beispielsweise kann es sich hierbei, bezogen auf den Gebrauchs- bzw. Anwendungszustand des resultierenden Produkts, beispielsweise einer Küchen- bzw. Arbeitsplatte, um die vordere, dem Benutzer gewissermaßen zugewandte Kante des Werkstoffsubstrats handeln.

Im Rahmen der vorliegenden Erfindung bezieht sich der Begriff "Flachseite" bzw. "Flachfläche" des plattenförmigen Substrats bzw. Werkstoffsubstrats insbesondere auf die flächenmäßig größere Seite bzw. Fläche des Substrats. Beispielsweise kann es sich hierbei im Anwendungs- bzw. Gebrauchszustand gewissermaßen um die Oberseite des Substrats handeln, welche im Falle von beispielsweise von Arbeits- bzw. Küchenplatten gleichermaßen den Arbeitsbereich bzw. die Arbeitsseite darstellt und welche im Allgemeinen ein Dekor bzw. eine Dekorbeschichtung aufweisen kann, was grundsätzlich auch für die Unterseite gelten kann.

Das erfindungsgemäße Verfahren ermöglicht eine besonders hohe Flexibilität und individuelle Anpassung in Bezug auf das Design der Kantenbeschichtung, insbesondere kann gewissermaßen jedes beliebige Design auf die Oberfläche des Kunststoffstrangs gedruckt werden, so dass die Produkthersteller, beispielsweise Möbelhersteller, nicht an Angebote eines Kantenbandherstellers gebunden sind. Dabei kann das Design bzw. die optische Ausbildung der Bedruckung sozusagen vor Ort bzw. unmittelbar vor dem Druckprozess und im Verfahren selbst vorgegeben bzw. eingestellt werden, wobei auch eine weiterführend optische Anpassung an das zugrundeliegende Substrat realisiert werden kann.

Im Rahmen der vorliegenden Erfindung ist es sogar möglich, dass das aufzudruckende Design der Schmalseite exakt an das Design der Platte angepasst wird. In diesem Zusammenhang kann beispielsweise das Design der Platte optisch erfasst bzw. gescannt werden, und die Bedruckung wird exakt an das Design angepasst, so dass ein insbesondere optisch besonders hochwertiges Gesamtprodukt hergestellt wird.

Darüber hinaus ist die Herstellung des Gesamtprodukts, insbesondere Möbelstücks, bei der Verwendung des erfindungsgemäßen Verfahrens nicht an zeitliche Einschränkungen durch Verfügbarkeit, Bestellung und Lieferung des Kantenbandes gebunden.

Darüber hinaus kann erfindungsgemäß eine Vielzahl verschiedener Dicken und Breiten an Kantenbeschichtungen mit derselben Anlage bzw. demselben System hergestellt werden. Auch die zu beschichtenden Werkstoffsubstrate bzw. Holz- und Möbelteile sind im Wesentlichen nicht an spezifische Dimensionen gebunden.

Das erfindungsgemäße Verfahren resultiert insgesamt in einer besonders ökonomischen Herstellung der entsprechenden Werkstoffsubstrate bzw. Möbelteile. Insbesondere entfällt die Produktion herkömmlicher Kantenbänder, wodurch auch eine erhebliche Menge an Rohstoffen eingespart werden kann, beispielsweise im Hinblick auf Extrudate oder dergleichen herkömmlicher Kantenbänder. Zudem ist beispielsweise kein Primer und kein für die Herstellung herkömmlicher Kantenbänder erforderliches Trennmittel notwendig. Darüber hinaus fallen bei dem erfindungsgemäßen Verfahren zumindest im Wesentlichen keine Verschnitte an, welche anschließend ungenutzt entsorgt werden müssten. Zudem entfallen auch die Kosten der vorherigen Produktion der Kantenbänder sowie der Transport dieser Kantenbänder vom entsprechenden Hersteller zu den Möbelproduzenten sowie der Transport von den Lagern zu den Anlagen. Des Weiteren entfallen durch das erfindungsgemäße Verfahren auch Lagerkosten, welche im Stand der Technik für vorgefertigte konventionelle Kantenbänder oftmals anfallen. Insgesamt liefert die vorliegende Erfindung einen erheblichen ökonomischen und ökologischen Beitrag durch Schonung der Ressourcen.

Im Rahmen des erfindungsgemäßen Verfahrens wird somit insgesamt ein mit einem thermoplastischen Kunststoffstrang, insbesondere in Form bzw. einer hierauf basierenden Kantenbeschichtung an dessen Schmalseite bzw. Schmalfläche ausgerüstetes plattenförmiges Substrat, insbesondere ein diesbezügliches plattenförmiges Holz- bzw. Möbelteil, bereitgestellt, wobei auf diesem thermoplastischen Kunststoffstrang bzw. die diesbezügliche Kantenbeschichtung eine spezielle Bedruckung aufgebracht wird. Dabei verhält es sich im Rahmen der vorliegenden Erfindung insbesondere derart, dass, wie auch nachfolgend noch im Detail angeführt, der mit der Bedruckung versehene thermoplastische Kunststoffstrang bzw. die diesbezügliche Kantenbeschichtung die einzige bzw. ausschließliche Beschichtung bzw. Versiegelung der Schmalseite bzw. Schmalfläche des zugrundeliegenden Substrats und somit sozusagen die einzige Beschichtung bzw. Begrenzung der Schmalseite bzw. -fläche des Substrats unter Wegfall eines konventionellen Kantenbands darstellt.

Durch den Entfall eines konventionellen Kantenbandes liegt im Rahmen des erfindungsgemäßen Verfahrens für das beschichtete Werkstoffsubstrat auch keine Fuge zwischen Substrat und äußerer Begrenzung vor, da der thermoplastische Kunststoffstrang sozusagen selbst die einzige Beschichtung bzw. Begrenzung der Schmalseite ausbildet. Dies führt zu weiter verbesserten Materialeigenschaften auch hinsichtlich der Beständigkeit und Optik.

Das erfindungsgemäße Verfahren zeichnet sich zudem durch eine hohe Modularität der zugrundeliegenden Verfahrensschritte aus, wobei auch die Reihenfolge bzw. Abfolge der Verfahrensschritte variiert bzw. die zugrundeliegenden Erfordernisse individuell angepasst werden kann. Zudem verhält es sich erfindungsgemäß insbesondere auch derart, dass im Hinblick auf die Modularität des Verfahrens nach der Erfindung die jeweiligen Schritte in gemeinsamen oder voneinander getrennten Prozessführungen bzw. Prozessräumen durchgeführt werden können, wobei diesbezüglich auch eine kontinuierliche oder aber eine diskontinuierliche Verfahrensführung möglich ist. Auch von daher kann das erfindungsgemäße Verfahren bei hoher Variabilität zielgerichtet maßgeschneidert werden.

Vor diesem Hintergrund kann erfindungsgemäß insbesondere wie folgt vorgegangen werden:
- So kann es zum einen vorgesehen sein, dass das Verfahren, insbesondere die Gesamtdurchführung der Verfahrensschritte (a), (b) und (c), zumindest im Wesentlichen kontinuierlich und/oder unterbrechungsfrei und/oder mit zumindest im Wesentlichen unterbrechungsfreier Verfahrensführung und/oder mit zumindest im Wesentlichen unterbrechungsfreier Verfahrensführung durchgeführt wird.
   Insbesondere können die Verfahrensschritte (a), (b) und (c) räumlich zusammenhängend und/oder zeitlich zusammenhängend, insbesondere räumlich zusammenhängend und zeitlich zusammenhängend, durchgeführt werden.
   Insbesondere können die Verfahrensschritte (a), (b) und (c) in einer gemeinsamen Verfahrensführung und/oder in einer gemeinsamen Verfahrensstrecke (Prozessstrecke) bzw. Systemlinie und/oder in einem gemeinsamen Verfahrensraum (Prozessraum) durchgeführt werden, insbesondere als *in-line-*Verfahren oder *in-line-*Prozess*.*
   In diesem Zusammenhang kann insbesondere eine kontinuierliche bzw. unterbrechungsfreie Prozess- bzw. Verfahrensführung durchgeführt bzw. realisiert werden, wie zuvor angeführt.
- Zum anderen kann es sich erfindungsgemäß auch derart verhalten, dass das Verfahren, insbesondere die Gesamtdurchführung der Verfahrensschritte (a), (b) und (c), diskontinuierlich und/oder nicht unterbrechungsfrei durchgeführt wird. Beispielsweise kann nach Aufbringen bzw. Fixieren des thermoplastischen Kunststoffstrangs auf dem plattenförmigen Substrat eine Unterbrechung des Verfahrens vorgenommen werden, beispielsweise zur Lagerung oder zum Weitertransport des beschichteten plattenförmigen Substrats zu Zwecken der Aufbringung der Bedruckung, wobei in diesem Zusammenhang auch in voneinander getrennten Prozessstrecken bzw. Prozessräumen verfahren werden kann.
- Weiterhin kann es insbesondere vorgesehen sein, dass die Verfahrensschritte (a), (b) und (c) zumindest teilweise, insbesondere die Verfahrensschritte (b) und (c), räumlich getrennt voneinander und/oder zeitlich getrennt zueinander, insbesondere räumlich getrennt voneinander und zeitlich getrennt zueinander, durchgeführt werden.
   Insbesondere können die Verfahrensschritte (a), (b) und (c) zumindest teilweise, insbesondere die Verfahrensschritte (b) und (c), in voneinander getrennten Verfahrensführungen und/oder in voneinander getrennten Verfahrensräumen (Prozessräumen) durchgeführt werden.
   Insbesondere kann das erfindungsgemäße Verfahren insbesondere auch als Off-fine-Verfahren oder *Off*-*line*-Prozess durchgeführt werden.

Im Hinblick auf die obigen Ausführungen können die Verfahrensschritte in der Reihenfolge (Abfolge) (a), (b), (c) oder aber (a), (c), (b) durchgeführt werden (vgl. auch nachfolgende Ausführungen). Die zuvor angeführte Gesamtdurchführung der Verfahrensschritte kann somit verschiedene Reihenfolgen hinsichtlich der konkreten Abfolge der Verfahrensschritte (a), (b) bzw. (c) umfassen.

Im Rahmen der vorliegenden Erfindung kann es sich zudem wie folgt verhalten:
- Zum einen können die Verfahrensschritte (a) und (b) zumindest im Wesentlichen unmittelbar aufeinander abfolgend und/oder zumindest im Wesentlichen unmittelbar ineinander übergehend und/oder ohne Durchführung von Zwischenschritten durchgeführt werden. So kann es erfindungsgemäß insbesondere vorgesehen sein, dass die Erzeugung einerseits sowie das Aufbringen und/oder Fixieren des thermoplastischen Kunststoffstrangs andererseits unmittelbar ineinander übergehend und somit gewissermaßen zeitgleich oder gemeinsam durchgeführt werden, insbesondere wobei hierzu auch eine gemeinsame Vorrichtung zur Erzeugung und zum Aufbringen bzw. Fixieren andererseits eingesetzt werden kann, wie nachfolgend ausgeführt. Somit kann der thermoplastische Kunststoffstrang gewissermaßen an Ort und Stelle unmittelbar nach bzw. im Rahmen der Erzeugung auf dem Substrat aufgebracht bzw. fixiert werden.
- Erfindungsgemäß kann es zum anderen aber auch vorgesehen sein, dass die Verfahrensschritte (a) und (b) räumlich getrennt voneinander bzw. zeitlich getrennt zueinander, insbesondere räumlich getrennt voneinander und zeitlich getrennt zueinander, durchgeführt werden.
   Insbesondere können die Verfahrensschritte (a) und (b) in voneinander getrennten Verfahrensführungen und/oder Verfahrensstrecken (Systemlinie) und/oder in voneinander getrennten Verfahrensräumen (Prozessräumen) durchgeführt werden.
   Wie nachfolgend noch im Detail angeführt, kann der thermoplastische Kunststoffstrang beispielsweise im Rahmen eines zwischen den Verfahrensschritten (a) und (b), gefolgt von (c), oder aber zwischen (a) und (c), gefolgt von (b), durchgeführten Zwischenschritts (a') nach seiner Erzeugung auf einem separaten und von dem Werkstück bzw. Substrat verschiedenen Träger aufgebracht werden, gegebenenfalls gefolgt von einer Bedruckung, und nachfolgend auf das plattenförmige Substrat aufgebracht bzw. fixiert werden, beispielsweise nach Lagerung bzw. Transport des erzeugten thermoplastischen Kunststoffstrangs zur weiterführenden Verarbeitung.

Weiterhin kann im Rahmen des erfindungsgemäßen Verfahrens auch wie folgt vorgegangen werden:
- So können die Verfahrensschritte (b) und (c) zumindest im Wesentlichen unmittelbar aufeinander abfolgend und/oder zumindest im Wesentlichen unmittelbar ineinander übergehend und/oder ohne Durchführung von Zwischenschritten durchgeführt werden.
   Diesbezüglich kann es insbesondere vorgesehen sein, dass in einer gemeinsamen Verfahrensführung und/oder in einer gemeinsamen Verfahrensstrecke bzw. Systemlinie und/oder in einem gemeinsamen Verfahrensraum (Prozessraum) durchgeführt werden.
- Demgegenüber kann es zum anderen aber auch vorgesehen sein, dass die Verfahrensschritte (b) und (c) räumlich getrennt voneinander und/oder zeitlich getrennt zueinander, insbesondere räumlich getrennt voneinander und zeitlich getrennt zueinander, durchgeführt werden.
   Insbesondere können die Verfahrensschritte (b) und (c) in voneinander getrennten Verfahrensführungen und/oder in voneinander getrennten Verfahrensräumen (Prozessräumen) durchgeführt werden.
   So kann nach Aufbringen und Fixieren des thermoplastischen Kunststoffstrangs auf dem plattenförmigen Substrat eine Unterbrechung des Verfahrens erfolgen, beispielsweise zu Zwecken der Lagerung des bereits beschichteten Substrats bzw. zu Zwecken des Transports zur nachfolgenden Aufbringung der Bedruckung in einem anderen Verfahrensraum bzw. einer hiervon getrennten Verfahrensführung. Demgegenüber kann es sich aber auch derart verhalten, dass der zunächst erzeugte und auf einen Träger aufgebrachte thermoplastische Kunststoffstrang bedruckt wird und nachfolgend beispielsweise in einem anderen Prozessraum bzw. einer hiervon getrennten Verfahrensführung auf das Substrat aufgebracht bzw. hieran fixiert wird.

Im Hinblick auf die obigen Ausführungen können die Verfahrensschritte in der Reihenfolge (b) und (c) oder aber (c) und (b) durchgeführt werden (vgl. auch nachfolgende Ausführungen).

Gemäß einer erfindungsgemäß besonders bevorzugten Ausführungsform kann das Verfahren in der Reihenfolge der Verfahrensschritte (a), (b) und (c) durchgeführt werden. Insbesondere kann das Verfahren in der folgenden Reihenfolge durchgeführt werden: Verfahrensschritt (a), dann Verfahrensschritt (b), dann Verfahrensschritt (c). Erfindungsgemäß kann es somit insbesondere vorgesehen sein, dass zunächst Verfahrensschritt (a), gefolgt von Verfahrensschritt (b), wiederum gefolgt von Verfahrensschritt (c), durchgeführt wird. Mit der vorgenannten Abfolge der Verfahrensschritte werden besonders gute Ergebnisse insbesondere auch hinsichtlich der optischen Eigenschaften der resultierenden Produkte erhalten.

Gemäß einer weiteren erfindungsgemäßen Ausführungsform kann es demgegenüber auch vorgesehen sein, dass das Verfahren in Reihenfolge der Verfahrensschritte (a), (c) und (b) durchgeführt wird. Diesbezüglich kann das Verfahren insbesondere in der folgenden Reihenfolge durchgeführt werden: Verfahrensschritt (a), dann Verfahrensschritt (c), dann Verfahrensschritt (b). Erfindungsgemäß kann es somit vorgesehen sein, dass zunächst Verfahrensschritt (a), gefolgt von Verfahrensschritt (c), wiederum gefolgt von Verfahrensschritt (b), durchgeführt wird. Somit kann es sich erfindungsgemäß insbesondere derart verhalten, dass Verfahrensschritt (c) vor Verfahrensschritt (b) und/oder nach Verfahrensschritt (a) durchgeführt wird.

Erfindungsgemäß verhält es sich insbesondere derart, dass der thermoplastische Kunststoffstrang bzw. das Material des thermoplastischen Kunststoffstrangs mindestens ein Kunststoffpolymer, insbesondere Klebstoffpolymer, vorzugsweise hitzeklebriges (heißklebriges) thermoplastisches Kunststoffpolymer, bevorzugt hitzeklebriges (heißklebriges) Klebstoffpolymer, umfasst oder hieraus besteht. Durch die gezielte Verwendung eines derartigen Kunststoffpolymers werden für den hierauf basierenden thermoplastischen Kunststoffstrang definierte Eigenschaften auch bei dessen Herstellung und Weiterverarbeitung erreicht. Insbesondere kann das zugrundeliegende Material durch Erwärmen in einen fließfähigen bzw. hitzeklebrigen Zustand überführt werden bzw. hieraus bestehen. Somit ist zum einen eine definierte Erzeugung des Kunststoffstrangs und zum anderen ein optimiertes Aufbringen bzw. Fixieren des Kunststoffstrangs auf dem Substrat gewährleistet, da diesbezüglich optimierte Materialeigenschaften vorliegen, welche zu einem gleichmäßigen Austrag im Rahmen der Erzeugung und zu einer festen und dauerhaften Fixierung auf dem Substrat führen. Zu bevorzugten Ausbildungen des Kunststoffpolymers kann auch auf die nachfolgenden Ausführungen verwiesen werden.

Insbesondere ist im Hinblick auf Verfahrensschritt (a) bzw. (b) Folgendes anzuführen:
Erfindungsgemäß ist es insbesondere vorgesehen, dass, insbesondere in Verfahrensschritt (a), der thermoplastische Kunststoffstrang bzw. das Material des thermoplastischen Kunststoffstrangs, insbesondere das Kunststoffpolymer, insbesondere wie nachfolgend definiert, des thermoplastischen Kunststoffstrangs, in einem formbaren und/oder fließfähigen und/oder hitzeklebrigen Zustand vorliegt bzw. in einen solchen Zustand überführt wird. Dies kann insbesondere mittels Wärmebeaufschlagung (Erwärmen), vorzugsweise auf eine Temperatur oberhalb des Erweichungsbereichs und/oder Erweichungspunkts des thermoplastischen Kunststoffstrangs und/oder des für den thermoplastischen Kunststoffstrang eingesetzten (Ausgangs-) Materials, insbesondere Kunststoffpolymers, erfolgen. Hierdurch wird auch eine hohe Gleichmäßigkeit hinsichtlich der Formgebung des Kunststoffstrangs bei dessen Erzeugung und weiter verbesserte Eigenschaften beim Aufbringen bzw. Fixieren auf dem Substrat bzw. Träger gewährleistet. Die Erwärmung kann beispielsweise mittels insbesondere elektrischer Heizeinrichtungen oder dergleichen erfolgen.

Zudem kann, insbesondere in Verfahrensschritt (a), die Erzeugung des thermoplastischen Kunststoffstrangs mittels mindestens einer Erzeugungsvorrichtung (A) erfolgen bzw. durchgeführt werden. Diesbezüglich kann der thermoplastische Kunststoffstrang zumindest im Wesentlichen gleichförmig bzw. mit zumindest im Wesentlichen gleichmäßiger bzw. zumindest im Wesentlichen konstanter Geschwindigkeit (Erzeugungsgeschwindigkeit) erzeugt bzw. aus der Erzeugungsvorrichtung (A) ausgetragen werden, insbesondere mittels Düsenextrusion, vorzugsweise Schlitzdüsenextrusion.

Im Allgemeinen kann erfindungsgemäß, insbesondere in Verfahrensschritt (a), die Erzeugung des hitzeklebrigen thermoplastischen Kunststoffstrangs mittels Düse(n), insbesondere Düsenextrusion, vorzugsweise Schlitzdüsenextrusion, erfolgen. Demgegenüber kann es erfindungsgemäß auch vorgesehen sein, dass, insbesondere in Verfahrensschritt (a), die Erzeugung des hitzeklebrigen thermoplastischen Kunststoffstrangs mittels Walzen und/oder Walzenaustrag erfolgt. Erfindungsgemäß kann, insbesondere in Verfahrensschritt (a), die Erzeugung des hitzeklebrigen thermoplastischen Kunststoffstrangs mittels Düse(n), insbesondere Düsenextrusion, vorzugsweise Schlitzdüsenextrusion, oder mittels Walzen und/oder Walzenaustrag erfolgen. Erfindungsgemäß ist es in Bezug auf Verfahrensschritt (a) jedoch bevorzugt, dass die Erzeugung mittels Extrusion, insbesondere Düsenextrusion, vorzugsweise Schlitzdüsenextrusion, erfolgt.

Die Erzeugung des thermoplastischen Kunststoffstrangs kann, insbesondere in Verfahrensschritt (a), mit einer Geschwindigkeit (Erzeugungsgeschwindigkeit) im Bereich von 1 m/min bis 300 m/min, insbesondere im Bereich von 10 m/min bis 200 m/min, vorzugsweise im Bereich von 20 m/min bis 100 m/min, erfolgen. Grundsätzlich kann erfindungsgemäß eine Erzeugungsgeschwindigkeit auch von mehr als 100 m/min vorliegen, beispielsweise im Bereich von mehr als 100 m/min bis 300 m/min.

Erfindungsgemäß kann es insbesondere vorgesehen sein, dass der thermoplastische Kunststoffstrang, vorzugsweise in Verfahrensschritt (a) und/oder in Verfahrensschritt (b), zumindest im Wesentlichen strangförmig, insbesondere mit einer im Vergleich zur Höhenerstreckung größeren Längserstreckung, ausgebildet wird bzw. vorliegt.

Gemäß einer erfindungsgemäßen Ausführungsform kann es vorgesehen sein, dass der thermoplastische Kunststoffstrang, insbesondere der Kunststoffprofilstrang, vorzugsweise in Verfahrensschritt (a) und/oder in Verfahrensschritt (b), als dreidimensionale Struktur (Gebilde, Körper), insbesondere als Profil, ausgebildet wird und/oder vorliegt. Insbesondere kann der Kunststoffprofilstrang eine dreidimensionale Struktur (Gebilde, Körper), insbesondere als Profil, sein. Im Allgemeinen verhält es sich in diesem Zusammenhang insbesondere derart, dass der als Kunststoffprofilstrang ausgebildete Kunststoffstrang eine relativ große Dicke insbesondere im Sinne eines dreidimensionalen Körpers bzw. eine im Vergleich zu der Ausbildung als Kunststofffilm größere Dicke aufweist. Erfindungsgemäß ist es dabei für den Kunststoffprofilstrang insbesondere vorgesehen, dass sowohl die im angebrachten bzw. fixierten Zustand dem Substrat zugewandte als auch die dem Substrat abgewandte Fläche und/oder Seite zumindest im Wesentlichen flach und/oder zumindest im Wesentlichen eben ausgebildet ist (insbesondere bezogen auf den ausgebrachten bzw. erstreckten Zustand des Kunststoffstrangs). Grundsätzlich kann aber, auch wenn dies erfindungsgemäß weniger bevorzugt ist, insbesondere die im angebrachten bzw. fixierten Zustand dem Substrat abgewandte Fläche und/oder Seite des Kunststoffprofilstrangs ein kurvenförmiges und/oder wulstförmiges und/oder bogen(segment)förmiges und/oder kreis(abschnitt)förmiges Profil bzw. eine diesbezügliche Form aufweisen.

Gemäß einer weiteren erfindungsgemäßen Ausführungsform kann es aber auch vorgesehen sein, dass der thermoplastische Kunststoffstrang, insbesondere der Kunststofffilm, vorzugsweise in Verfahrensschritt (a) und/oder in Verfahrensschritt (b), als zweidimensionale und/oder quasi-zweidimensionale Struktur (Gebilde, Körper), insbesondere als Film (Folie) ausgebildet wird und/oder vorliegt. Im Allgemeinen verhält es sich in diesem Zusammenhang insbesondere derart, dass der als Kunststofffilm ausgebildete Kunststoffstrang eine relativ geringe Dicke insbesondere nach Art einer zweidimensionalen bzw. quasi-zweidimensionalen Ausbildung bzw. eine im Vergleich zu der Ausbildung als Kunststoffprofilstrang geringere Dicke aufweist. Erfindungsgemäß ist es dabei insbesondere vorgesehen, dass sowohl die im angebrachten bzw. fixierten Zustand dem Substrat zugewandte als auch die dem Substrat abgewandte Fläche und/oder Seite zumindest im Wesentlichen flach und/oder zumindest im Wesentlichen eben ausgebildet sind (insbesondere bezogen auf den flach ausgebrachten bzw. erstreckten Zustand des Kunststoffstrangs).

Weiterhin kann zu Verfahrensschritt (b) auch Folgendes angeführt werden:
So kann es, insbesondere in Verfahrensschritt (b), vorgesehen sein, dass der thermoplastische Kunststoffstrang im formbaren und/oder fließfähigen und/oder hitzeklebrigen (heißklebrigen) Zustand auf mindestens einer Kante des plattenförmigen Substrats, vorzugsweise bei einer Temperatur oberhalb des Erweichungsbereichs und/oder Erweichungspunkts des thermoplastischen Kunststoffstrangs und/oder des Merkmals des thermoplastischen Kunststoffstrangs, insbesondere Kunststoffpolymers, aufgebracht bzw. fixiert wird.
In diesem Zusammenhang kann es sich insbesondere derart verhalten, dass im Rahmen bzw. insbesondere nach dem Aufbringen bzw. nach dem Fixieren auf dem Substrat eine Abkühlung zur Verfestigung des Kunststoffstrangs bzw. zum Erhalt der diesbezüglichen Kantenbeschichtung erfolgt.

Zudem kann, insbesondere in Verfahrensschritt (b), der thermoplastische Kunststoffstrang zumindest im Wesentlichen vollflächig und/oder zumindest im Wesentlichen unterbrechungsfrei und/oder zumindest im Wesentlichen homogen und/oder mit gleichmäßiger Dicke auf der mindestens einen Kante des plattenförmigen Substrats aufgetragen und/oder fixiert werden. Hierdurch wird eine besonders effektive und beständige Versiegelung bei gleichzeitig guter Optik der zugrundeliegenden Schmalseite bzw. Schmalfläche des plattenförmigen Substrats erreicht. Zudem wird hierdurch die Nachbearbeitung reduziert.

Erfindungsgemäß kann es sich insbesondere derart verhalten, dass, insbesondere in Verfahrensschritt (b), die mindestens eine Kante (Schmalseite) des plattenförmigen Substrats entlang ihrer gesamten Höhe und/oder ihrer gesamten Länge, vorzugsweise zumindest im Wesentlichen vollständig und/oder vollflächig, mit dem thermoplastischen Kunststoffstrang beschichtet wird.

Erfindungsgemäß kann es insbesondere vorgesehen sein, dass, insbesondere in Verfahrensschritt (b), der thermoplastische Kunststoffstrang auf der Kante des plattenförmigen Substrats mittels Entlangführen und/oder Vorbeiführen des Substrats an mindestens einer Auftrags- und/oder Fixiervorrichtung (B), aufgetragen bzw. fixiert wird.

Zudem kann, insbesondere in Verfahrensschritt (b), das Substrat an der Auftrags- und/oder Fixiervorrichtung (B), mit einer gleichförmigen und/oder geradlinigen und/oder unidirektionalen Bewegung entlang- und/oder vorbeigeführt werden. Die Auftrags bzw. Fixiervorrichung (B) kann insbesondere als kombinierte Erzeugungs- und Auftrags- bzw. Fixiervorrichtung ausgebildet sein, insbesondere wobei in der kombinierten Erzeugungs- bzw. Auftrags- und/oder Fixiervorrichtung die Erzeugung des hitzeklebrigen thermoplastischen Kunststoffstrangs und das Aufbringen bzw. Fixieren erfolgt, insbesondere bei zumindest im Wesentlichen unmittelbar aufeinander abfolgender bzw. gemeinsamer Durchführung der Verfahrensschritte (a) und (b).

Grundsätzlich kann es sich im Rahmen der vorliegenden Erfindung aber auch derart verhalten, dass das Substrat fixiert wird und die entsprechenden Vorrichtungen an dem Substrat entlang- bzw. vorbeigeführt werden, auch wenn dies vorliegend weniger bevorzugt ist.

Erfindungsgemäß kann es sich zudem derart verhalten, dass, insbesondere in Verfahrensschritt (b) und/oder insbesondere im Rahmen des bzw. bei dem und/oder nach dem Aufbringen bzw. Fixieren des thermoplastischen Kunststoffstrangs eine Formgebung (synonym auch als Formatieren bzw. Formatierung bezeichnet), insbesondere eine weitere Formgebung (weiteres Formatieren bzw. weitere Formatierung), des thermoplastischen Kunststoffstrangs erfolgt.

Der Begriff "Formgebung" (synonym auch als Formatieren bzw. Formatierung bezeichnet), wie dieser im Rahmen der vorliegenden Erfindung verwendet wird, ist dabei sehr breit zu verstehen. Insbesondere bezieht sich die Formgebung auf eine (weitere) Gestaltung der körperlichen Form bzw. auf eine (weitere) körperliche Ausbildung des thermoplastischen Kunststoffstrangs bzw. der resultierenden Kantenbeschichtung. Die Formgebung bzw. Formatierung kann dabei insbesondere mit einer (weiteren) mechanischen Bearbeitung und/oder einer (weiteren) mechanischen Formgebung insbesondere des Kunststoffstrangs einhergehen, beispielsweise im Hinblick auf eine (weitere) Einstellung bzw. Vereinheitlichung beispielsweise der Dicke und/oder der Höhe (Breite) bzw. einer (weiteren) Oberflächen- und/oder Kantenbearbeitung oder dergleichen des thermoplastischen Kunststoffstrangs. Hierdurch kann eine weiterführend optimierte körperliche Ausbildung des thermoplastischen Kunststoffstrangs zur Bereitstellung einer entsprechenden Kantenbeschichtung insbesondere mit nochmals verbesserten Versiegelungseigenschaften und optischen Eigenschaften (homogenes Erscheinungsbild) realisiert werden. Insbesondere kann hierdurch eine nochmals verbesserte Anpassung an das zugrundeliegende Substrat erfolgen.

Erfindungsgemäß ist Verfahrensschritt (b) des erfindungsgemäßen Verfahrens somit wie folgt ausgestaltet:
(b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante (Schmalseite, Schmalfläche) des plattenförmigen Substrats derart, dass eine Kantenbeschichtung (Schmalseitenbeschichtung, Schmalflächenbeschichtung) des plattenförmigen Substrats resultiert und/oder dass ein Verbund (Komposit) des plattenförmigen Substrats mit der hieran aufgebrachten und/oder fixierten Kantenbeschichtung resultiert, insbesondere wobei während und/oder nach dem Aufbringen und/oder Fixieren eine Formgebung (Formatieren bzw. Formatierung), insbesondere eine weitere Formgebung (weiteres Formatieren bzw. weitere Formatierung), des thermoplastischen Kunststoffstrangs erfolgt und/oder durchgeführt wird.

Somit betrifft die vorliegende Erfindung gemäß diesem Aspekt insbesondere auch das Verfahren zur Kantenbeschichtung eines plattenförmigen Substrats, vorzugsweise eines plattenförmigen Holz- und/oder Möbelteils, insbesondere Verfahren zur Anbringung einer Kantenbeschichtung auf mindestens eine Kante eines plattenförmigen Substrats, vorzugsweise eines plattenförmigen Holz- und/oder Möbelteils,
wobei das Verfahren die nachfolgen Verfahrensschritte umfasst:
   (a) Erzeugung eines hitzeklebrigen thermoplastischen Kunststoffstrangs, insbesondere Kunststoffprofilstrangs oder Kunststofffilms, vorzugsweise in Form eines Kantenbandes, bevorzugt mittels Extrusion,
   (b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante des plattenförmigen Substrats derart, dass eine Kantenbeschichtung des plattenförmigen Substrats resultiert und/oder dass ein Verbund des plattenförmigen Substrats mit der hieran aufgebrachten und/oder fixierten Kantenbeschichtung resultiert, insbesondere wobei während und/oder nach dem Aufbringen und/oder Fixieren eine Formgebung, insbesondere eine weitere Formgebung, des thermoplastischen Kunststoffstrangs erfolgt und/oder durchgeführt wird,
   (c) Aufbringen einer Bedruckung auf dem thermoplastischen Kunststoffstrang, insbesondere Kunststoffprofilstrang oder Kunststofffilm, und/oder auf der Kantenbeschichtung,
wobei in Verfahrensschritt (c) das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei in Verfahrensschritt (c) das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrangs und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung und/oder vor Verfahrensschritt (c) die optische Ausbildung des plattenförmigen Substrats elektronisch erfasst und/oder analysiert wird und nachfolgend in Verfahrensschritt (c) die Bedruckung in Abhängigkeit von der optischen Ausbildung ausgebildet und/oder hieran angepasst wird.

Zudem kann Verfahrensschritt (b) des erfindungsgemäßen Verfahrens insbesondere auch wie folgt ausgestaltet werden:
(b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante (Schmalseite, Schmalfläche) des plattenförmigen Substrats, gegebenenfalls unter und/oder gegebenenfalls gefolgt von einer Formgebung des thermoplastischen Kunststoffstrangs, derart, dass eine Kantenbeschichtung (Schmalseitenbeschichtung, Schmalflächenbeschichtung) des plattenförmigen Substrats resultiert und/oder dass ein Verbund (Komposit) des plattenförmigen Substrats mit der hieran aufgebrachten und/oder fixierten und gegebenenfalls geformten Kantenbeschichtung resultiert.

Folglich betrifft die vorliegende Erfindung gemäß diesem Aspekt insbesondere auch das Verfahren zur Kantenbeschichtung eines plattenförmigen Substrats, vorzugsweise eines plattenförmigen Holz- und/oder Möbelteils, insbesondere Verfahren zur Anbringung einer Kantenbeschichtung auf mindestens eine Kante eines plattenförmigen Substrats, vorzugsweise eines plattenförmigen Holz- und/oder Möbelteils,
wobei das Verfahren die nachfolgen Verfahrensschritte umfasst:
   (a) Erzeugung eines hitzeklebrigen thermoplastischen Kunststoffstrangs, insbesondere Kunststoffprofilstrangs oder Kunststofffilms, vorzugsweise in Form eines Kantenbandes, bevorzugt mittels Extrusion,
   (b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante des plattenförmigen Substrats, gegebenenfalls unter und/oder gefolgt von einer Formgebung des thermoplastischen Kunststoffstrangs, derart, dass eine Kantenbeschichtung des plattenförmigen Substrats resultiert und/oder dass ein Verbund des plattenförmigen Substrats mit der hieran aufgebrachten und/oder fixierten und gegebenenfalls geformten Kantenbeschichtung resultiert.
   (c) Aufbringen einer Bedruckung auf dem thermoplastischen Kunststoffstrang, insbesondere Kunststoffprofilstrang oder Kunststofffilm, und/oder auf der Kantenbeschichtung,
wobei in Verfahrensschritt (c) das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei in Verfahrensschritt (c) das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrangs und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung und/oder vor Verfahrensschritt (c) die optische Ausbildung des plattenförmigen Substrats elektronisch erfasst und/oder analysiert wird und nachfolgend in Verfahrensschritt (c) die Bedruckung in Abhängigkeit von der optischen Ausbildung ausgebildet und/oder hieran angepasst wird.

Erfindungsgemäß kann, insbesondere in Verfahrensschritt (b), das Aufbringen und/oder Fixieren auf das plattenförmige Substrat auf die Kante (Schmalseite) des plattenförmigen Substrats, bzw. die (weitere) Formgebung mittels Düsenauftrag, vorzugsweise Schlitzdüsenauftrag, Walzenauftrag, Rakeln, Sprühen, Kalandern, Druckverfahren, insbesondere mittels Düsenauftrag bzw. -extrusion und/oder Walzenauftrag, vorzugsweise Düsenauftrag, bevorzugt Schlitzdüsenauftrag, erfolgen bzw. durchgeführt werden.

In entsprechender Weise können somit im Hinblick auf die vorgenannte Vorrichtung (B) in entsprechender Weise Düsenauftragsvorrichtungen, insbesondere Schlitzdüsenauftragsvorrichtungen, Walzenauftrags-, Rakel-, Sprüh-, Kalander- oder Druckvorrichtungen eingesetzt werden.

Die Vorrichtung (B) kann in diesem Zusammenhang auch der (weiteren) Formatierung des thermoplastischen Kunststoffstrangs dienen. Diesbezüglich kann die Vorrichtung (B) somit sozusagen als Auftrags- und/oder Fixier- und/oder Formgebungsvorrichtung ausgebildet sein. Demgegenüber kann aber auch eine separate Formgebungsvorrichtung eingesetzt werden (welche dann insbesondere stromabwärts und/oder in Prozessrichtung nachfolgend zu der Vorrichtung (B) angeordnet werden kann), insbesondere im Hinblick auf eine weitere Formgebung des thermoplastischen Kunststoffstrangs.

Wie zuvor angeführt, kann erfindungsgemäß, insbesondere in Verfahrensschritt (b), das Aufbringen bzw. Fixieren des thermoplastischen Kunststoffstrangs auf der mindestens einen Kante des plattenförmigen Substrats und/oder die Formgebung, insbesondere die weitere Formgebung, unmittelbar und/oder direkt und/oder ohne Durchführung von Zwischenschritten und/oder ohne Zwischenschichten erfolgen, d. h. dass der Kunststoffstrang bei seiner Erzeugung bzw. unmittelbar hiernach aufgebracht bzw. fixiert bzw. formatiert wird. Dies ist mit dem Vorteil verbunden, dass der thermoplastische Kunststoffstrang bereits im fließfähigen bzw. hitzeklebrigen Zustand vorliegt und nicht erneut erwärmt werden muss.

Erfindungsgemäß verhält es sich gemäß einer besonders bevorzugten Ausführungsform insbesondere derart, dass, insbesondere in Verfahrensschritt (b), das Aufbringen und/oder Fixieren des thermoplastischen Kunststoffstrangs auf der mindestens einen Kante des plattenförmigen Substrats ohne zusätzlichen Klebstoff bzw. ohne zusätzliche Klebstoffschicht erfolgt. Dies wird im Rahmen der vorliegenden Erfindung insbesondere dadurch ermöglicht, dass der thermoplastische Kunststoffstrang bzw. die diesbezügliche Kantenbeschichtung selbst als Klebstoff fungiert und somit gleichzeitig Verklebungs- und Versiegelungseigenschaften aufweist. Erfindungsgemäß erfolgt das Aufbringen bzw. das Fixieren des thermoplastischen Kunststoffstrangs somit maßgeblich bzw. ausschließlich durch die Eigenhitzeklebrigkeit bzw. Eigenheißklebrigkeit des thermoplastischen Kunststoffstrangs bzw. der hierzu eingesetzten Materialien, wobei zudem auf die Verwendung herkömmlicher Kantenbänder verzichtet werden kann.

In diesem Zusammenhang ist es erfindungsgemäß insbesondere vorgesehen, dass, insbesondere in Verfahrensschritt (b), der thermoplastische Kunststoffstrang auf der mindestens einen Kante des plattenförmigen Substrats, vorzugsweise ausschließlich infolge der und/oder durch die Eigen(hitze)klebrigkeit des thermoplastischen Kunststoffstrangs fixiert wird.

Grundsätzlich kann vor dem Auftragen bzw. Fixieren und/oder vor Erzeugung des thermoplastischen Kunststoffstrangs eine mechanische Vorbehandlung des Substrats, insbesondere der Kante des Substrats insbesondere dahingehend erfolgen, dass eine Glättung der Kantenoberfläche oder dergleichen durchgeführt wird. Beispielsweise kann beim Vorliegen einer sehr glatten Kante auch eine zielgerichtete Anrauung der Kantenoberfläche vor dem Auftragen bzw. Fixieren erfolgen.

Darüber hinaus kann es sich gemäß einer ersten Ausführungsform zum einen derart verhalten, dass das plattenförmige Substrat (z. B. wenn es aus Kunststoff besteht), insbesondere die Kante des plattenförmigen Substrats, erfindungsgemäß insbesondere vor Aufbringen und/oder Fixieren des thermoplastischen Kunststoffstrangs, mit mindestens einem Haftvermittler (Primer) ausgerüstet wird und/oder einer Vor- und/oder Oberflächenbehandlung und/oder -aktivierung, vorzugsweise mittels Corona- oder Plasmabehandlung, unterzogen wird. Hierdurch kann eine verbesserte Haftung des thermoplastischen Kunststoffstrangs auf der Kante des Substrats gewährleistet werden. Gemäß dieser Ausführungsform kann es sich insbesondere derart verhalten, dass zumindest die Kante des plattenförmigen Substrats und/oder das plattenförmige Substrat als solches aus Kunststoff gebildet ist bzw. hieraus besteht.

Demgegenüber kann es gemäß einer weiteren Ausführungsform zum anderen aber auch vorgesehen sein, dass in Verfahrensschritt (b) das Aufbringen und/oder Fixieren des thermoplastischen Kunststoffstrangs auf der mindestens einen Kante (Schmalseite) des plattenförmigen Substrats ohne Verwendung eines Haftvermittlers (Primer) und/oder ohne Vor- und/oder Oberflächenbehandlung und/oder -aktivierung des plattenförmigen Substrats, insbesondere ohne Verwendung eines Haftvermittlers für die Kante des plattenförmigen Substrats, und/oder ohne Vorbehandlung des thermoplastischen Kunststoffstrangs, insbesondere ohne Vorbehandlung der auf dem Substrat aufzubringenden Seite und/oder Fläche des thermoplastischen Kunststoffstrangs, erfolgt bzw. durchgeführt wird. Dies geht mit einer entsprechenden weiterführenden Vereinfachung des erfindungsgemäßen Verfahrens einher, insbesondere für den Fall besonders effektiver wärme- bzw. hitzeklebriger Materialien für den thermoplastischen Kunststoffstrang.

Erfindungsgemäß kann, insbesondere in Verfahrensschritt (b), das Aufbringen und/oder Fixieren des thermoplastischen Kunststoffstrangs mit einer Geschwindigkeit (Aufbring- bzw. Fixiergeschwindigkeit) im Bereich von 1 m/min bis 300 m/min, insbesondere im Bereich von 10 m/min bis 200 m/min, vorzugsweise im Bereich von 20 m/min bis 100 m/min, erfolgen. Grundsätzlich kann erfindungsgemäß eine Aufbring- bzw. Fixiergeschwindigkeit auch von mehr als 100 m/min vorliegen, beispielsweise im Bereich von mehr als 100 m/min bis 300 m/min. Die Aufbring- bzw. Fixiergeschwindigkeit kann dabei der zuvor für Verfahrensschritt (a) angeführten Erzeugungsgeschwindigkeit entsprechen bzw. hiermit synchronisiert sein, und zwar insbesondere für den Fall, dass die Erzeugung und das Aufbringen bzw. Fixieren unmittelbar aufeinander abfolgend bzw. im Rahmen einer kontinuierlichen Prozessführung durchgeführt werden.

Im Allgemeinen kann, insbesondere in Verfahrensschritt (b), der thermoplastische Kunststoffstrang in einer Menge im Bereich von 50 g/m² bis 1.500 g/m², insbesondere im Bereich von 100 g/m² bis 1.200 g/m², vorzugsweise im Bereich von 150 g/m² bis 1.000 g/m², bevorzugt im Bereich von 200 g/m² bis 800 g/m², besonders bevorzugt im Bereich von 250 g/m² bis 800 g/m², bezogen auf das Trockengewicht des thermoplastischen Kunststoffstrangs, auf der Kante (Schmalseite) des plattenförmigen Substrats aufgetragen bzw. fixiert werden. Unter Verwendung der vorgenannten Mengen kann eine ausreichend dicke Kantenbeschichtung gewährleistet werden, und dies bei gleichzeitig hoher Homogenität der ausgebildeten Kantenbeschichtung.

Erfindungsgemäß kann, insbesondere in Verfahrensschritt (b), der thermoplastische Kunststoffstrang mit einer Dicke im Bereich von 0,05 mm bis 3 mm, insbesondere im Bereich von 0,075 mm bis 2 mm, vorzugsweise im Bereich von 0,1 mm bis 1,5 mm, bevorzugt im Bereich von 0,15 mm bis 1,25 mm, besonders bevorzugt im Bereich von 0,175 mm bis 1 mm, ganz besonders bevorzugt im Bereich von 0,2 mm bis 0,9 mm, weiter bevorzugt im Bereich von 0,25 mm bis 0,8 mm, auf der mindestens einen Kante des plattenförmigen Substrats aufgetragen und/oder fixiert werden.

In diesem Zusammenhang kann der thermoplastische Kunststoffstrang bzw. die Kantenbeschichtung eine Dicke im Bereich von 0,05 mm bis 3 mm, insbesondere im Bereich von 0,075 mm bis 2 mm, vorzugsweise im Bereich von 0,1 mm bis 1,5 mm, bevorzugt im Bereich von 0,15 mm bis 1,25 mm, besonders bevorzugt im Bereich von 0,175 mm bis 1 mm, ganz besonders bevorzugt im Bereich von 0,2 mm bis 0,9 mm, weiter bevorzugt im Bereich von 0,25 mm bis 0,8 mm, aufweisen. Diesbezüglich kann es erfindungsgemäß auch vorgesehen sein, dass, insbesondere in Verfahrensschritt (a), der thermoplastische Kunststoffstrang mit den vorgenannten Dicken erzeugt wird.

Im Rahmen der vorliegenden Erfindung ist es insbesondere vorgesehen, dass, insbesondere in Verfahrensschritt (b), der auf dem plattenförmigen Substrat aufgebrachte bzw. fixierte thermoplastische Kunststoffstrang in einen nichtfließfähigen bzw. festen (verfestigten) bzw. zumindest teilweise ausgehärteten Zustand überführt wird, insbesondere durch Abkühlen, vorzugsweise durch Abkühlen auf Temperaturen unterhalb des Erweichungsbereichs bzw. Erweichungspunkts des thermoplastischen Kunststoffstrangs bzw. des Materials des thermoplastischen Kunststoffstrangs, insbesondere Kunststoffpolymers. Auf diese Weise kann die Kantenbeschichtung erhalten bzw. ausgebildet werden, insbesondere wobei die Kantenbeschichtung in einem nichtfließfähigen bzw. festen (verfestigten) bzw. zumindest teilweise ausgehärteten Zustand vorliegt. Hierdurch kann eine dauerhafte und beständige bzw. widerstandsfähige Versiegelung der Kante (Schmalseite, Schmalfläche) des Substrats bereitgestellt werden.

Somit kann es erfindungsgemäß insbesondere vorgesehen sein, dass, insbesondere in Verfahrensschritt (b), eine Abkühlung des auf dem plattenförmigen Substrat aufgebrachten und/oder fixierten thermoplastischen Kunststoffstrangs durchgeführt wird, insbesondere auf eine Temperatur unterhalb des Erweichungsbereichs und/oder Erweichungspunkts des thermoplastischen Kunststoffstrangs und/oder des Materials des thermoplastischen Kunststoffstrangs, insbesondere Kunststoffpolymers, bzw. insbesondere zur Ausbildung und/oder zum Erhalt der Kantenbeschichtung in nichtfließfähiger und/oder fester (verfestigter) und/oder zumindest teilweise ausgehärteter Form. Hierzu können entsprechende Abkühlvorrichtungen eingesetzt werden, wie beispielsweise (Kühl-)Gebläse oder dergleichen.

Die Aushärtung des aufgebrachten bzw. fixierten thermoplastischen Kunststoffstrangs bzw. der Kantenbeschichtung kann nach dessen Auftragen und/oder erfolgen Fixieren initiiert und/oder beschleunigt werden, beispielsweise durch Strahlen-, UV- und/oder Wärmeeinwirkung. Hierzu können auch entsprechende Vorrichtungen, wie UV-Lampen oder dergleichen, eingesetzt werden.

Gemäß einer ersten erfindungsgemäßen Ausführungsform ist es insbesondere vorgesehen, dass der in Verfahrensschritt (a) erzeugte hitzeklebrige (heißklebrige) thermoplastische Kunststoffstrang zumindest im Wesentlichen unmittelbar anschließend auf seine Erzeugung und/oder zumindest im Wesentlichen unmittelbar im Anschluss an Verfahrensschritt (a) in Verfahrensschritt (b) auf die Kante (Schmalseite) des plattenförmigen Substrats aufgebracht und/oder fixiert wird. Wie zuvor angeführt, können die Verfahrensschritte (a) und (b) als gemeinsamer Verfahrensschritt zusammengefasst bzw. durchgeführt werden.

**In** diesem Zusammenhang kann das Aufbringen insbesondere im formbaren und/oder fließfähigen und/oder hitzeklebrigen (heißklebrigen) Zustand des thermoplastische Kunststoffstrangs erfolgen.

Gemäß einer weiteren und zu der vorgenannten Ausführungsform alternativen Ausgestaltung des erfindungsgemäßen Verfahrens kann es jedoch auch vorgesehen sein, dass, insbesondere nach Verfahrensschritt (a), vorzugsweise zumindest im Wesentlichen unmittelbar nach Verfahrensschritt (a), und/oder insbesondere vor Verfahrensschritt (b) und/oder vor Verfahrensschritt (c), mindestens ein Zwischenschritt, insbesondere mindestens ein Zwischenschritt gemäß Verfahrensschritt (a'), durchgeführt wird.

In diesem Zusammenhang kann das erfindungsgemäße Verfahren in der Reihenfolge (Abfolge) der Verfahrensschritte (a), (a'), (b) und (c) durchgeführt werden. Demgegenüber kann das erfindungsgemäße Verfahren in diesem Zusammenhang aber auch in der Reihenfolge (Abfolge) der Verfahrensschritte (a), (a'), (c) und (b) durchgeführt werden. Jedoch ist eine Durchführung des erfindungsgemäßen Verfahrens in der Reihenfolge (Abfolge) der Verfahrensschritte (a), (a'), (b) und (c) bevorzugt.

In diesem Zusammenhang kann zu dem Zwischen- bzw. Verfahrensschritt (a') Folgendes ausgeführt werden:
So kann als Zwischenschritt, insbesondere als Zwischenschritt gemäß Verfahrensschritt (a'), ein Aufbringen und/oder Fixieren, vorzugsweise Aufbringen und ablösbares und/oder intermediäres (nicht dauerhaftes) Fixieren, des thermoplastischen Kunststoffstrangs, insbesondere Kunststoffprofilstrangs oder Kunststofffilms, auf einem Träger erfolgen.

Erfindungsgemäß kann es somit vorgesehen sein, dass der in Verfahrensschritt (a) erzeugte thermoplastische Kunststoffstrang nicht unmittelbar auf dem Substrat bzw. der diesbezüglichen Kante aufgebracht bzw. fixiert wird, sondern zunächst auf einem Träger, so dass hierauf nachfolgend ein Aufbringen bzw. Fixieren auf dem Substrat bzw. ein Bedrucken durchgeführt werden kann, also ausgehend von dem zuvor auf dem Träger aufgebrachten thermoplastischen Kunststoffstrang. Das Aufbringen auf einem Träger kann dabei beispielsweise im Hinblick auf eine diskontinuierliche Prozessführung bzw. bei Durchführung des erfindungsgemäßen Verfahrens in getrennten Verfahrensführungen bzw. in getrennten Prozessräumen erfolgen. Durch das Aufbringen des thermoplastischen Kunststoffstrangs auf dem Träger kann weiterführend eine räumliche sowie zeitlich weiterführende Trennung der Verfahrensschritte (a) einerseits und (b) bzw. (c) andererseits ermöglicht werden.

Der auf dem Träger fixierte thermoplastische Kunststoffstrang kann in diesem Zusammenhang auch (zwischen-)gelagert bzw. einer weiteren Verarbeitung innerhalb des erfindungsgemäßen Verfahrens in weitere Prozessräume verbracht werden.

Das Aufbringen bzw. Fixieren auf dem Träger kann gleichermaßen mittels Düsenauftrag, vorzugsweise Schlitzdüsenauftrag, Walzenauftrag, Rakeln, Sprühen, Kalandern, Druckverfahren, insbesondere mittels Düsenauftrag bzw. -extrusion und/oder Walzenauftrag, vorzugsweise Schlitzdüsenauftrag, erfolgen. Hierzu können auch zu Verfahrensschritt (b) entsprechende Auftrags- und Fixiervorrichtungen bzw. kombinierte Erzeugungs- und Auftrags- bzw. Fixiervorrichtungen verwendet werden.

Bei dem und/oder nach dem Aufbringen bzw. Fixieren des thermoplastischen Kunststoffstrangs auf dem Träger kann zudem eine Formgebung (synonym auch als Formatieren bzw. Formatierung bezeichnet), insbesondere eine weitere Formgebung (d. h. ausgehend von der Erzeugung des Kunststoffstrangs), des thermoplastischen Kunststoffstrangs erfolgen bzw. durchgeführt werden, beispielsweise durch entsprechende Formgebungsvorrichtungen bzw. -mittel, wie Walzen oder Rakelvorrichtungen (Rakeln) oder dergleichen.

Im Allgemeinen kann, insbesondere in Verfahrensschritt (a'), der thermoplastische Kunststoffstrang auf dem Träger mittels Entlangführen bzw. Vorbeiführen des Trägers an der entsprechenden Erzeugungs- bzw. Auftrags- bzw. Fixiervorrichtung aufgetragen bzw. fixiert werden. Zudem kann, insbesondere in Verfahrensschritt (a'), der Träger an der entsprechenden Vorrichtung mit einer gleichförmigen bzw. gradlinigen bzw. unidirektionalen Bewegung entlang- bzw. vorbeigeführt werden. Erfindungsgemäß kann es aber auch vorgesehen sein, dass der Träger fixiert und die entsprechende Vorrichtung zu Zwecken des Aufbringens bzw. Fixierens des thermoplastischen Kunststoffstrangs auf dem Träger an dem Träger insbesondere mit einer gleichförmigen bzw. gradlinigen bzw. unidirektionalen Bewegung entlang- bzw. vorbeigeführt wird.

Was den gemäß Verfahrensschritt (a') vorgesehenen Träger anbelangt, so handelt es sich hierbei im Allgemeinen um ein flächiges bzw. zweidimensionales Material. Insbesondere weist der Träger mindestens eine Fläche bzw. Seite zur Aufnahme des thermoplastischen Kunststoffstrangs auf.

Im Allgemeinen kann der Träger ein Trägermaterial, ausgewählt aus der Gruppe von vorzugsweise hitzebeständigem Papier, vorzugsweise hitzebeständiger Pappe, Metall, vorzugsweise hitzebeständigem Kunststoff, Holz sowie deren Kombinationen, aufweisen bzw. hieraus bestehen. In diesem Zusammenhang kann auch ein Aufrollen des auf dem Träger aufgebrachten bzw. fixierten und abgekühlten thermoplastischen Kunststoffstrangs, beispielsweise zur Ermöglichung einer Lagerung bzw. eines Transports, durchgeführt werden.

Erfindungsgemäß kann, insbesondere in Verfahrensschritt (a'), der thermoplastische Kunststoffstrang in einer Menge im Bereich von 50 g/m² bis 1.500 g/m², insbesondere im Bereich von 100 g/m² bis 1.200 g/m², vorzugsweise im Bereich von 150 g/m² bis 1.000 g/m², bevorzugt im Bereich von 200 g/m² bis 800 g/m², besonders bevorzugt im Bereich von 250 g/m² bis 800 g/m², bezogen auf das Trockengewicht des thermoplastischen Kunststoffstrangs und/oder auf das Material des thermoplastischen Kunststoffstrangs, auf dem Träger aufgetragen und/oder fixiert werden.

Im Allgemeinen kann, insbesondere in Verfahrensschritt (a'), der thermoplastische Kunststoffstrang mit einer Dicke im Bereich von 0,05 mm bis 3 mm, insbesondere im Bereich von 0,1 mm bis 1,75 mm, vorzugsweise im Bereich von 0,2 mm bis 1 mm, bevorzugt im Bereich von 0,3 mm bis 0,85 mm, auf dem Träger aufgetragen bzw. fixiert werden.

Zudem kann, insbesondere in Verfahrensschritt (a'), der thermoplastische Kunststoffstrang zumindest im Wesentlichen vollflächig und/oder zumindest im Wesentlichen unterbrechungsfrei und/oder zumindest im Wesentlichen homogen und/oder mit gleichmäßiger Dicke auf dem Träger aufgetragen bzw. fixiert werden.

Der thermoplastische Kunststoffstrang kann vorzugsweise mit randseitiger Beabstandung, insbesondere entlang der Längsseite des Trägers bzw. Kunststoffstrangs, auf dem Träger aufgebracht bzw. fixiert werden. Diesbezüglich resultiert insbesondere ein Trägerrandbereich, welcher nicht mit dem thermoplastischen Kunststoffstrang versehen ist. Hierdurch kann das Ablösen des Trägers für die nachfolgende Weiterverarbeitung des thermoplastischen Kunststoffstrangs erleichtert werden.

Erfindungsgemäß kann es insbesondere vorgesehen sein, dass, insbesondere in Verfahrensschritt (a'), der auf dem Träger aufgebrachte und/oder fixierte thermoplastische Kunststoffstrang in einen nichtfließfähigen und/oder festen (verfestigten) und/oder zumindest teilweise ausgehärteten Zustand überführt wird bzw. vorliegt, insbesondere durch Abkühlen, vorzugsweise durch Abkühlen auf Temperaturen unterhalb des Erweichungsbereichs und/oder Erweichungspunkts des thermoplastischen Kunststoffstrangs und/oder des Materials des thermoplastischen Kunststoffstrangs, insbesondere Kunststoffpolymers.

Diesbezüglich kann, insbesondere in Verfahrensschritt (a'), eine Abkühlung des auf dem Träger aufgebrachten und/oder fixierten thermoplastischen Kunststoffstrangs erfolgen, insbesondere auf eine Temperatur unterhalb des Erweichungsbereichs und/oder Erweichungspunkts des thermoplastischen Kunststoffstrangs und/oder des für den thermoplastischen Kunststoffstrang eingesetzten (Ausgangs-)Materials, insbesondere Kunststoffpolymers. Hierzu können entsprechende Abkühlvorrichtungen eingesetzt werden, wie beispielsweise (Kühl-)Gebläse oder dergleichen.

Im Rahmen der vorliegenden Erfindung kann der insbesondere in Verfahrensschritt (a') auf dem Träger aufgebrachte und/oder fixierte und in einen nichtfließfähigen und/oder festen (verfestigten) und/oder zumindest teilweise ausgehärteten Zustand überführte und/oder vorliegende thermoplastische Kunststoffstrang nachfolgend mit einer Bedruckung gemäß Verfahrensschritt (c) ausgerüstet bzw. versehen werden. Dies kann insbesondere auch vor Durchführung von Verfahrensschritt (b) bzw. vor dem Auftragen und Fixieren auf dem plattenförmigen Substrat erfolgen.

Diesbezüglich kann das Verfahren nach der Erfindung insbesondere in der Reihenfolge der Verfahrensschritte (a), (a') (c) und (b) durchgeführt werden. Das Bedrucken gemäß Verfahrensschritt (c) des thermoplastischen Kunststoffstrangs erfolgt dabei insbesondere im festen bzw. nicht hitzeklebrigen (nicht heißklebrigen) Zustand des auf dem Träger aufgebrachten thermoplastischen Kunststoffstrangs.

Somit kann es erfindungsgemäß vorgesehen sein, dass ein bereits bedruckter thermoplastischer Kunststoffstrang nachfolgend gemäß Verfahrensschritt (b) auf dem plattenförmigen Substrat zum Erhalt einer sozusagen bereits vorab bedruckten Kantenbeschichtung aufgebracht bzw. fixiert wird.

Demgegenüber kann es erfindungsgemäß aber auch vorgesehen sein, dass der gemäß Verfahrensschritt (a') auf dem Träger aufgebrachte thermoplastische Kunststoffstrang, insbesondere nach dessen Lagerung oder dergleichen, gemäß Verfahrensschritt (b) auf dem plattenförmigen Substrat aufgebracht und/oder fixiert wird und nachfolgend der so aufgebrachte bzw. fixierte thermoplastische Kunststoffstrang bzw. die so erhaltene Kantenbeschichtung gemäß Verfahrensschritt (c) bedruckt wird. Somit kann das Verfahren insbesondere auch in der Reihenfolge der Verfahrensschritte (a), (a'), (b) und (c) durchgeführt werden.

Erfindungsgemäß ist es insbesondere vorgesehen, dass der insbesondere in Verfahrensschritt (a') auf dem Träger aufgebrachte und/oder fixierte thermoplastische Kunststoffstrang insbesondere zu Zwecken der nachfolgenden Durchführung von Verfahrensschritt (b) von dem Träger insbesondere unter Wärmebeaufschlagung (Erwärmen) abgelöst wird und/oder erneut in einen formbaren und/oder fließfähigen und/oder hitzeklebrigen (heißklebrigen) überführt wird, insbesondere mittels Wärmebeaufschlagung (Erwärmen), insbesondere auf eine Temperatur oberhalb des Erweichungsbereichs und/oder Erweichungspunkts des thermoplastischen Kunststoffstrangs und/oder des für den thermoplastischen Kunststoffstrang eingesetzten (Ausgangs-)Materials, insbesondere Kunststoffpolymers.

Weiterhin kann der in Verfahrensschritt (a') erhaltene thermoplastische Kunststoffstrang nachfolgend gemäß Verfahrensschritt (b) auf die Kante des plattenförmigen Substrats mittels Walzenauftrag, Rakeln und/oder Kalandern, insbesondere mittels Walzenauftrag, aufgebracht bzw. fixiert werden. Wie zuvor angeführt kann der thermoplastische Kunststoffstrang dabei vor Durchführung von Verfahrensschritt (b) mittels Verfahrensschritt (c) bedruckt sein, so dass ein bereits bedruckter thermoplastischer Kunststoffstrang auf das plattenförmige Substrat bzw. dessen Kante aufgebracht bzw. fixiert werden kann. Demgegenüber kann aber auch ein unbedruckter thermoplastischer Kunststoffstrang gemäß Verfahrensschritt (b) aufgebracht bzw. fixiert werden, gefolgt von der gemäß Verfahrensschritt (c) vorgesehenen Bedruckung des auf dem plattenförmigen Substrat bzw. dessen Kante aufgebrachten thermoplastischen Kunststoffstrangs bzw. der diesbezüglichen Kantenbeschichtung.

Was das erfindungsgemäße Verfahren darüber hinaus anbelangt, so kann es weiterhin vorgesehen sein, dass der thermoplastische Kunststoffstrang auf mehreren Schichten basiert bzw. auf Basis einer Mehrzahl von Schichten aufgebaut ist. In diesem Zusammenhang kann es sich erfindungsgemäß insbesondere derart verhalten, dass, insbesondere vor Durchführung von Verfahrensschritt (c), die Verfahrensschritte (a) und (b) bzw. die Verfahrensschritte (a) und (a') wiederholt bzw. erneut durchgeführt werden derart, dass ein mehrschichtiger bzw. ein auf mehreren Schichten basierender thermoplastischer Kunststoffstrang resultiert. Diesbezüglich kann der thermoplastische Kunststoffstrang zwei, drei, vier oder mehr Schichten aufweisen bzw. hierauf basieren. Dabei wird insbesondere derart vorgegangen, dass in Verfahrensschritt (b) bzw. (a') das Aufbringen bzw. Fixieren auf dem plattenförmigen Substrat bzw. dessen Kante bzw. dem Träger insofern erfolgt, als bereits mindestens ein thermoplastischer Kunststoffstrang zwischen dem Substrat bzw. dessen Kante bzw. dem Träger und dem weiteren aufzubringenden bzw. zu fixierenden Kunststoffstrang angeordnet ist. Dabei können die thermoplastischen Kunststoffstränge bzw. die diesbezüglichen Materialschichten ineinander übergehen bzw. sozusagen miteinander verschmelzen (insbesondere so dass trotz mehrfacher Beschichtung ein sozusagen einheitlicher Kunststoffstrang bzw. eine einheitliche Kantenbeschichtung resultiert).

Erfindungsgemäß können somit aufeinander abfolgend, mehrere, insbesondere mindestens zwei, drei, vier oder mehr, Schichten des thermoplastischen bzw. hitzeklebrigen Materials zur Ausbildung des thermoplastischen Kunststoffstrangs insbesondere gemäß Verfahrensschritt (b) auf dem plattenförmigen Substrat, insbesondere auf der Kante des plattenförmigen Substrats, bzw. gemäß Verfahrensschritt (a') auf dem Träger aufgebracht bzw. fixiert werden, und zwar sozusagen in einer bzw. einem Schicht-auf-Schicht-Anordnung bzw. -Auftrag, insbesondere durch wiederholtes Durchführen der Verfahrensschritte (a) und (b) einerseits oder durch wiederholtes Durchführen der Verfahrensschritte (a) und (a'), insbesondere mit anschließender Durchführung von Verfahrensschritt (b), andererseits.

Der auf mehreren Schichten basierende Aufbau kann durch wiederholtes Vorbeiführen des Substrats an den entsprechenden Erzeugungs- bzw. Auftrags- bzw. Fixiervorrichtungen erhalten werden.

Was das erfindungsgemäße Verfahren weiterhin anbelangt, so kann, insbesondere in Verfahrensschritt (b) und/oder in Verfahrensschritt (a'), vorzugsweise in Verfahrensschritt (b), eine Oberflächenbehandlung, insbesondere Oberflächenglättung und/oder Oberflächenhomogenisierung, des insbesondere in einem nichtfließfähigen und/oder festen (verfestigten) und/oder zumindest teilweise ausgehärteten Zustand vorliegenden Kunststoffstrangs und/oder der Kantenbeschichtung, vorzugsweise der dem Substrat und/oder dem Träger abgewandten Seite und/oder Fläche und/oder der Kantenbereiche des thermoplastischen Kunststoffstrangs und/oder der Kantenbeschichtung, erfolgen bzw. durchgeführt werden.

In diesem Zusammenhang kann die Oberflächenbearbeitung, insbesondere Oberflächenglättung, in nichtbeschränkender Weise beispielsweise mittels Fräsen, Schleifen, vorzugsweise Kalibrierschleifen, Schneiden, Glätten und/oder Polieren erfolgen. Zudem sollte die Oberflächenbehandlung vor Durchführung von Verfahrensschritt (c) durchgeführt werden. Beispielsweise kann die Oberflächenbearbeitung bzw. -glättung unter Verwendung einer Glätt- und/oder Schleifwalze oder dergleichen erfolgen. Die Oberflächenbearbeitung, insbesondere Oberflächenglättung, kann gegebenenfalls wiederholt werden, bis die gewünschte Oberflächeneigenschaft bzw. -glattheit erreicht ist. Erfindungsgemäß kann zudem eine Bearbeitung mindestens einer Kante des Kunststoffstrangs und/oder der Kantenbeschichtung erfolgen, beispielsweise in Form einer Kantenglättung und/oder Kantenabrundung. Die Kantenbearbeitung kann vor oder nach Durchführung von Verfahrensschritt (c), vorzugsweise vor Durchführung von Verfahrensschritt (c), erfolgen. Die Oberflächen- bzw. Kantenbearbeitung kann insbesondere an dem abgekühlten bzw. im nichtfließfähigen bzw. festen (verfestigten) bzw. zumindest teilweise ausgehärten thermoplastischen Kunststoffstrang bzw. der diesbezüglichen Kantenbeschichtung vorgenommen werden.

Darüber hinaus kann zu Verfahrensschritt (c) insbesondere auch Folgendes angeführt werden:
So kann erfindungsgemäß, insbesondere in Verfahrensschritt (c), das Aufbringen der Bedruckung auf der dem plattenförmigen Substrat oder dem Träger abgewandten Seite des thermoplastischen Kunststoffstrangs und/oder der Kantenbeschichtung erfolgen bzw. durchgeführt werden.

Die Bedruckung gemäß Verfahrensschritt (c) erfolgt insbesondere in einem festen (verfestigten) und/oder nicht heißklebrigem und/oder zumindest teilweise ausgehärtetem Zustand des thermoplastischen Kunststoffstrangs bzw. der Kantenbeschichtung. Der thermoplastische Kunststoffstrang bzw. die Kantenbeschichtung liegt somit bei der Bedruckung im festen (verfestigten) und/oder nicht heißklebrigem und/oder zumindest teilweise ausgehärtetem Zustand vor.

Insbesondere kann, insbesondere in Verfahrensschritt (c), das Aufbringen der Bedruckung mittels mindestens einer Druck- und/oder Farbauftragsvorrichtung (C) erfolgen. In diesem Zusammenhang kann das Substrat mit dem thermoplastischen Kunststoffstrang und/oder der Kantenbeschichtung an der Druck- und/oder Farbauftragsvorrichtung (C) vorzugsweise mit einer gleichförmigen und/oder geradlinigen und/oder unidirektionalen Bewegung entlang- und/oder vorbeigeführt werden. Die Druck- bzw. Farbauftragsvorrichtung (C) kann mindestens eine Druck- und/oder Farbauftragseinrichtung, insbesondere eine Mehrzahl an Druck- und/oder Farbauftragseinrichtungen, aufweisen. Diesbezüglich kann im Fall der Verwendung eines Mehrfarbsystems eine jeweilige Druck- bzw. Auftragseinrichtung zum Auftragen einer jeweiligen bzw. einzelnen Farbe herangezogen werden.

Erfindungsgemäß erfolgt in Verfahrensschritt (c) das Aufbringen der Bedruckung punktförmig und/oder rasterförmig.

Im Hinblick auf das erfindungsgemäße Verfahren kann, insbesondere in Verfahrensschritt (c), das Aufbringen der Bedruckung mittels Farbstrahldruck (Tintenstrahldruck) bzw. Laserdruck, insbesondere Farbstrahldruck (Tintenstrahldruck), erfolgen. Gemäß einer erfindungsgemäß besonders bevorzugten Ausführungsform erfolgt die Bedruckung in Verfahrensschritt (c) somit mittels Tintenstrahldruck.

Erfindungsgemäß ist es dabei insbesondere vorgesehen, dass, insbesondere in Verfahrensschritt (c), das Aufbringen der Bedruckung ohne Verwendung statischer bzw. unveränderbarer Druckformen erfolgt.

Durch die Verwendung der Tintenstrahldruck- bzw. Laserdrucktechnik, vorzugsweise Tintenstrahldrucktechnik, kann erfindungsgemäß sozusagen im Rahmen einer dynamischen Druckbilderzeugung eine Vielzahl an verschiedenen (Druck-)Motiven realisiert werden, welche zudem in hohem Maße anpassbar (beispielsweise das Dekordesign der Flachseite des Substrats) und diesbezüglich auch individualisierbar sind.

Erfindungsgemäß erfolgt das Aufbringen der Bedruckung insbesondere unter Verwendung mindestens einer vorzugsweise mittels Farbstrahldruck (Tintenstrahldruck) und/oder Laserdruck, insbesondere Farbstrahldruck (Tintenstrahldruck), applizierbaren Druckfarbe. Erfindungsgemäß wird dabei insbesondere eine UV-härtbare bzw. UV-trockenbare Druckfarbe eingesetzt. Hierdurch kann eine dauerhafte und widerstandsfähige Bedruckung gewährleistet werden. Zudem können geringe Schichtdicken hinsichtlich der Bedruckung eingestellt werden. Derartige Farben weisen zudem eine hohe Haftung gegenüber dem Substrat, in Form des thermoplastischen Kunststoffstrangs bzw. der Kantenbeschichtung auf. Die vorgenannten Farben gewährleisten zudem im Zusammenhang mit der eingesetzten Drucktechnik vorzugsweise in Form von Tintenstrahldruck eine hohe Individualität und Anpassbarkeit der aufgebrachten Druckbilder bzw. -motive.

Erfindungsgemäß kann es in diesem Zusammenhang insbesondere vorgesehen sein, dass die Druckfarbe nach deren Aufbringen und/oder Auftrag auf dem thermoplastischen Kunststoffstrang bzw. der Kantenbeschichtung getrocknet und/oder UV-gehärtet (UV-getrocknet) wird, insbesondere mittels mindestens einer Trocknungs- bzw. UV-Härtungsvorrichtung.

Erfindungsgemäß ist es vorgesehen, dass die Bedruckung unter Verwendung eines sogenannten Mehrfarbensystems durchgeführt wird. Erfindungsgemäß erfolgt in Verfahrensschritt (c) das Aufbringen der Bedruckung somit im Mehrfarbendruck bzw. unter Verwendung einer Mehrzahl an insbesondere farblich voneinander verschiedenen Druckfarben, insbesondere wie zuvor definiert.

Erfindungsgemäß ist es dabei vorgesehen, dass die Druckfarben punkt- bzw. rasterförmig auf dem thermoplastischen Kunststoffstrang und/oder der Kantenbeschichtung aufgebracht bzw. angeordnet werden. Was die resultierende Farbgebung bzw. Farbmischung der Bedruckung anbelangt, so wird diese durch Übereinander- bzw. Nebeneinanderanordnung der Druckfarben hervorgerufen. Hierdurch kann eine Vielzahl an Farben bei hoher Individualisierung der Druckmotive wiedergegeben werden, und dies bei relativ geringem Aufwand der Bedruckung.

Erfindungsgemäß kann es insbesondere vorgesehen sein, dass die jeweiligen Druckfarben aufeinander abfolgend bzw. nacheinander auf dem thermoplastischen Kunststoffstrang und/oder auf der Kantenbeschichtung aufgebracht werden, wobei die Farbgebung (Farbmischung) durch Übereinander- und/oder Nebeneinanderanordnung der Druckfarben auf dem thermoplastischen Kunststoffstrang bzw. auf der Kantenbeschichtung hervorgerufen wird.

Erfindungsgemäß kann es dabei insbesondere vorgesehen sein, dass eine jeweilige Druckfarbe insbesondere unmittelbar nach deren Aufbringen bzw. vor dem Aufbringen einer nachfolgend aufzubringenden und/oder aufzutragenden Druckfarbe getrocknet bzw. UV-gehärtet (UV-getrocknet) wird. Diesbezüglich können entsprechende Trocknungsvorrichtungen bzw. -einrichtungen eingesetzt werden, welche einer jeweiligen Druck- bzw. Farbauftragseinrichtung nachgeschaltet sein können, wie nachfolgend noch angeführt.

Gemäß einer erfindungsgemäßen Ausführungsform kann es insbesondere vorgesehen sein, dass, insbesondere in Verfahrensschritt (c), das Aufbringen der Bedruckung unter Verwendung eines subtraktiven (Druck-)Farbsystems, insbesondere CMYK-(Druck-)Farbsystems, erfolgt (wobei C für cyan, M für magenta, Y für yellow (gelb) und K key (schwarz) steht. Das erfindungsgemäß in bevorzugter Weise einsetzbare CMYK-Farbsystem basiert somit auf vier Komponenten, welche als bilderzeugende Komponenten bzw. zur Ausbildung einer Vielzahl an Farben eingesetzt werden können.

Im Rahmen der vorliegenden Erfindung kann insbesondere derart vorgegangen werden, dass, insbesondere in Verfahrensschritt (c), der thermoplastische Kunststoffstrang bzw. die Kantenbeschichtung vor dem Aufbringen der Druckfarbe(n), insbesondere auf der dem Substrat abgewandten Seite, zunächst insbesondere mit einer Grundierung und/oder Grundschicht versehen wird, insbesondere auf Basis und/oder unter Verwendung mindestens einer (Ab-) Deckfarbe. Dabei sollte die Grundierung und/oder Grundschicht zumindest im Wesentlichen vollflächig und/oder zumindest im Wesentlichen unterbrechungsfrei auf dem thermoplastischen Kunststoffstrang und/oder die Kantenbeschichtung aufgebracht werden. In diesem Zusammenhang kann die (Ab-)Deckfarbe insbesondere mittels Farbstrahldruck (Tintenstrahldruck) und/oder Laserdruck, insbesondere Farbstrahldruck (Tintenstrahldruck), aufgebracht werden. Folglich kann das Auftragen bzw. Aufbringen insbesondere mittels Tintenstrahldruck erfolgen. Zudem kann die (Ab-)Deckfarbe UV-härtbar bzw. UV-trockenbar ausgebildet sein. Was die (Ab-)Deckfarbe weiterhin anbelangt, so kann diese insbesondere zunächst im Wesentlichen unmittelbar nach deren Aufbringen bzw. vor Aufbringen der nachfolgend aufzubringenden und/oder aufzutragenden Druckfarbe(n) getrocknet und/oder UV-gehärtet bzw. UV-getrocknet werden.

Grundsätzlich kann es sich bei der (Ab-)Deckfarbe um eine Farbe desselben Typs wie die erfindungsgemäß eingesetzte(n) Druckfarbe(n) handeln. Grundsätzlich kann auch ein Aufsprühen oder dergleichen der (Ab-)Deckfarbe in Betracht kommen.

Als Deckfarbe wird insbesondere eine weiße (Ab-)Deckfarbe eingesetzt.

Die Grundierung bzw. Grundschicht unter Verwendung der (Ab-)Deckfarbe dient insbesondere der optischen Egalisierung des zugrundeliegenden Materials in Form des thermoplastischen Kunststoffstrangs bzw. der diesbezüglichen Kantenbeschichtung, so dass hierdurch auch die optische Qualität der Bedruckung insgesamt verbessert wird. Zudem kann auch die Haftung der Druckfarbe(n) verbessert werden.

Hinsichtlich der erfindungsgemäß eingesetzten Mehrfarbendrucktechnik und der diesbezüglich eingesetzten Druckfarben bzw. Farbsyteme kann weiterführend auch auf die ISO 2846-1:2017 verwiesen werden.

Weiterhin kann es erfindungsgemäß auch vorgesehen sein, dass, insbesondere in Verfahrensschritt (c), der thermoplastische Kunststoffstrang bzw. die Kantenbeschichtung, nach dem Aufbringen der Druckfarbe(n), vorzugsweise nach dem Auftragen der (Ab-)Deckfarbe und der Druckfarbe(n), insbesondere auf der dem Substrat abgewandten Seite, mit einer vorzugsweise transparenten und/oder durchsichtigen Abschluss- bzw. Versiegelungsschicht ausgerüstet wird, bzw. dass insbesondere als letzte Schicht eine entsprechende Abschluss- bzw. Versiegelungsschicht auf dem thermoplastischen Kunststoffstrang bzw. die Kantenbeschichtung aufgebracht wird. In diesem Zusammenhang kann insbesondere mindestens ein (Klar-)Lack eingesetzt bzw. verwendet werden.

In diesem Zusammenhang kann der (Klar-)Lack zumindest im Wesentlichen vollflächig bzw. zumindest im Wesentlichen unterbrechungsfrei auf den thermoplastischen Kunststoffstrang und/oder die Kantenbeschichtung aufgebracht werden.

Zudem kann der (Klar-)Lack in diesem Zusammenhang insbesondere unmittelbar nach dessen Aufbringen getrocknet und/oder UV-gehärtet bzw. UV-getrocknet werden.

Der (Klar-)Lack kann gleichermaßen insbesondere mittels Farbstrahldruck bzw. Tintenstrahldruck oder Laserdruck, vorzugsweise mittels Tintenstrahldruck aufgebracht werden. Grundsätzlich kommt auch ein Aufsprühen oder dergleichen in Betracht, auch wenn dies weniger bevorzugt ist.

Die Abschluss- bzw. Versiegelungsschicht kann erfindungsgemäß grundsätzlich matt oder glänzend und/oder strukturgebend ausgebildet werden, wobei die diesbezüglichen Eigenschaften beispielsweise über eine UV-Einwirkung insbesondere im Rahmen der Trocknung gesteuert werden kann. Die Abschluss- bzw. Versiegelungsschicht kann erfindungsgemäß grundsätzlich auch strukturgebend (strukturiert) ausgebildet werden. In diesem Zusammenhang kann insbesondere ein strukturgebender (Klar-)Lackauftrag erfolgen, beispielsweise mittels intermittierenden (Klar-)Lackauftrags oder dergleichen. Hierbei können die jeweils aufgetragenen (Klar-)Lackschichten insbesondere unmittelbar nach deren jeweiligem Aufbringen getrocknet und/oder UV-gehärtet bzw. UV-getrocknet werden. Erfindungsgemäß kann der (Klar-)Lack insbesondere unmittelbar nach dessen Aufbringen getrocknet und/oder UV-gehärtet (UV-getrocknet) werden, wie zuvor angeführt.

Die Abschluss- bzw. Versiegelungsschicht dient insbesondere der weiteren Versiegelung und dem Schutz der darunter angeordneten Bedruckung, wobei auch die optischen Eigenschaften entsprechend beeinflusst werden können. Zudem kann die Abschluss- bzw. Versiegelungsschicht insbesondere auch zur Beschichtung bzw. Versiegelung des Kantenbereichs der Schmalseite bzw. Schmalfläche des Substrats bzw. des Übergangsbereichs zwischen Schmalseite mit der aufgebrachten Beschichtung und Flachseite des Substrats dienen. Die Abschluss- bzw. Versiegelungsschicht bzw. der hierzu eingesetzte (Klar-)Lack kann gleichermaßen über eine entsprechende Druck- bzw. Farbauftragseinrichtung aufgebracht werden, wobei dieser eine Trocknungseinrichtung, insbesondere UV-Trocknungseinrichtung, nachgeschaltet sein kann.

Erfindungsgemäß kann, insbesondere in Verfahrensschritt (c), das Aufbringen der Bedruckung zumindest im Wesentlichen entlang der gesamten Länge des thermoplastischen Kunststoffstrangs bzw. der Kantenbeschichtung und/oder zumindest im Wesentlichen randlos auf dem Kunststoffstrang und/oder der Kantenbeschichtung und/oder zumindest im Wesentlichen über gesamte Höhe des thermoplastischen Kunststoffstrangs bzw. der Kantenbeschichtung erfolgen.

Zudem wird in Verfahrensschritt (c) das Aufbringen der Bedruckung elektronisch bzw. computerbasiert, insbesondere computergesteuert, mittels Digitaldruck (synonym auch als Digidruck bzw. *direct digital printing* bzw. *computer-to-print* bezeichnet), gesteuert und/oder durchgeführt. Diesbezüglich ist das im Rahmen der Bedruckung zu erstellende Druckbild elektronisch basiert, insbesondere datei- bzw. datenstrombasiert, ausgebildet. Somit kann das zu erstellende Druckbild bzw. Motiv auf den Kunststoffstrang bzw. die Kantenbeschichtung aus einer elektronischen Datei bzw. Datenstrom von einem Computer in die entsprechenden Druckvorrichtungen übertragen werden. Auf dieser Basis ist eine individuelle Ausgestaltung bzw. Anpassbarkeit des zu erstellenden Druckmotivs möglich, und zwar auch auf Basis bzw. ausgehend von einer individuell elektronischen Druckbildbearbeitung oder dergleichen.

Nachfolgend wird im Einzelnen zu dem im Rahmen des erfindungsgemäßen Verfahrens einsetzbaren Substrat Stellung genommen, und zwar auch im Hinblick auf diesbezüglich weiterführende Verfahrensaspekte:
Erfindungsgemäß kann bzw. können als plattenförmiges Substrat Holz, Holzersatzstoffe, Kunststoffe, Glas oder Metalle, vorzugsweise Holz oder Holzersatzstoffe, eingesetzt werden. Insbesondere kann als plattenförmiges Substrat auch ein Holzersatzstoff auf Basis von Kunststoffen oder dergleichen eingesetzt werden. Diesbezüglich können auch entsprechende Materialkombinationen eingesetzt werden, wie Holz/Kunststoff-Kombinationen oder dergleichen.

Unter dem Begriff der Holzersatzstoffe werden im Rahmen der vorliegenden Erfindung insbesondere Holzfaserwerkstoffe verstanden. Üblicherweise handelt es sich bei Holzfaserwerkstoffen um solche Werkstoffe, welche Holzfasern als Bestandteil enthalten, wie beispielsweise Spanplatten, MDF-Platten (*Medium-Density-Fiber-Boards* bzw. mitteldichte Faserplatten), OSB-Platten (*Oriented Strand-Boards* bzw. Grobspanplatten) oder WPC-Platten (*Wood*-*Plastic-Compounds-Boards).* Wie zuvor angeführt, kann als plattenförmiges Substrat auch ein Holzersatzstoff auf Basis von Kunststoffen eingesetzt werden. Erfindungsgemäß können als plattenförmiges Substrat auch Leichtbauplatten oder dergleichen eingesetzt werden.

Was das plattenförmige Substrat zudem anbelangt, so kann es erfindungsgemäß insbesondere vorgesehen sein, dass dieses auf mindestens einer seiner Flachseiten mit einer Beschichtung, insbesondere Folienbeschichtung und/oder Dekorbeschichtung, insbesondere auf Kunststoffbasis, ausgerüstet ist. Dabei verhält es sich erfindungsgemäß insbesondere derart, dass die Beschichtung bereits vor Durchführung von Verfahrensschritt (a) und/oder (b) auf dem Substrat aufgebracht bzw. fixiert worden ist.

Im Allgemeinen kann die Kante (Schmalseite, Schmalfläche) des plattenförmigen Substrats eine Höhe im Bereich von 1 mm bis 200 mm, insbesondere im Bereich von 5 mm bis 150 mm, vorzugsweise im Bereich von 10 mm bis 100 mm, bevorzugt im Bereich von 15 mm bis 50 mm, aufweisen. Im Allgemeinen entspricht bzw. korrespondiert die Höhe der Kante der Dicke des zugrundeliegenden plattenförmigen Substrats bzw. der Plattendicke. Zudem kann das plattenförmige Substrat eine Länge im Bereich von 1 cm bis 2.500 cm, insbesondere im Bereich von 10 cm bis 1.000 cm, vorzugsweise im Bereich von 30 cm bis 900 cm, bevorzugt im Bereich von 50 cm bis 800 cm, aufweisen.

Insbesondere kann der thermoplastische Kunststoffstrang, insbesondere der Kunststoffprofilstrang oder der Kunststofffilm, hierzu entsprechende Höhen (Breiten) und/oder Längen aufweisen. Erfindungsgemäß kann der thermoplastische Kunststoffstrang, insbesondere der Kunststoffprofilstrang oder der Kunststofffilm, eine Höhe im Bereich von 1 mm bis 200 mm, insbesondere im Bereich von 5 mm bis 150 mm, vorzugsweise im Bereich von 10 mm bis 100 mm, bevorzugt im Bereich von 15 mm bis 50 mm, aufweisen. Zudem kann der thermoplastische Kunststoffstrang, insbesondere der Kunststoffprofilstrang oder der Kunststofffilm, eine Länge im Bereich von 1 cm bis 2.500 cm, insbesondere im Bereich von 10 cm bis 1.000 cm, vorzugsweise im Bereich von 30 cm bis 900 cm, bevorzugt im Bereich von 50 cm bis 800 cm, aufweisen.

Was in diesem Zusammenhang die gemäß Verfahrensschritt (c) vorgesehene Bedruckung anbelangt, so verhält es sich erfindungsgemäß wie folgt: Zunächst werden die Ausmaße, insbesondere die Länge und/oder die Höhe, der mit der Kantenbeschichtung und/oder der Bedruckung auszurüstenden Fläche des plattenförmigen Substrats, vorzugsweise der Kante (Schmalseite, Schmalfläche) des plattenförmigen Substrats und/oder des Trägers elektronisch und/oder computerbasiert erfasst und nachfolgend die Erzeugung des thermoplastischen Kunststoffstrangs, insbesondere gemäß Verfahrensschritt (a), und/oder das Aufbringen und/oder Fixieren des thermoplastischen Kunststoffstrangs, insbesondere gemäß Verfahrensschritt (b) und/oder gemäß Verfahrensschritt (a'), und/oder das Aufbringen der Bedruckung, insbesondere gemäß Verfahrensschritt (c), an die ermittelten Ausmaße bzw. Werte, insbesondere unabhängig voneinander, angepasst und/oder in Abhängigkeit von den ermittelten Ausmaßen bzw. Werten, insbesondere unabhängig voneinander, bevorzugt elektronisch und/oder computerbasiert gesteuert.

Erfindungsgemäß ist es weiterhin vorgesehen, dass zunächst vor dem Aufbringen der Bedruckung und/oder vor Verfahrensschritt (c), vorzugsweise zu Verfahrensbeginn, die optische Ausbildung, insbesondere das Dekor, des plattenförmigen Substrats, vorzugsweise der Flachseite des plattenförmigen Substrats, elektronisch erfasst und/oder analysiert wird und nachfolgend in Verfahrensschritt (c) die Bedruckung in Abhängigkeit von der optischen Ausbildung, insbesondere dem Dekor, ausgebildet und/oder hieran angepasst wird. Dies kann insbesondere auch computergesteuert im Rahmen einer automatisierten Verfahrensführung bzw. eines diesbezüglichen Prozesses erfolgen. Im Rahmen der vorliegenden Erfindung kann das auf den thermoplastischen Kunststoffstrang bzw. die Kantenbeschichtung der Schmalseite aufzubringende Design exakt an das Design insbesondere der Flachseite des zugrundeliegenden plattenförmigen Substrats insbesondere orts- bzw. punktgenau angepasst werden. Dies führt zu einem optisch besonders hochfertigen Gesamtprodukt. Insbesondere kann das Design des zugrundeliegenden Substrats gescannt werden und die Bedruckung exakt hieran angepasst werden, und zwar insbesondere mittels elektronischer Datenerfassung, -verarbeitung und -weitergabe, insbesondere in Form einer Druckdatei bzw. eines diesbezüglichen Datenstroms zur Steuerung der Druck- bzw. Farbauftragsvorrichtung (c).

Auf diese Weise kann beispielsweise eine hohe optische Homogenität bzw. Kompatibilität der Kantenbeschichtung zu der Flachseiten bzw. Flachfläche des Substrats erhalten werden.

Im Allgemeinen kann in Verfahrensschritt (c), das Aufbringen der Bedruckung mit einer Geschwindigkeit (Druckgeschwindigkeit) im Bereich von 1 m/min bis 300 m/min, insbesondere im Bereich von 10 m/min bis 200 m/min, vorzugsweise im Bereich von 20 m/min bis 100 m/min, erfolgen. Grundsätzlich kann erfindungsgemäß eine Druckgeschwindigkeit auch von mehr als 100 m/min vorliegen, beispielsweise im Bereich von 100 m/min bis 300 m/min. Die Druckgeschwindigkeit kann zudem gemäß einer erfindungsgemäßen Ausführungsform insbesondere im Bereich von 75 m/min bis 150 m/min liegen. Die Druckgeschwindigkeit kann dabei insbesondere auch mit der zuvor angeführten Erzeugungsgeschwindigkeit und/oder der Aufbring- bzw. Fixiergeschwindigkeit synchronisiert sein bzw. diesen entsprechen, und zwar insbesondere für den Fall einer kontinuierlichen Prozessführung bzw. bei Verfahrensführung in einer gemeinsamen Verfahrensstrecke bzw. Systemlinie bzw. in einem gemeinsamen Verfahrensraum. Insbesondere kann die Druckgeschwindigkeit der Erzeugungsgeschwindigkeit und/oder der Auftrags- bzw. Fixiergeschwindigkeit entsprechen.

Im Rahmen der vorliegenden Erfindung ist es insbesondere vorgesehen, dass die Kantenbeschichtung des plattenförmigen Substrats ausschließlich durch den thermoplastische Kunststoffstrang gebildet wird bzw. dass außer dem thermoplastischen Kunststoffstrang keine weitere Kantenbeschichtung, insbesondere kein weiteres Kantenband, insbesondere kein konventionelles Kantenband, vorzugsweise kein mittels eines Klebstoffs anzubringendes und/oder zu fixierendes Kantenband, auf dem plattenförmigen Substrat aufgebracht und/oder fixiert wird.

Insbesondere kann es sich erfindungsgemäß derart verhalten, dass das nach dem Verfahren erhältliche und/oder erhaltene Substrat, insbesondere an seiner verfahrensgemäß beschichteten Kante, außer dem thermoplastischen Kunststoffstrang keine weitere Kantenbeschichtung, insbesondere kein weiteres Kantenband, insbesondere kein konventionelles Kantenband, vorzugsweise kein mittels eines Klebstoffs anzubringendes und/oder zu fixierendes Kantenband, aufweist. Erfindungsgemäß verhält es sich somit insbesondere derart, dass das erfindungsgemäß beschichtete Substrat kein mittels eines Klebstoffs aufzubringendes bzw. zu fixierendes Kantenband aufweist, beispielsweise auf Basis von PVC, ABS, PP, PMMA, PET, Melamin, Holz bzw. Aluminium.

Erfindungsgemäß verhält es sich somit sozusagen derart, dass der auf das Substrat bzw. dessen Kante aufgebrachte thermoplastische Kunststoffstrang bzw. die Kantenbeschichtung selbst als Kantenband fungiert, und zwar ohne dass weitere, insbesondere konventionelle Kantenbänder, erforderlich sind.

Nachfolgend wird nun weiterführend und in Ergänzung zu den obigen Ausführungen zu dem thermoplastischen Kunststoffstrang bzw. zu dem Material des thermoplastischen Kunststoffstrangs, insbesondere im Hinblick auf die diesbezüglich einsetzbaren Kunststoffpolymere, Stellung genommen:
Erfindungsgemäß kann es insbesondere vorgesehen sein, dass der thermoplastische Kunststoffstrang und/oder das Material des thermoplastischen Kunststoffstrangs mindestens ein Kunststoffpolymer, insbesondere Klebstoffpolymer, vorzugsweise hitzeklebriges (heißklebriges) thermoplastisches Kunststoffpolymer, bevorzugt hitzeklebriges (heißklebriges) Klebstoffpolymer, umfasst oder hieraus besteht.

In diesem Zusammenhang kann das Kunststoffpolymer ausgewählt werden aus nicht-reaktiven und reaktiven Systemen, insbesondere nicht-reaktiven und reaktiven Klebstoffen.

Weiterhin kann in diesem Zusammenhang das Kunststoffpolymer ausgewählt werden aus Homopolymeren und Copolymeren sowie deren Mischungen und Kombinationen.

Zudem kann in diesem Zusammenhang das Kunststoffpolymer ausgewählt werden aus der Gruppe von Polyolefinen, Polyamiden, Polyacrylaten, Polyestern, insbesondere Polylactid, Polyurethanen, Ethylen-Vinylacetat-Copolymeren, Ethylen-Acrylat-Copolymeren sowie deren Mischungen und Kombinationen.

Gemäß einer erfindungsgemäßen Ausführungsform kann das Kunststoffpolymer einen Schmelzklebstoff (Schmelzklebstoffpolymer), insbesondere thermoplastischen Schmelzklebstoff, umfassen bzw. hieraus bestehen.

Erfindungsgemäß kann es insbesondere vorgesehen sein, dass der thermoplastische Kunststoffstrang bzw. das Material des thermoplastischen Kunststoffstrangs mindestens einen Schmelzklebstoff (Schmelzklebstoffpolymer), insbesondere thermoplastischen Schmelzklebstoff, vorzugsweise reaktiven oder nichtreaktiven Schmelzklebstoff, umfasst bzw. hieraus besteht. In diesem Zusammenhang kann der Schmelzklebstoff ein thermoplastischer und/oder einkomponentiger oder zweikomponentiger Schmelzklebstoff, sein. Beispielsweise kann der Schmelzklebstoff ein reaktiver einkomponentiger oder reaktiver zweikomponentiger Schmelzklebstoff, insbesondere thermoplastischer Schmelzklebstoff, sein.

Insbesondere kann es erfindungsgemäß vorgesehen sein, dass der thermoplastische Kunststoffstrang und/oder das Material des thermoplastischen Kunststoffstrangs das Kunststoffpolymer, insbesondere Klebstoffpolymer, vorzugsweise hitzeklebriges (heißklebriges) thermoplastisches Kunststoffpolymer, bevorzugt hitzeklebriges (heißklebriges) Klebstoffpolymer in einer Menge im Bereich von 1 Gew.-% bis 100 Gew.-%, insbesondere im Bereich von 5 Gew.-% bis 100 Gew.-%, bevorzugt im Bereich von 7,5 Gew.-% bis 100 Gew.-%, besonders bevorzugt im Bereich von 10 Gew.-% bis 100 Gew.-%, bezogen auf den thermoplastischen Kunststoffstrang und/oder das Material des thermoplastischen Kunststoffstrangs, umfasst.

In diesem Zusammenhang kann der thermoplastische Kunststoffstrang und/oder das Material des thermoplastischen Kunststoffstrangs den Schmelzklebstoff, insbesondere thermoplastischen Schmelzklebstoff, in einer Menge im Bereich von 1 Gew.-% bis 100 Gew.-%, insbesondere im Bereich von 5 Gew.-% bis 100 Gew.-%, bevorzugt im Bereich von 7,5 Gew.-% bis 100 Gew.-%, besonders bevorzugt im Bereich von 10 Gew.-% bis 100 Gew.-%, bezogen auf den thermoplastischen Kunststoffstrang und/oder das Material des thermoplastischen Kunststoffstrangs, umfassen.

Gemäß einer erfindungsgemäßen Ausführungsform kann der Schmelzklebstoff ein reaktiver Schmelzklebstoff sein. In diesem Zusammenhang kann es erfindungsgemäß gleichermaßen vorgesehen sein, dass der reaktive Schmelzklebstoff ein feuchtigkeitsvernetzender, wärmevernetzender und/oder strahlenvernetzender Schmelzklebstoff, insbesondere ein feuchtigkeitsvernetzender Schmelzklebstoff, ist.

Insbesondere kann der reaktive Schmelzklebstoff chemisch reaktive Gruppen aufweisen, insbesondere wobei die chemisch reaktiven Gruppen ausgewählt sind aus Isocyanatgruppen, Silangruppen, Epoxidgruppen, Urethangruppen und reaktiven Doppel- oder Mehrfachbindungen (insbesondere C-C-Doppel- oder Mehrfachbindungen) sowie deren Kombinationen, vorzugsweise Isocyanatgruppen und Silangruppen, und/oder insbesondere wobei die chemisch reaktiven Gruppen endständig sind.

Erfindungsgemäß kann es zudem vorgesehen sein, dass der reaktive Schmelzklebstoff ausgewählt ist aus der Gruppe von (i) reaktiven, insbesondere feuchtigkeitsvernetzenden Polyurethanen (PUR), vorzugsweise isocyanatgruppenfunktionalisierten und/oder isocyanatgruppenhaltigen Polyurethanen, bevorzugt isocyanatterminierten Polyurethanen; (ii) reaktiven, insbesondere feuchtigkeitsvernetzenden Polyolefinen (POR), vorzugsweise silangruppenfunktionalisierten und/oder silangruppenhaltigen Polyolefinen, bevorzugt silangruppengepfropften Polyolefinen; (iii) reaktiven, insbesondere strahlenvernetzenden, vorzugsweise UV-vernetzenden Poly(meth)acrylaten, vorzugsweise urethangruppenfunktionalisierten und/oder urethangruppenhaltigen Poly(meth)acrylaten; sowie deren Kombinationen, besonders bevorzugt aus der Gruppe von (i) reaktiven, insbesondere feuchtigkeitsvernetzenden Polyurethanen (PUR), vorzugsweise isocyanatgruppenfunktionalisierten und/oder isocyanatgruppenhaltigen Polyurethanen, bevorzugt isocyanatterminierten Polyurethanen, sowie deren Kombinationen.

Darüber hinaus kann der Schmelzklebstoff ein nichtreaktiver Schmelzklebstoff, insbesondere ein thermoplastischer nichtreaktiver Schmelzklebstoff, sein.

In diesem Zusammenhang kann der nichtreaktiver Schmelzklebstoff ausgewählt sein aus der Gruppe von (i) Ethylenvinylacetaten (EVA-Polymeren); (ii) (Meth-) Acrylaten; (iii) Polyolefinen (PO), insbesondere Polyethylenen (PE), Polypropylenen (PP) und ataktischen Polyolefinen (APAO); (iv) Polyurethanen (PU); (v) Polyamiden (PA); (vi) Polyestern (PES); (vii) Ethylen-Acrylaten; und deren Kombinationen, besonders bevorzugt aus der Gruppe von (i) Ethylenvinylacetaten (EVA-Polymeren); (ii) (Meth-)Acrylaten; (iii) Polyolefinen (PO); sowie deren Kombinationen.

Erfindungsgemäß kann es insbesondere vorgesehen sein, dass der thermoplastische Kunststoffstrang und/oder das Material des thermoplastischen Kunststoffstrangs außerdem mindestens einen weiteren Inhaltsstoff enthält, vorzugsweise ausgewählt aus der Gruppe von Antioxidaten, Katalysatoren, Harzen, Wachsen, Füllstoffen, Netzmitteln, Rheologiemodifikatoren, Stabilisatoren, Flammschutzmittel, Farbstoffen, Gleitmitteln, Weichmachern sowie deren Mischungen. Hierdurch können die Eigenschaften des thermoplastischen Kunststoffstrangs beispielsweise im Hinblick auf dessen Rheologie bzw. dessen Eigenschaften im festen bzw. ausgehärtetem Zustand oder dergleichen, weiterführend eingestellt bzw. maßgeschneidert werden.

Erfindungsgemäß kann es grundsätzlich und gemäß einer ersten Ausführungsform vorgesehen sein, dass der der thermoplastische Kunststoffstrang und/oder das Material des thermoplastischen Kunststoffstrangs mindestens einen anorganischen und/oder organischen Füllstoff enthält. Diesbezüglich kann der Füllstoff beispielsweise ausgewählt sein aus der Gruppe von anorganischen Oxiden, Silikaten, Carbonaten, Sulfaten, Hydroxiden sowie deren Mischungen und Kombinationen, vorzugsweise aus der Gruppe von Aluminiumoxiden, Siliciumdioxid, Bariumsulfat, Calciumcarbonat, Alkali- und Erdalkalioxiden, Titanoxiden, Eisenoxiden sowie deren Mischungen und Kombinationen. Zudem kann der thermoplastische Kunststoffstrang bzw. das Material des thermoplastischen Kunststoffstrangs den Füllstoff in einer Menge von höchstens 20 Gew.-%, insbesondere von höchstens 10 Gew.-%, bevorzugt von höchstens 5 Gew.-%, besonders bevorzugt von höchstens 2 Gew.-%, ganz besonders bevorzugt von höchstens 1 Gew.-%, bezogen auf den thermoplastische Kunststoffstrang und/oder das Material des thermoplastischen Kunststoffstrangs, enthalten.

Im Allgemeinen kann der Füllstoff eine mittlere Teilchengröße, insbesondere einen mittleren Teilchendurchmesser, vorzugsweise einen mittleren Teilchendurchmesser D₅₀, im Bereich von 3 µm bis 20 µm, bevorzugt im Bereich von 3,5 µm bis 15 µm, besonders bevorzugt im Bereich von 4 µm bis 10 µm, ganz besonders bevorzugt im Bereich von 5 µm bis 10 µm, aufweisen. Diesbezüglich können von dem Fachmann an sich bekannte Verfahren zur Bestimmung der Teilchengröße eingesetzt werden, wie beispielsweise Verfahren bzw. Bestimmungsmethoden auf Basis von Lichtstreuung bzw. Laserdiffraktometrie, Röntgenbeugung oder mikroskopische Verfahren oder dergleichen.

Gemäß einer weiteren und erfindungsgemäß besonders bevorzugten Ausführungsform kann es jedoch auch vorgesehen sein, dass der thermoplastische Kunststoffstrang bzw. das Material des thermoplastischen Kunststoffstrangs zumindest im Wesentlichen keinen Füllstoff, insbesondere zumindest im Wesentlichen keinen anorganischen Füllstoff, enthält und/oder wobei der thermoplastische Kunststoffstrang und/oder das Material des thermoplastischen Kunststoffstrangs frei von Füllstoffen, insbesondere frei von anorganischen Füllstoff, ist.

Insbesondere ist es im Rahmen der vorliegenden Erfindung gelungen, auf den Einsatz von Füllstoffen in Bezug auf den thermoplastischen Kunststoffstrang bzw. das diesbezüglich zugrundeliegende Material verzichten zu können. Hierdurch resultieren auch verarbeitungsspezifische Vorteile, beispielsweise was die Verhinderung des Verstopfens von im Rahmen der Erzeugung bzw. des Aufbringens bzw. des Fixierens eingesetzten Düsenvorrichtungen oder dergleichen anbelangt. Zudem geht der Verzicht von Füllstoffen auch mit verbesserten Materialeigenschaften insgesamt einher.

Im Allgemeinen kann der thermoplastische Kunststoffstrang bzw. das Material des thermoplastischen Kunststoffstrangs, insbesondere das Kunststoffpolymer und/oder der Schmelzklebstoff, durch mindestens eine der folgenden Eigenschaften gekennzeichnet bzw. charakterisiert sein:
- eine Verarbeitungstemperatur im Bereich von 60 °C bis 300 °C, insbesondere im Bereich von 70 °C bis 280 °C, bevorzugt im Bereich von 80 °C bis 250 °C; und/oder
- einen Erweichungsbereich und/oder eine Erweichungstemperatur im Bereich von 30 °C bis 200 °C, insbesondere im Bereich von 40 °C bis 180 °C, bevorzugt im Bereich von 50 °C bis 150 °C, insbesondere bestimmt gemäß DIN EN ISO 306:2014 (wobei die Bestimmung alternativ auch mit einer Kofler-Heizbank vorgenommen werden kann);
   (die Erweichungstemperatur definiert dabei insbesondere die Temperatur, bei welcher sich thermoplastische Materialien bleibend verformen lassen, wobei diesbezüglich auch entsprechende Erweichungsbereiche vorliegen können);
   und/oder
- eine Shore-Härte, insbesondere eine Shore-Härte A, insbesondere bestimmt bei 20 °C, im Bereich von 20 bis 100, insbesondere im Bereich von 25 bis 95, bevorzugt im Bereich von 30 bis 90, insbesondere bestimmt gemäß DIN EN ISO 868:2003;
   (die Shore-Härte charakterisiert dabei insbesondere das Verformungsverhalten eines Materials. Zur Messung der Shore-Härte, insbesondere der Shore-Härte A, kann insbesondere derart vorgegangen werden, dass ein 1 kg Prüfgewicht für 15 Sekunden auf den Werkstoff gedrückt wird, wobei das Prüfgewicht eine flache Spitze mit einem Durchmesser von 0,79 mm und einen Öffnungswinkel von 35° aufweist; die Eindringtiefe wird auf einer Skala von 0 bis 100 Shore gemessen, wobei eine Eindringtiefe von 2,5 mm einem Shore-Wert von 0 entspricht und eine Eindringtiefe von 0 mm einem Shore-Wert von 100; die Shore-Härte bezieht sich dabei insbesondere auf den festen bzw. nicht fließfähigen bzw. zumindest teilweise ausgehärteten Zustand des thermoplastischen Kunststoffstrangs bzw. der resultierenden Kantenbeschichtung; insbesondere kann die Eindruckhärte mittels Durometer bestimmt werden);
   und/oder
- eine Glasübergangstemperatur Tg im Bereich von - 50 °C bis 0 °C, insbesondere im Bereich von - 40 °C bis - 5 °C, bevorzugt im Bereich von - 25 °C bis -10 °C, insbesondere bestimmt gemäß DIN EN ISO 11357-2:2020;
   (die Glasübergangstemperatur kann insbesondere mittels *Differential Scanning Calorimetry* (DSC) gemessen werden, wobei die DSC eine thermoanalytische Analyse ist, bei welcher die Differenz der Wärmemenge, die zum Erhöhen der Temperatur einer Probe und einer Referenz erforderlich ist, als Funktion der Temperatur gemessen wird);
   und/oder
- einen Schmelzflussindex im Bereich von 1 g pro 10 min bis 200 g pro 10 min, insbesondere im Bereich von 5 g pro 10 min bis 150 g pro 10 min, bevorzugt im Bereich von 10 g pro 10 min bis 100 g pro 10 min, insbesondere bestimmt gemäß DIN EN ISO 1133-1:2012;
   (der Schmelzflussindex charakterisiert das Fließverhalten von Thermoplasten unter bestimmten Druck- und Temperaturbedingungen, wobei in diesem Zusammenhang die Schmelz-Massefließrate und die Schmelz-Volumenfließrate ermittelt werden können; der Schmelzflussindex ist ein Maß für die Viskosität der entsprechenden Schmelze; der Schmelzflussindex wird insbesondere mittels eines Kapillarrheometers gemessen; das Material wird in einem Zylinder aufgeschmolzen und bei definierter Temperatur mit einem definierten Druck (Auflagelast) durch eine definierte Kapillare (Düse) gedrückt; dabei wird das austretende Volumen bzw. die austretende Masse abhängig von der Zeit (typischerweise pro 10 min) ermittelt);
   und/oder
- eine Dichte, insbesondere bestimmt bei 20 °C, im Bereich von 0,7 bis 2 g/cm³, insbesondere im Bereich von 0,8 bis 1,9 g/cm³, bevorzugt im Bereich von 0,85 bis 1,8 g/cm³, insbesondere bestimmt gemäß DIN EN ISO 2811-1:2016; und/oder
- eine Viskosität, insbesondere bestimmt im Bereich von 120 °C bis 200 °C, im Bereich von 2.000 bis 200.000 mPas, insbesondere im Bereich von 2.200 bis 190.000 mPas, bevorzugt im Bereich von 2.500 bis 180.000 mPas, insbesondere bestimmt gemäß DIN EN ISO 2555:2018;
   (die Viskosität ist insbesondere ein Maß der Zähflüssigkeit und kann im Rahmen der vorliegenden Erfindung insbesondere mit einem Rotationsviskosimeter mittels der sogenannten Brookfield-Methode gemessen werden; dabei wird die Viskosität mittels der Auslenkung eines Torsionselements bestimmt; dazu wird eine Spindel in die Probe getaucht und mit vorgegebener Drehzahl rotiert, wobei die Kraft gemessen wird, die notwendig ist, um die Drehzahl konstant zu halten; in diesem Zusammenhang ist die Kraft ein Maß für die dynamische Viskosität);
   und/oder
- eine offene Wartezeit, insbesondere bestimmt bei einer Temperatur im Bereich von 170 °C bis 200 °C und bei einer Filmdicke im Bereich von 90 bis 200 µm, im Bereich von 1 bis 20 Sekunden, insbesondere im Bereich von 1 bis 15 Sekunden, bevorzugt im Bereich von 1 bis 12 Sekunden;
   (die offene Wartezeit bestimmt insbesondere die Zeit zwischen Auftrag und Verklebung bzw. Zusammenfügen der Klebeteile; diese Zeit ist variabel und abhängig von der Rezeptur, dem Material der zu verklebenden Teile und den Temperaturverhältnissen der Umgebung und Teile; die offene Wartezeit kann insbesondere gemäß der DIN EN 923 bestimmt werden);
      und/oder
   eine Reaktionszeit, insbesondere im Fall reaktiver Materialien des thermoplastischen Kunststoffstrangs, insbesondere reaktiver Kunststoffpolymere und/oder reaktiver Schmelzklebstoffe, im Bereich von 0,1 bis 20 Tagen, insbesondere im Bereich von 0,5 bis 18 Tagen, bevorzugt im Bereich von 1 bis 17 Tagen, insbesondere bestimmt mittels Infrarotspektroskopie, insbesondere ATR-Infrarotspektroskopie (*Attenuated Total Reflection bzw. abgeschwächte Totalreflexion);*
   (die Reaktionszeit ist eine spezielle Eigenschaft insbesondere von Reaktivklebstoffen, wobei sie die Zeit bestimmt, welche benötigt wird, um den Klebstoff (chemisch) auszuhärten).

Erfindungsgemäß kann der Kunststoffstrang bzw. die Kantenbeschichtung, insbesondere das Kunststoffpolymer und/oder der Schmelzklebstoff, im nichtfließfähigen bzw. festen (verfestigten) und/oder zumindest teilweise ausgehärteten Zustand, zudem durch mindestens eine der folgenden Eigenschaften gekennzeichnet bzw. charakterisiert sein:
- eine Schälfestigkeit (90°- Peel-Test bzw. T-Schälprüfung) im Bereich von 10 bis 200 N/cm, insbesondere im Bereich von 30 bis 175 N/cm, bevorzugt im Bereich von 50 bis 150 N/cm, insbesondere bestimmt gemäß DIN EN 1464:2010;
   (der 90°-Schälhaftungstest wird insbesondere verwendet, um die erforderliche Kraft zu bestimmen, um zwei durch einen Klebstoff verbundene Komponenten zu lösen. Beim 90°-Schälhaftungstest wird ein konstanter 90°-Winkel eingehalten, während die beiden verklebten Komponenten auseinandergezogen werden; gemessen wird die Kraft, die benötigt wird, um die verklebten Komponenten voneinander zu lösen);
   und/oder
- eine Scherfestigkeit (Scher-Wert) im Bereich von 1 N/mm² bis 40 N/mm², insbesondere im Bereich von 2 N/mm² bis 35 N/mm², bevorzugt im Bereich von 5 N/mm² bis 30 N/mm², insbesondere bestimmt gemäß DIN EN 1465:2009;
   (die Scherfestigkeit (Scher-Wert) ist die Fähigkeit eines Materials, Kräften zu widerstehen, die dazu führen können, dass die innere Struktur des Materials gegen sich selbst rutscht, wobei Klebstoffe typischerweise zu einer hohen Scherfestigkeit neigen; die Scherfestigkeit ist der Widerstand, den ein Festkörper tangentialen Scherkräften entgegensetzt; sie ist also die Belastung, die ein Objekt in einer Richtung parallel zur Oberfläche des Materials im Gegensatz zu einer Richtung senkrecht zur Oberfläche standhalten kann);
   und/oder
- einen Verlustbereich (Tangens Delta bzw. tan δ), insbesondere bestimmt bei einer Temperatur im Bereich von -20 °C bis 150 °C und bei einer Frequenz von 1 Hz, im Bereich von 0,01 bis 100, insbesondere im Bereich von 0,05 bis 90, bevorzugt im Bereich von 0,1 bis 80;
   (der Verlustbereich gibt insbesondere das Verhältnis zwischen dem Verlustmodul und dem Speichermodul an; je höher der Verlustfaktor, desto mehr nähert sich das Verhalten einer Probe einer ideal-viskosen Flüssigkeit mit newtonschem Fließverhalten an bzw. desto mehr entspricht das Verhalten einer Probe demjenigen eines ideal-elastischen Festkörpers; im Allgemeinen weist ein ideal elastischer Körper diesbezüglich einen Wert von 0 und ein ideal viskoser Körper einen diesbezüglich unendlichen Wert auf;
   und/oder
- ein Speichermodul (G'), bestimmt bei einer Temperatur von 25 °C, im Bereich von 1·10⁵ Pa bis 1·10⁹ Pa, insbesondere im Bereich von 1·10⁵ Pa bis 1·10⁸ Pa, vorzugsweise im Bereich von 1·10⁶ Pa bis 1·10⁸ Pa, insbesondere bestimmt gemäß DIN EN ISO 6721-1:2019; und/oder
- ein Speichermodul (G'), bestimmt bei einer Temperatur von 150 °C, im Bereich von 1 Pa bis 1·10³ Pa, insbesondere im Bereich von 10 Pa bis 1·10³ Pa, vorzugsweise im Bereich von 10 Pa bis 1·10² Pa, insbesondere bestimmt gemäß DIN EN ISO 6721-1:2019; und/oder
- ein Verlustmodul (G"), bestimmt bei einer Temperatur von 25 °C, im Bereich von 1·10³ Pa bis 1·10⁹ Pa, insbesondere im Bereich von 1·10⁴ Pa bis 1·10⁸ Pa, vorzugsweise im Bereich von 1·10⁵ Pa bis 1·10⁸ Pa, insbesondere bestimmt gemäß DIN EN ISO 6721-1:2019; und/oder
- ein Verlustmodul (G"), bestimmt bei einer Temperatur von 150 °C, im Bereich von 1 Pa bis 1·10⁴ Pa, insbesondere im Bereich von 10 Pa bis 1·10⁴ Pa, vorzugsweise im Bereich von 10 Pa bis 1·10³ Pa, insbesondere bestimmt gemäß DIN EN ISO 6721-1:2019; und/oder
- ein Elastizitätsmodul (Spannung-Dehnung), bestimmt bei einer Temperatur von 25 °C, im Bereich von 1 N/mm² bis 5.000 N/mm², insbesondere im Bereich von 100 N/mm² bis 4.000 N/mm², vorzugsweise im Bereich von 1.000 N/mm² bis 2.500 N/mm², insbesondere bestimmt gemäß DIN EN ISO 527-1:2019 und/oder DIN EN ISO 527-2:2012. Besonders hohe Elastizitätsmodule können erfindungsgemäß insbesondere bei Verwendung von Kunststoffpolymeren in Form von Polyestern erreicht werden, insbesondere im Bereich von 1.000 N/mm² bis 5.00 N/mm².

Weiterhin kann es sich erfindungsgemäß insbesondere derart verhalten, dass der Verbund (Komposit) durch mindestens eine der folgenden Eigenschaften gekennzeichnet ist:
- eine Wasserbeständigkeit im Bereich von 3 bis 5, insbesondere im Bereich von 4 bis 5, insbesondere bestimmt gemäß Ikea TM 0002;
   (die Wasserbeständigkeit wird in Abhängigkeit von der visuell erfassbaren bzw. sichtbaren Ausprägung der durch Wasser auftretenden Quellung insbesondere im Kantenbereich bzw. Verbindungsbereich (Fuge) zwischen Substrat bzw. Schmalkante des Substrats und der hieran aufgebrachten bzw. fixierten Kantenbeschichtung mit einer Einstufung (Rating) von 1 bis 5 bewertet, wobei sich der Wert 5 auf die diesbezüglich besten Eigenschaften bezieht (d.h. insbesondere keine Quellung bzw. eine Quellung von weniger als 0,05 mm);
   und/oder
- eine Hitzebeständigkeit im Bereich von 3 bis 5, insbesondere im Bereich von 4 bis 5 insbesondere bestimmt gemäß Ikea TM 0002;
   (die Hitzebeständigkeit wird in Abhängigkeit von der visuell erfassbaren bzw. sichtbaren Ausprägung der durch Hitzeeinwirkung auftretenden Veränderungen insbesondere im Kantenbereich bzw. Verbindungsbereich (Fuge) zwischen Substrat bzw. Schmalkante des Substrats und der hieran aufgebrachten bzw. fixierten Kantenbeschichtung mit einer Einstufung (Rating) von 1 bis 5 bewertet, wobei sich der Wert 5 auf die diesbezüglich besten Eigenschaften bezieht (d.h. insbesondere keine durch Hitzeeinwirkung hervorgerufenen Veränderungen);
   und/oder
- eine Feuchtklimabeständigkeit, insbesondere bestimmt gemäß AMK Modul 2 Merkblatt 005, April 2015, zumindest im Wesentlichen ohne visuell erfassbare und/oder sichtbare Veränderung des Verbunds und/oder der Kantenbeschichtung;
   (die Feuchtklimabeständigkeit bezieht sich auf die visuell erfassbaren bzw. sichtbaren Veränderungen insbesondere im Kantenbereich bzw. Verbindungsbereich (Fuge) zwischen Substrat bzw. Schmalkante des Substrats und der hieran aufgebrachten bzw. fixierten Kantenbeschichtung, wobei erfindungsgemäß, wie zuvor angeführt, unter den vorliegenden Testbedingungen zumindest im Wesentlichen keine Veränderung des Verbunds und/oder der Kantenbeschichtung vorliegt);
   und/oder
- eine Wechselklimabeständigkeit, insbesondere bestimmt gemäß AMK Modul 3 Merkblatt 005, April 2015, zumindest im Wesentlichen ohne visuell erfassbare und/oder sichtbare Veränderung des Verbunds und/oder der Kantenbeschichtung
   (die Wechselklimabeständigkeit bezieht sich auf die visuell erfassbaren bzw. sichtbaren Veränderungen insbesondere im Kantenbereich bzw. Verbindungsbereich (Fuge) zwischen Substrat bzw. Schmalkante des Substrats und der hieran aufgebrachten bzw. fixierten Kantenbeschichtung, wobei erfindungsgemäß, wie zuvor angeführt, unter den vorliegenden Testbedingungen zumindest im Wesentlichen keine Veränderung des Verbunds und/oder der Kantenbeschichtung vorliegt);
   und/oder
- eine Wasserdampfbeaufschlagung, insbesondere bestimmt gemäß AMK Modul 1 Merkblatt 005, April 2015, zumindest im Wesentlichen ohne visuell erfassbare und/oder sichtbare Veränderung des Verbunds und/oder der Kantenbeschichtung;
   (die Wasserdampfbeaufschlagung bezieht sich auf die visuell erfassbaren bzw. sichtbaren Veränderungen insbesondere im Kantenbereich bzw. Verbindungsbereich (Fuge) zwischen Substrat bzw. Schmalkante des Substrats und der hieran aufgebrachten bzw. fixierten Kantenbeschichtung, wobei erfindungsgemäß, wie zuvor angeführt, unter den vorliegenden Testbedingungen zumindest im Wesentlichen keine Veränderung des Verbunds und/oder der Kantenbeschichtung vorliegt);
   und/oder
- eine UV-Beständigkeit gemäß Graumaßstab im Bereich von 3 bis 5, insbesondere im Bereich von 4 bis 5, bevorzugt 5, und/oder gemäß Blaumaßstab (Wollmaßstab) im Bereich von 6 bis 8, insbesondere im Bereich von 7 bis 8, bevorzugt 8, insbesondere bestimmt gemäß DIN EN ISO 4892-2:2013 und/oder gemäß DIN EN 15187:2006;
   (für die UV-Beständigkeit verhält es sich insbesondere derart, dass nach Belichtung eine Einteilung nach Graumaßstab sowie Blaumaßstab (Wollmaßstab) vorgenommen werden kann; je höher der ermittelte Wert ist, desto weniger Farbänderungen sind erkennbar; die Einstufung 5 gemäß Graumaßstab ist die höchste Bewertung und bedeutet keine erkennbare Farbänderung; der Blaumaßstab gibt die Möglichkeit, die Beständigkeit in Jahre auszudrücken, wobei der Wert 8 (Höchstwert) 1,5 Jahre entspricht).

Was das erfindungsgemäße Verfahren weiterhin anbelangt, so kann es sich erfindungsgemäß insbesondere derart verhalten, dass das plattenförmige Substrat zur Erzeugung und/oder Aufbringen und/oder Fixieren des thermoplastischen Kunststoffstrangs, insbesondere gemäß Verfahrensschritt (a) und/oder (b), zunächst an der Erzeugungsvorrichtung (A) und/oder an der Auftrags- und/oder Fixiervorrichtung (B), insbesondere an der kombinierten Erzeugungs- und Auftrags- bzw. Fixiervorrichtung, und anschließend zum Aufbringen der Bedruckung auf dem thermoplastischen Kunststoffstrangs und/oder der Kantenbeschichtung, insbesondere gemäß Verfahrensschritt (c), an der Druck- und/oder Farbauftragsvorrichtung (C) entlang- und/oder vorbeigeführt wird.

In diesem Zusammenhang kann es erfindungsgemäß gemäß einer ersten Ausführungsform zum einen vorgesehen sein, dass die Vorrichtungen (A, B, C) in einer gemeinsamen Verfahrensstrecke bzw. Systemlinie und/oder in einem gemeinsamen Verfahrensraum (Prozessraum) angeordnet sind. Zum anderen kann es sich erfindungsgemäß aber auch vorgesehen sein, dass die Vorrichtungen (A, B, C), insbesondere die Erzeugungsvorrichtung (A) und/oder die Auftrags- und/oder Fixiervorrichtung (B), vorzugsweise die kombinierte Erzeugungs- und Auftrags- bzw. Fixiervorrichtung, einerseits und die Druck- und/oder Farbauftragsvorrichtung (C) andererseits, in voneinander getrennten Verfahrensstrecken bzw. Systemlinien und/oder in voneinander getrennten Verfahrensräumen (Prozessräumen) angeordnet sind.

Gemäß einer weiteren Ausführungsform der vorliegenden Erfindung kann es aber auch vorgesehen sein, dass der Träger, insbesondere gemäß Verfahrensschritt (a) und/oder (a'), zunächst an der Erzeugungsvorrichtung (A) und/oder an einer Trägerauftrags- und/oder Fixiervorrichtung, insbesondere an einer kombinierten Erzeugungs- und Trägerauftrags- bzw. Fixiervorrichtung, entlang- und/oder vorbeigeführt wird und der erzeugte thermoplastische Kunststoffstrang auf dem Träger aufgebracht und/oder fixiert wird und nachfolgend zum Aufbringen der Bedruckung auf dem thermoplastischen Kunststoffstrang, insbesondere gemäß Verfahrensschritt (c), an der Druck- und/oder Farbauftragsvorrichtung (C) entlang- und/oder vorbeigeführt wird, wobei anschließend der Träger entfernt wird und das plattenförmige Substrat zum Aufbringen und/oder Fixieren des thermoplastischen Kunststoffstrangs auf dem Substrat, insbesondere gemäß Verfahrensschritt (b), an der Auftrags- und/oder Fixiervorrichtung (B) entlang- und/oder vorbeigeführt wird.

Was die vorgenannten zwei Ausführungsformen anbelangt, so kann es sich grundsätzlich aber auch derart verhalten, dass das Substrat sozusagen fixiert wird und die entsprechenden Vorrichtungen entlang des Substrats, insbesondere entlang der Kante des Substrats entlang- und/oder vorbeigeführt werden.

Erfindungsgemäß können die Vorrichtungen (A, B, C) in einer gemeinsamen Verfahrensstrecke bzw. Systemlinie und/oder in einem gemeinsamen Verfahrensraum (Prozessraum) angeordnet sein. Demgegenüber können die Vorrichtungen (A, B, C), insbesondere die Erzeugungsvorrichtung (A) und die Druck- und/oder Farbauftragsvorrichtung (C) einerseits und die Auftrags- und/oder Fixiervorrichtung (B) andererseits oder aber insbesondere die Erzeugungsvorrichtung (A) einerseits und die Druck- und/oder Farbauftragsvorrichtung (C) und die Auftrags- und/oder Fixiervorrichtung (B) andererseits in voneinander getrennten Verfahrensstrecken bzw. Systemlinien und/oder in voneinander getrennten Verfahrensräumen (Prozessräumen) angeordnet sein.

Für weitere diesbezügliche Ausführungen zu dem erfindungsgemäßen Verfahren gemäß diesem Aspekt kann auch auf die Ausführungen zu den weiteren erfindungsgemäßen Aspekten verwiesen werden, welche vorliegend entsprechend gelten.

Weiterer Gegenstand der vorliegenden Erfindung - gemäß einem **zweiten** Aspekt der vorliegenden Erfindung - ist zudem ein System zur Durchführung eines zuvor beschriebenen Verfahrens zur Kantenbeschichtung eines plattenförmigen Substrats,
wobei das System die nachfolgenden Komponenten und/oder Vorrichtungen aufweist:
   (A) mindestens eine Erzeugungsvorrichtung (A) zur Erzeugung eines hitzeklebrigen thermoplastischen Kunststoffstrangs, insbesondere Kunststoffprofilstrangs oder Kunststofffilms, vorzugsweise in Form eines Kantenbandes, zur Durchführung von Verfahrensschritt (a);
   (B) mindestens eine Auftrags- und/oder Fixiervorrichtung (B) zum Aufbringen und/oder Fixieren des thermoplastischen Kunststoffstrangs, insbesondere Kunststoffprofilstrangs oder Kunststofffilms, auf mindestens einer Kante des plattenförmigen Substrats derart, dass eine Kantenbeschichtung des plattenförmigen Substrats resultiert und/oder dass ein Verbund des plattenförmigen Substrats mit der hieran aufgebrachten und/oder fixierten Kantenbeschichtung resultiert, zur Durchführung von Verfahrensschritt (b);
   (C) mindestens eine Druck- und/oder Farbauftragsvorrichtung (C) zum Aufbringen einer Bedruckung auf dem thermoplastischen Kunststoffstrang, insbesondere Kunststoffprofilstrang oder Kunststofffilm, und/oder auf der Kantenbeschichtung zur Durchführung von Verfahrensschritt (c)
wobei das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrang und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung die optische Ausbildung des plattenförmigen Substrats elektronisch erfasst und/oder analysiert wird und nachfolgend die Bedruckung in Abhängigkeit von der optischen Ausbildung ausgebildet und/oder hieran angepasst wird.

Erfindungsgemäß können die Erzeugungsvorrichtung (A) und die Auftrags- und/oder Fixiervorrichtung (B) als kombinierte Erzeugungs- und Auftrags- bzw. Fixiervorrichtung zusammengefasst bzw. ausgebildet sein, wie auch zuvor angeführt. Erfindungsgemäß kann die Auftrags- und/oder Fixiervorrichtung (B) als Auftrags- und/oder Fixier- und/oder Formgebungsvorrichtung ausgebildet sein. Zudem kann die kombinierte Erzeugungs- und Auftrags- bzw. Fixiervorrichtung als kombinierte Erzeugungs- und Auftrags- und Fixier- und Formgebungsvorrichtung ausgebildet sein.

Gemäß einer ersten erfindungsgemäßen Ausführungsform kann es vorgesehen sein, dass die Erzeugungsvorrichtung (A), die Auftrags- und/oder Fixiervorrichtung (B), insbesondere die kombinierte Erzeugungs- und Auftrags- bzw. Fixiervorrichtung, und die Druck- und/oder Farbauftragsvorrichtung (C) in Prozessrichtung in der zuvor spezifizierten Reihenfolge stromabwärts und/oder in Prozessrichtung vorzugsweise unmittelbar hintereinander und/oder nacheinander geschaltet und/oder angeordnet sind.

Gemäß einer weiteren erfindungsgemäßen Ausführungsform kann es aber auch vorgesehen sein, dass die Erzeugungsvorrichtung (A), die Druck- und/oder Farbauftragsvorrichtung (C) und die Auftrags- und/oder Fixiervorrichtung (B) in Prozessrichtung in der zuvor spezifizierten Reihenfolge stromabwärts und/oder in Prozessrichtung vorzugsweise unmittelbar hintereinander und/oder nacheinander geschaltet und/oder angeordnet sind. Eine derartige Anordnung der Vorrichtungen liegt insbesondere für den Fall vor, dass der thermoplastische Kunststoffstrang im Rahmen eines Zwischenschritts auf einen Träger aufgebracht wird (vgl. auch obige Ausführungen zu Verfahrensschritt (a')).

Erfindungsgemäß kann es im Allgemeinen vorgesehen sein, dass die Erzeugungsvorrichtung (A), die Auftrags- und/oder Fixiervorrichtung (B), insbesondere die kombinierte Erzeugungs- und Auftrags- bzw. Fixiervorrichtung, und die Druck- und/oder Farbauftragsvorrichtung (C) in einer gemeinsamen Verfahrensstrecke bzw. Systemlinie und/oder in einem gemeinsamen Verfahrensraum (Prozessraum) angeordnet sind oder aber dass die Erzeugungsvorrichtung (A), die Auftrags- und/oder Fixiervorrichtung (B), insbesondere die kombinierte Erzeugungs- und Auftrags- bzw. Fixiervorrichtung (AB), und die Druck- und/oder Farbauftragsvorrichtung (C) insbesondere zumindest teilweise in voneinander verschiedenen und/oder voneinander getrennten Verfahrensstrecken bzw. Systemlinien und/oder in voneinander verschiedenen und/oder voneinander getrennten Verfahrensräumen (Prozessräumen) angeordnet sind.

Erfindungsgemäß kann es auch vorgesehen sein, dass die Erzeugungsvorrichtung (A) und die Auftrags- und/oder Fixiervorrichtung (B) einerseits und die Druck- und/oder Farbauftragsvorrichtung (C) andererseits jeweils in voneinander getrennten Verfahrensstrecken bzw. Systemlinien und/oder in voneinander getrennten Verfahrensräumen (Prozessräumen) angeordnet sind oder aber dass die Erzeugungsvorrichtung (A) und die Druck- und/oder Farbauftragsvorrichtung (C) einerseits und die Auftrags- und/oder Fixiervorrichtung (B) andererseits jeweils in voneinander getrennten Verfahrensstrecken bzw. Systemlinien und/oder in voneinander getrennten Verfahrensräumen (Prozessräumen) angeordnet sind.

Erfindungsgemäß kann es vorgesehen sein, dass die Druck- und/oder Farbauftragsvorrichtung (C) mindestens eine Druck- und/oder Farbauftragseinrichtung, insbesondere eine Mehrzahl an Druck- und/oder Farbauftragseinrichtungen, aufweist. Diesbezüglich können die Druck- und/oder Farbauftragseinrichtungen zueinander in Prozessrichtung stromabwärts und/oder in Prozessrichtung hintereinander und/oder nacheinander geschaltet bzw. angeordnet sein.

Zudem kann es erfindungsgemäß vorgesehen sein, dass die Druck- und/oder Farbauftragsvorrichtung (C) mindestens eine Trocknungseinrichtung, insbesondere eine Mehrzahl an Trocknungseinrichtungen, aufweist, insbesondere zur Trocknung und/oder Härtung, insbesondere UV-Härtung, einer jeweils zuvor aufgebrachten Druckfarbe. In diesem Zusammenhang kann es zudem vorgesehen sein, dass die jeweilige Trocknungseinrichtung in Prozessrichtung stromabwärts zu einer jeweiligen Druck- und/oder Farbauftragseinrichtung angeordnet bzw. in Prozessrichtung hierzu nachgeschaltet ist.

Zudem verhält es sich im Rahmen der vorliegenden Erfindung insbesondere auch derart, dass die Druck- und/oder Farbauftragsvorrichtung (C) mindestens eine Lackauftragseinrichtung aufweist, insbesondere zum Auftragen einer vorzugsweise transparenten und/oder durchsichtigen Abschluss- und/oder Versiegelungsschicht, insbesondere auf Basis und/oder unter Verwendung mindestens eines (Klar-) Lacks. Diesbezüglich kann die Lackauftragseinrichtung in Prozessrichtung stromabwärts zu den Druck- und/oder Farbauftragseinrichtungen angeordnet und/oder in Prozessrichtung hierzu nachgeschaltet sein. Gleichermaßen kann es erfindungsgemäß vorgesehen sein, dass in Prozessrichtung stromabwärts bzw. in Prozessrichtung nachgeschaltet zu der Lackauftragseinrichtung mindestens eine (weitere) Trocknungseinrichtung angeordnet ist, insbesondere zur Trocknung und/oder Härtung und/oder Einstellung des Glanzes und/oder der Mattheit des aufgetragenen (Klar-)Lacks und/oder zur Erzeugung einer strukturierten Lackoberfläche und/oder Strukturlackoberfläche.

Zudem kann es erfindungsgemäß vorgesehen sein, dass das System mindestens eine Oberflächen-Bearbeitungsvorrichtung aufweist, insbesondere zur Bearbeitung, vorzugsweise Glättung, der Oberfläche des thermoplastischen Kunststoffstrangs und/oder der Kantenbeschichtung, insbesondere wobei die Oberflächen-Bearbeitungsvorrichtung als Glättungs-, Schleif-, Fräs-, Kalibrier-, Schneid- und/oder Poliervorrichtung ausgebildet ist und/oder insbesondere wobei die Oberflächen-Bearbeitungsvorrichtung in Prozessrichtung stromaufwärts zu der Druck- und/oder Farbauftragsvorrichtung (C) angeordnet und/oder in Prozessrichtung hierzu vorgeschaltet bzw. vorgelagert ist.

Die Oberflächenbearbeitung des thermoplastischen Kunststoffstrangs bzw. der Kantenbeschichtung erfolgt im Allgemeinen vor dem Aufbringen der Bedruckung, was auch seinen Niederschlag in der Anordnung der diesbezüglichen Vorrichtungen in dem System nach der Erfindung findet.

Wie zuvor auch im Rahmen des erfindungsgemäßen Verfahrens angeführt, weist der hitzeklebrige thermoplastische Kunststoffstrang bzw. die Kantenbeschichtung mindestens ein Kunststoffpolymer und vorzugsweise mindestens ein thermoplastisches Kunststoffpolymer bzw. mindestens einen Schmelzklebstoff auf. In diesem Zusammenhang ist es erfindungsgemäß bevorzugt, dass der thermoplastische Kunststoffstrang bzw. die Kantenbeschichtung, insbesondere zum Zeitpunkt und/oder während Durchführung der Verfahrensschritte (a) und/oder (a') und/oder (b), insbesondere (a) und (b) einerseits oder (a), (a') und (b) andererseits, vorzugsweise zum Zeitpunkt und/oder während Durchführung des gesamten Verfahrens, zumindest im Wesentlichen keine nichtthermoplastischen Kunststoffpolymere und insbesondere keine in einer Schicht oder dergleichen angeordneten nichtthermoplastischen Kunststoffpolymere aufweist. Hierdurch ist im Rahmen der Erzeugung bzw. des Aufbringens bzw. des Fixierens ein vollständiges Überführen in einen fließfähigen bzw. hitzeklebrigen Zustand des zugrundeliegenden thermoplastischen Kunststoffpolymers möglich. Somit kann es erfindungsgemäß insbesondere vorgesehen sein, dass der thermoplastische Kunststoffstrang bzw. die Kantenbeschichtung zumindest im Wesentlichen frei von nichtthermoplastischen Kunststoffpolymeren ist.

Insbesondere kann es erfindungsgemäß vorgesehen sein, dass der in den Verfahrensschritten (a) und/oder (a') und/oder (b), insbesondere (a) und (b) einerseits oder (a), (a') und (b) andererseits, bereitgestellte und/oder eingesetzte thermoplastische Kunststoffstrang zumindest im Wesentlichen frei von nichtthermoplastischen Kunststoffpolymeren ist. Zudem kann es erfindungsgemäß vorgesehen sein, dass in dem resultierenden (End-) Produkt und/oder nach Durchführung des erfindungsgemäßen Verfahrens der thermoplastische Kunststoffstrang bzw. die Kantenbeschichtung zumindest im Wesentlichen frei von nichtthermoplastischen Kunststoffpolymeren ist.

Für weitere diesbezügliche Ausführungen zu dem erfindungsgemäßen System bzw. zu der erfindungsgemäßen Anlage kann auch auf die Ausführungen zu den weiteren erfindungsgemäßen Aspekten verwiesen werden, welche vorliegend entsprechend gelten.

Auch beschrieben ist das plattenförmige Substrat (Werkstoffsubstrat), insbesondere plattenförmiges Holz- und/oder Möbelteil, wobei das Substrat an mindestens einer Kante (Schmalseite, Schmalfläche) einen hieran aufgebrachten und/oder fixierten und insbesondere eine Kantenbeschichtung ausbildenden thermoplastischen Kunststoffstrang, insbesondere Kunststoffprofilstrang oder Kunststofffilm, aufweist, wobei das Substrat nach einem zuvor beschriebenen Verfahren erhältlich ist und/oder erhalten ist.

Auch beschrieben ist ein plattenförmiges Substrat (Werkstoffsubstrat), insbesondere plattenförmiges Holz- und/oder Möbelteil, wobei das Substrat an mindestens einer Kante (Schmalseite, Schmalfläche) einen hieran aufgebrachten und/oder fixierten und insbesondere eine Kantenbeschichtung ausbildenden thermoplastischen Kunststoffstrang, insbesondere Kunststoffprofilstrang oder Kunststofffilm, aufweist, insbesondere ein wie zuvor definiertes Substrat,
wobei der thermoplastische Kunststoffstrang und/oder die Kantenbeschichtung zumindest im Wesentlichen keine Füllstoffe aufweist und/oder wobei der thermoplastische Kunststoffstrang und/oder die Kantenbeschichtung zumindest im Wesentlichen frei von Füllstoffen ist.

Auch beschrieben ist ein plattenförmiges Substrat (Werkstoffsubstrat), insbesondere plattenförmiges Holz- und/oder Möbelteil, wobei das Substrat an mindestens einer Kante (Schmalseite, Schmalfläche) einen hieran aufgebrachten und/oder fixierten und insbesondere eine Kantenbeschichtung ausbildenden thermoplastischen Kunststoffstrang, insbesondere Kunststoffprofilstrang oder Kunststofffilm, aufweist, insbesondere ein wie zuvor definiertes Substrat,
wobei das plattenförmige Substrat einen Verbund (Komposit) mit der an dem Substrat aufgebrachten und/oder fixierten Kantenbeschichtung aufweist und/oder ausbildet, wobei der Verbund (Komposit) durch mindestens eine der folgenden Eigenschaften gekennzeichnet ist:
- eine Wasserbeständigkeit im Bereich von 3 bis 5, insbesondere im Bereich von 4 bis 5, insbesondere bestimmt gemäß Ikea TM 0002; und/oder
- eine Hitzebeständigkeit im Bereich von 3 bis 5, insbesondere im Bereich von 4 bis 5, insbesondere bestimmt gemäß Ikea TM 0002; und/oder
- eine Feuchtklimabeständigkeit, insbesondere bestimmt gemäß AMK Modul 2 Merkblatt 005, April 2015, zumindest im Wesentlichen ohne visuell erfassbare und/oder sichtbare Veränderung des Verbunds und/oder der Kantenbeschichtung; und/oder
- eine Wechselklimabeständigkeit, insbesondere bestimmt gemäß AMK Modul 3 Merkblatt 005, April 2015, zumindest im Wesentlichen ohne visuell erfassbare und/oder sichtbare Veränderung des Verbunds und/oder der Kantenbeschichtung; und/oder
- eine Wasserdampfbeaufschlagung, insbesondere bestimmt gemäß AMK Modul 1 Merkblatt 005, April 2015, zumindest im Wesentlichen ohne visuell erfassbare und/oder sichtbare Veränderung des Verbunds und/oder der Kantenbeschichtung; und/oder
- eine UV-Beständigkeit gemäß Graumaßstab im Bereich von 3 bis 5, insbesondere im Bereich von 4 bis 5, bevorzugt 5, und/oder gemäß Blaumaßstab (Wollmaßstab) im Bereich von 6 bis 8, insbesondere im Bereich von 7 bis 8, bevorzugt 8, insbesondere bestimmt gemäß DIN EN ISO 4892-2:2013 und/oder gemäß DIN EN 15187:2006.

Was das plattenförmige Substrat weiterhin anbelangt, so kann es vorgesehen sein, dass die Kantenbeschichtung des plattenförmigen Substrats ausschließlich durch den thermoplastische Kunststoffstrang gebildet wird und/oder wobei der thermoplastische Kunststoffstrang die einzige Kantenbeschichtung des plattenförmigen Substrats bildet und/oder wobei das plattenförmige Substrat außer dem thermoplastischen Kunststoffschrank kein weiteres Kantenband, insbesondere kein konventionelles Kantenband, vorzugsweise kein mittels eines Klebstoffs anbringbares und/oder fixierbares Kantenband, aufweist.

Im Allgemeinen kann der thermoplastische Kunststoffstrang in dem endfertigen Produkt, einschließlich der aufgebrachten Bedruckung, eine Dicke im Bereich von 0,06 mm bis 3,25 mm, insbesondere im Bereich von 0,085 mm bis 2,25 mm, vorzugsweise im Bereich von 0,125 mm bis 1,7 mm, bevorzugt im Bereich von 0,2 mm bis 1,5 mm, besonders bevorzugt im Bereich von 0,22 mm bis 1,2 mm, ganz besonders bevorzugt im Bereich von 0,25 mm bis 1 mm, weiter bevorzugt im Bereich von 0,3 mm bis 0,9 mm, aufweisen.

Im Folgenden wird die vorliegende Erfindung anhand bevorzugter Ausführungsbeispiele darstellenden Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt
- Fig. 1A: eine schematische Darstellung eines erfindungsgemäßen Verfahrensablaufs zur Kantenbeschichtung gemäß einer ersten Ausführungsform;
- Fig. 1B: eine schematische Darstellung eines erfindungsgemäßen Verfahrensablaufs zur Kantenbeschichtung gemäß einer weiteren erfindungsgemäßen Ausführungsform;
- Fig. 2A: eine schematische Darstellung der Anordnung verschiedener Vorrichtungen zur Bereitstellung eines erfindungsgemäßen Systems (Anlage) gemäß einer erfindungsgemäßen Ausführungsform;
- Fig. 2B: eine schematische Darstellung der Anordnung verschiedener Vorrichtungen zur Bereitstellung eines erfindungsgemäßen Systems (Anlage) gemäß einer weiteren erfindungsgemäßen Ausführungsform.

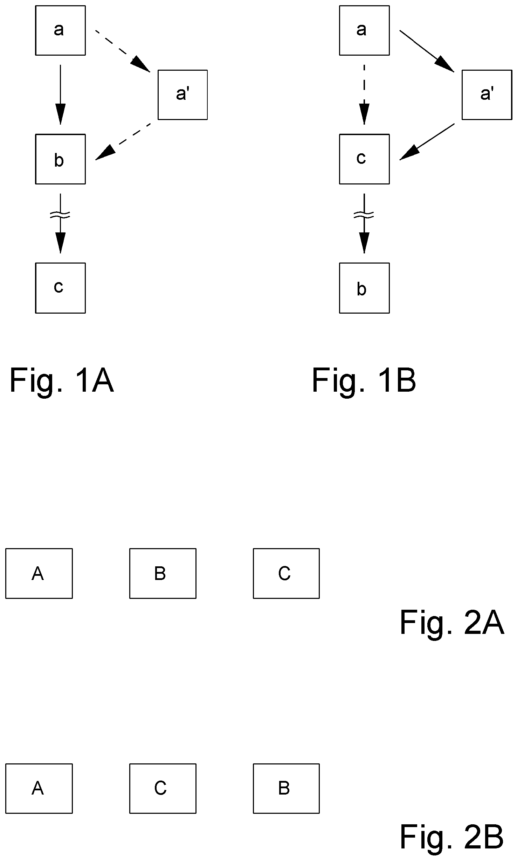

Fig. 1A zeigt einen erfindungsgemäßen Ablauf des Verfahrens nach der Erfindung zur Kantenbeschichtung, wonach zunächst gemäß Verfahrensschritt (a) ein hitzeklebriger bzw. heißklebriger thermoplastischer Kunststoffstrang erzeugt wird, welcher insbesondere unmittelbar im Anschluss gemäß Verfahrensschritt (b) auf mindestens einer Kante des plattenförmigen Substrats aufgebracht bzw. fixiert wird. Nach dem Aufbringen bzw. Fixieren erfolgt dann gemäß Verfahrensschritt (c) gegebenenfalls mit zeitlicher Unterbrechung bzw. mit einer eigenständigen Verfahrensführung bzw. in einem in Bezug auf die Durchführung der Verfahrensschritte (a) und (b) verschiedenen Prozessraum, das Aufbringen der Bedruckung auf dem thermoplastischen Kunststoffstrang bzw. auf die Kantenbeschichtung. Fig. 1A zeigt zudem einen Verfahrensablauf mit der Durchführung eines Zwischenschritts in Form von Verfahrensschritt (a'), wonach der zuvor gemäß Verfahrensschritt (a) erzeugte thermoplastische Kunststoffstrang vor Aufbringen bzw. Fixieren auf dem plattenförmigen Substrat gemäß Verfahrensschritt (b) auf einem Träger aufgebracht bzw. fixiert wird, wobei in diesem Zusammenhang eine Lagerung bzw. ein Transport des auf dem Träger aufgebrachten Kunststoffstrang zu Zwecken des nachfolgenden Aufbringens bzw. Fixierens auf dem plattenförmigen Substrat erfolgen kann.

Fig. 1B zeigt einen alternativen Verfahrensablauf, wonach der in Verfahrensschritt (a) erzeugte hitzeklebrige Kunststoffstrang gemäß Zwischenschritt bzw. Verfahrensschritt (a') zunächst auf einem Träger aufgebracht bzw. fixiert wird, gefolgt von dem Aufbringen einer Bedruckung gemäß Verfahrensschritt (c), wobei das Verfahren zwischen Verfahrensschritt (a') und Verfahrensschritt (c) auch unterbrochen bzw. diskontinuierlich durchgeführt werden kann, insbesondere in verschiedenen Prozessräumen oder dergleichen. Nachfolgend kann, gleichermaßen gegebenenfalls nach einer Unterbrechung bzw. diskontinuierlich bzw. in einem anderen Prozessraum, der bedruckte und auf einem Träger aufgebrachte thermoplastische Kunststoffstrang gemäß Verfahrensschritt (b), insbesondere nach Entfernen des Trägers, auf einem plattenförmigen Substrat aufgebracht bzw. fixiert werden. Fig. 1B zeigt auch eine alternative Ausführungsform, wonach der in Verfahrensschritt (a) erzeugte thermoplastische Kunststoffstrang ohne Durchführung von Verfahrensschritt (a') direkt gemäß Verfahrensschritt (c) bedruckt wird.

Weiterhin zeigt Fig. 2A eine zu der Verfahrensführung gemäß Fig. 1A korrespondierende Anordnung der einem erfindungsgemäßen System bzw. einer diesbezüglichen Anlage zur Durchführung des Verfahrens nach der Erfindung zugrundeliegenden Vorrichtungen, wonach das System eine Erzeugungsvorrichtung (A), eine Auftrags- bzw. Fixiervorrichtung (B) sowie eine Druck- bzw. Farbauftragsvorrichtung (C) aufweist, wobei die Erzeugungsvorrichtung (A), die Auftrags- bzw. Fixiervorrichtung (B) und die Druck- bzw. Farbauftragsvorrichtung (C) in der zuvor spezifizierten Reihenfolge stromabwärts bzw. in Prozessrichtung hintereinandergeschaltet oder angeordnet sind, so dass zunächst eine Erzeugung des hitzeklebrigen Kunststoffstrangs, gefolgt von einem Aufbringen bzw. Fixieren auf dem plattenförmigen Substrat und wiederum gefolgt von einem Aufbringen einer Bedruckung, durchgeführt wird.

Fig. 2B zeigt eine zu der Verfahrensführung gemäß Fig. 1B korrespondierende Anordnung der einem erfindungsgemäßen System zur Durchführung des Verfahrens nach der Erfindung bzw. einer diesbezüglichen Anlage zugrundeliegenden Vorrichtungen, wobei die Erzeugungsvorrichtung (A), die Druck- bzw. Farbauftragsvorrichtung (B) und die Auftrags- bzw. Fixiervorrichtung (C) in Prozessrichtung in der zuvor beschriebenen Reihenfolge stromabwärts bzw. in Prozessrichtung hintereinandergeschaltet bzw. angeordnet sind.

Für weitere diesbezügliche Ausführungen zu dem plattenförmigen Substrat kann auch auf die Ausführungen zu den erfindungsgemäßen Aspekten verwiesen werden, welche vorliegend entsprechend gelten.

Darüber hinaus ist zudem die Verwendung eines hitzeklebrigen (heißklebrigen) thermoplastischen Kunststoffstrangs, insbesondere Kunststoffprofilstrangs oder Kunststofffilms, vorzugsweise in Form eines Kantenbandes, zur Kantenbeschichtung (Schmalseitenbeschichtung, Schmalflächenbeschichtung) eines plattenförmigen Substrats (Werkstoffsubstrats), vorzugsweise eines plattenförmigen Holz- und/oder Möbelteils, in dem zuvor definierten Verfahren nach der Erfindung, beschrieben.

Für weitere diesbezügliche Ausführungen zu der Verwendung kann auch auf die Ausführungen zu den erfindungsgemäßen Aspekten verwiesen werden, welche vorliegend entsprechend gelten.

Darüber hinaus ist zudem die Verwendung eines hitzeklebrigen (heißklebrigen) thermoplastischen Kunststoffstrangs, insbesondere Kunststoffprofilstrangs oder Kunststofffilms, vorzugsweise in Form eines Kantenbandes, zur Kantenbeschichtung (Schmalseitenbeschichtung, Schmalflächenbeschichtung) eines plattenförmigen Substrats (Werkstoffsubstrats), vorzugsweise eines plattenförmigen Holz- und/oder Möbelteils, bevorzugt zur Anbringung einer Kantenbeschichtung auf mindestens eine Kante (Schmalseite, Schmalfläche) eines plattenförmigen Substrats, vorzugsweise eines plattenförmigen Holz- und/oder Möbelteils, beschrieben,
wobei der thermoplastische Kunststoffstrang auf mindestens einer Kante (Schmalseite, Schmalfläche) des plattenförmigen Substrats aufgebracht und/oder fixiert wird, vorzugsweise aufgebracht und stoffschlüssig und/oder dauerhaft fixiert wird, insbesondere derart, dass eine Kantenbeschichtung (Schmalseitenbeschichtung, Schmalflächenbeschichtung) des plattenförmigen Substrats resultiert und/oder dass ein Verbund (Komposit) des plattenförmigen Substrats mit der hieran aufgebrachten und/oder fixierten Kantenbeschichtung resultiert, und
wobei vor oder nach dem Aufbringen und/oder Fixieren des thermoplastischen Kunststoffstrangs, insbesondere Kunststoffprofilstrangs oder Kunststofffilms, und/oder der Kantenbeschichtung eine Bedruckung auf dem thermoplastischen Kunststoffstrang, insbesondere Kunststoffprofilstrang oder Kunststofffilm, und/oder auf der Kantenbeschichtung aufgebracht wird.

Für weitere diesbezügliche Ausführungen zu dieser Verwendung kann auch auf die Ausführungen zu den erfindungsgemäßen Aspekten verwiesen werden, welche vorliegend entsprechend gelten.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele weiterführend veranschaulicht, welche die vorliegende Erfindung jedoch keinesfalls beschränken sollen.

### AUSFÜHRUNGSBEISPIELE:

Das erfindungsgemäße Verfahren wird anhand der nachfolgenden Ausführungsbeispiele veranschaulicht.

### Allgemeine Vorgehensweise

Im Rahmen einer besonderen Ausführungsform des erfindungsgemäßen Verfahrens wird zunächst ein hitzeklebriger (heißklebriger) thermoplastischer Kunststoffstrang, insbesondere Kunststoffprofilstrangs bzw. Kunststofffilms, vorzugsweise in Form eines Kantenbandes, bevorzugt mittels Extrusion, erzeugt.

Der erzeugte hitzeklebrige (heißklebrige) thermoplastische Kunststoffstrang wird auf einem plattenförmigen Substrat, vorzugsweise auf einem plattenförmigen Holz- bzw. Möbelteil, aufgebracht und fixiert und gegebenenfalls nachfolgend formatiert, so dass eine Kantenbeschichtung (synonym auch als Schmalseitenbeschichtung oder Schmalflächenbeschichtung bezeichnet) des plattenförmigen Substrats mit dem thermoplastischen Kunststoffstrang resultiert bzw. so dass ein Verbund bzw. Komposit des plattenförmigen Substrats mit der hieran aufgebrachten und/oder fixierten Kantenbeschichtung resultiert.

Gegebenenfalls kann anschließend - wenn notwendig oder gewünscht - eine Nachbearbeitung, insbesondere Homogenisierung, beispielsweise mittels Fräsen, Glätten, Schleifen, Schneiden und/oder Polieren, erfolgen.

In einem nächsten Verfahrensschritt wird eine Bedruckung mittels Digitaldruck auf den thermoplastischen Kunststoffstrang, insbesondere Kunststoffprofilstrang bzw. Kunststofffilm, bzw. auf die Kantenbeschichtung aufgebracht.

### Alternative Vorgehensweise

Gemäß einer alternativen besonderen Ausführungsform des erfindungsgemäßen Verfahrens wird zunächst ein hitzeklebriger (heißklebriger) thermoplastischer Kunststoffstrang, insbesondere Kunststoffprofilstrang bzw. Kunststofffilm, vorzugsweise in Form eines Kantenbandes, bevorzugt mittels Extrusion, erzeugt.

Der erzeugte hitzeklebrige (heißklebrige) thermoplastische Kunststoffstrang wird in einem Zwischenschritt auf einem Träger aufgebracht und fixiert, vorzugsweise aufgebracht und ablösbar bzw. intermediär (d.h. nicht dauerhaft) fixiert.

Gegebenenfalls kann anschließend - wenn notwendig oder gewünscht - eine Nachbearbeitung, insbesondere Homogenisierung, beispielsweise mittels Fräsen, Glätten, Schleifen, Schneiden und/oder Polieren, erfolgen.

Nachfolgend wird der hitzeklebriger (heißklebriger) thermoplastischer Kunststoffstrang von dem Träger abgelöst und dann auf einem plattenförmigen Substrat, vorzugsweise auf einem plattenförmigen Holz- bzw. Möbelteil, aufgebracht und fixiert, so dass eine Kantenbeschichtung des plattenförmigen Substrats resultiert bzw. so dass ein Verbund bzw. Komposit des plattenförmigen Substrats mit der hieran aufgebrachten und/oder fixierten Kantenbeschichtung resultiert.

Gegebenenfalls kann auch oder alternativ nach diesem Schritt - wenn notwendig oder gewünscht - eine Nachbearbeitung, insbesondere Homogenisierung, beispielsweise mittels fräsen, glätten, schleifen, schneiden und/oder polieren, erfolgen.

Im nächsten Verfahrensschritt wird eine Bedruckung mittels Digitaldruck auf den thermoplastischen Kunststoffstrang, insbesondere Kunststoffprofilstrang bzw. Kunststofffilm, bzw. auf die Kantenbeschichtung aufgebracht.

Gemäß einer weiteren besonderen Ausführungsform kann die Bedruckung mittels Digitaldruck auch erfolgen bevor der thermoplastische Kunststoffstrang von dem Träger auf das plattenförmige Substrat gebracht wird.

### Einzelheiten zur Bedruckung (Digitaldruck)

Die Bedruckung wird an einer Druckauftragsvorrichtung durchgeführt, welche gemäß einer besonderen Ausführungsform aus sechs hintereinander angeordneten Druckköpfen mit jeweils nachfolgender UV-Lampe besteht, wobei UV-härtbare Farben nacheinander appliziert und unmittelbar UV-gehärtet werden. Die Farben sind in der folgenden Reihenfolge angeordnet bzw. auch in dieser Reihenfolge aufgebracht: weiß (als Grundschicht), cyan, magenta, gelb (yellow) und schwarz. Diese Anordnung entspricht insbesondere dem sogenannten CMYK-Farbmodell und der Drucktechnik gemäß ISO 2846-1:2017.

Das Design zur Bedruckung kann in Form einer vorgegebenen Bilddatei in einem entsprechenden Programm der verwendeten Anlage hinterlegt werden, wobei die Bilddatei eine hohe Auflösung aufweist. Der Bildausschnitt kann - abhängig von den exakten Maßen der zu bedruckenden Schmalseite bzw. Kante - an einem entsprechenden Bildschirm manuell ausgewählt werden (nicht erfindungsgemäß).

Erfindungsgemäß wird das Design automatisch an das Substrat angepasst, beispielsweise indem beim Einfahren der Holzwerkstoffplatte in die Anlage das Oberflächendesign des Substrats optisch erfasst wird und das Design zur Bedruckung der Schmalseite automatisiert exakt an das Oberflächendesign angepasst wird.

### Hitzeklebriger Kunststoffstrang

Der erfindungsgemäß erzeugte hitzeklebrige (heißklebrige) thermoplastische Kunststoffstrang, insbesondere Kunststoffprofilstrang bzw. Kunststofffilm, umfasst insbesondere ein reaktives und/oder ein nichtreaktives (thermoplastisches) Kunststoffpolymer, insbesondere Klebstoff. Als nichtreaktiver Klebstoff kann beispielsweise ein Ethylen-Vinalacetat-Copolymer-, Ethylen-Acrylat-Copolymer-, Polyamid-, Polyacrylat-, Polyolefin-, Polyester-, insbesondere Polylactid-, oder Polyurethan-basiertes Kunststoffpolymer oder eine entsprechende Mischung verwendet werden. Als reaktiver Klebstoff kann beispielsweise ein einkomponentiger (1K) oder zweikomponentiger (2K) Polyurethan- oder Polyolefinbasiertes Kunststoffpolymer oder eine Mischung davon verwendet werden.

Zusätzlich kann der hitzeklebrige thermoplastische Kunststoffstrang noch weitere Inhaltsstoffe, beispielsweise Antioxidaten, Katalysatoren, Harze, Wachse, Füllstoffe, Netzmittel, Rheologiemodifikatoren, Stabilisatoren, Flammschutzmittel, Farbstoffe, Gleitmittel, Weichmacher sowie entsprechende Mischungen, enthalten.

Als Material für den hitzeklebrigen (heißklebrigen) thermoplastischen Kunststoffstrang können beispielsweise die folgenden kommerziellen Produkte eingesetzt werden:
(i) nichtreaktive Systeme:
   Jowat-Toptherm^{®} EP 12 237.60 (Polyolefin-basiert),
   Jowatherm^{®} 211.50 (Polyamid-basiert),
   Jowat-Toptherm^{®} 237.50 (Polyolefin-basiert);
(ii) reaktive Systeme:
   Jowatherm-Reaktant^{®} 600.71 (Polyurethan-basiert, 1-Komponenten-System),
   Jowatherm-Reaktant^{®} 629.70 (Polyolefin-basiert, 1-Komponenten-System)

### Einfluss der Füllstoffmenge

Zur Ermittlung des Einflusses der Füllstoffmenge wird jeweils eine Vergleichsreihe mit einem Polyamid-basierten Klebstoff und einem Polyurethan-basierten Klebstoff (sowohl reaktiv als auch nichtreaktiv) durchgeführt. Es werden Schmalseiten von Holzwerkstoffsubstraten entsprechend des erfindungsgemäßen Verfahrens, wie zuvor beschrieben, beschichtet. Dabei enthalten die Klebstoffe jeweils unterschiedliche Mengen an Calciumcarbonat (CaCO₃) als Füllstoff, nämlich 0 Gew.-%, 1 Gew.-%, 5 Gew.-%, 10 Gew.-% und 20 Gew.-%, jeweils bezogen auf den Klebstoff.

Sämtliche Klebstoffe eignen sich grundsätzlich für das erfindungsgemäße Verfahren und führen zur Ausbildung einer Kantenbeschichtung, welche bedruckbar ist; d.h. die entsprechenden Klebstoffe sind jeweils erfindungsgemäß verarbeitbar.

Jedoch geht aus den Versuchsreihen (zunehmende Menge Füllstoff bei ansonsten gleichem Klebstoff und identischer Vorgehensweise) jeweils hervor, dass bei hohem Durchsatz mit steigendem Gehalt an Füllstoff der Verschleiß der (Extrusions-)Düse zunimmt und dass sich die Verarbeitungseigenschaften, insbesondere der Auftrag und die Fließfähigkeit, sich verschlechtern und dass sich die Klebfestigkeit, insbesondere die Schälfestigkeit, Adhäsivität, Klebkraft, Scherfestigkeit, Hitzebeständigkeit, Verlustbereich und das Schubmodul, verschlechtern.

### Weitere Ausführungen zu einer typischen Ausführungsweise

Gemäß einer typischen Vorgehensweise werden verschiedene Versuche auf die nachfolgend beschriebenen Weise durchgeführt, wobei die vorgenannten Ausgangsstoffe zum Einsatz kommen:
Zunächst wird eine Bilddatei in einen Workflow geladen, welche mit der Anlage verbunden ist, und automatisch auf definierte Kriterien hin überprüft. Zu den Kriterien zählen beispielsweise die Auflösung der Datei, die enthaltenen Farbinformationen sowie weitere definierbare Parameter. Bei einer Fehlermeldung aufgrund von Abweichungen der Vorgabekriterien können Korrekturen direkt vorgenommen werden. Anschließend werden direkt die Maße der zu beschichtenden Schmalkante eingegeben, so dass die Bilddatei automatisch an die entsprechende Größe des zu bedruckenden Bereichs angepasst wird. Ein Ausdruck oder eine Kontrolle an einem entsprechenden Bildschirm sind auch möglich. Die angepasste Bilddatei wird dann über eine entsprechende Schnittstelle der Druckvorrichtung zur Verfügung gestellt (nicht erfindungsgemäß).

Nachfolgend wird eine zu beschichtende Holzwerkstoffplatte in die Anlage gebracht und ausgerichtet. Alternativ zu dem zuvor beschriebenen Verfahren zur Bereitstellung der Bilddatei bzw. des Designs wird erfindungsgemäß das Oberflächendekor der Holzwerkstoffplatte beim Einfahren in die Anlage auch optisch erfasst und automatisiert an die Druckvorrichtung gesendet.

Dann wird die Schmalfläche der Holzwerkstoffplatte an einer Schlitzdüse oder einer Walze entlang gefahren und das Kunststoffpolymer bzw. der Klebstoff, auf welchem der hitzeklebrige thermoplastische Kunststoffstrang basiert, wird homogen auf die gesamte Schmalfläche aufgetragen.

Das aufgetragene Kunststoffpolymer bzw. der Klebstoff verfestigt sich durch den Abkühlungsvorgang während die Holzwerkstoffplatte weitergeführt wird und bilden somit den thermoplastischen Kunststoffstrang. Bei Verwendung eines reaktiven Kunststoffpolymers können beispielsweise UV-Lampen oder Wärmequellen insbesondere nachfolgend angeordnet sein, um die Vernetzung zu initiieren.

Die Oberfläche des thermoplastischen Kunststoffstrangs wird dann durch verschiedene Werkzeuge automatisch homogenisiert, beispielsweise gefräst, geglättet, geschliffen, geschnitten und/oder poliert.

Anschließend wird die homogenisierte Oberfläche an der Druckauftragsvorrichtung vorbeigeführt, welche aus sechs hintereinander angeordneten Druckköpfen jeweils mit einer dahinterliegenden UV-Lampe besteht. Die Farben werden in der Reihenfolge: weiß (als Grundschicht), cyan, magenta, gelb, schwarz nacheinander appliziert und jeweils direkt UV-gehärtet. Diese Vorgehensweise entspricht der DIN 2846-1.

Zuletzt wird ein digitaldruckfähiger Lack vollflächig aufgebracht und durch eine UV-Lampe glatt oder matt ausgehärtet. Der Lack dient somit der Veredelung und dem Schutz der darunterliegenden Farben sowie Holzwerkstoffplattenkante.

### Bezugszeichenliste:

- A: Erzeugungsvorrichtung
- B: Auftrags- und/oder Fixiervorrichtung
- C: Druck- und/oder Farbauftragsvorrichtung
- a: Verfahrensschritt (a)
- b: Verfahrensschritt (b)
- c: Verfahrensschritt (c)
- a': Zwischenschritt bzw. Verfahrensschritt (a')

## Patentansprüche

1. Verfahren zur Kantenbeschichtung eines plattenförmigen Substrats, vorzugsweise eines plattenförmigen Holz- und/oder Möbelteils, insbesondere Verfahren zur Anbringung einer Kantenbeschichtung auf mindestens eine Kante eines plattenförmigen Substrats, vorzugsweise eines plattenförmigen Holz- und/oder Möbelteils,
wobei das Verfahren die nachfolgen Verfahrensschritte umfasst:
(a) Erzeugung eines hitzeklebrigen thermoplastischen Kunststoffstrangs, insbesondere Kunststoffprofilstrangs oder Kunststofffilms, vorzugsweise in Form eines Kantenbandes, bevorzugt mittels Extrusion,
(b) Aufbringen und/oder Fixieren, vorzugsweise Aufbringen und stoffschlüssiges und/oder dauerhaftes Fixieren, des thermoplastischen Kunststoffstrangs, insbesondere Kunststoffprofilstrangs oder Kunststofffilms, auf mindestens einer Kante des plattenförmigen Substrats derart, dass eine Kantenbeschichtung des plattenförmigen Substrats resultiert und/oder dass ein Verbund des plattenförmigen Substrats mit der hieran aufgebrachten und/oder fixierten Kantenbeschichtung resultiert,
(c) Aufbringen einer Bedruckung auf dem thermoplastischen Kunststoffstrang, insbesondere Kunststoffprofilstrang oder Kunststofffilm, und/oder auf der Kantenbeschichtung,
wobei in Verfahrensschritt (c) das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei in Verfahrensschritt (c) das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrang und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung und/oder vor Verfahrensschritt (c) die optische Ausbildung des plattenförmigen Substrats elektronisch erfasst und/oder analysiert wird und nachfolgend in Verfahrensschritt (c) die Bedruckung in Abhängigkeit von der optischen Ausbildung ausgebildet und/oder hieran angepasst wird.

2. Verfahren nach Anspruch 1,
wobei das Verfahren, insbesondere die Gesamtdurchführung der Verfahrensschritte (a), (b) und (c), zumindest im Wesentlichen kontinuierlich und/oder unterbrechungsfrei und/oder mit zumindest im Wesentlichen unterbrechungsfreier Verfahrensführung und/oder mit zumindest im Wesentlichen unterbrechungsfreier Verfahrensführung durchgeführt wird; und/oder
wobei die Verfahrensschritte (a), (b) und (c) räumlich zusammenhängend und/oder zeitlich zusammenhängend, insbesondere räumlich zusammenhängend und zeitlich zusammenhängend, durchgeführt werden; und/oder
wobei die Verfahrensschritte (a), (b) und (c) in einer gemeinsamen Verfahrensführung und/oder in einer gemeinsamen Verfahrensstrecke bzw. Systemlinie und/oder in einem gemeinsamen Verfahrensraum (Prozessraum) durchgeführt werden, insbesondere als in-line-Verfahren oder *in-line*-Prozess;
oder aber
wobei das Verfahren, insbesondere die Gesamtdurchführung der Verfahrensschritte (a), (b) und (c), diskontinuierlich und/oder nicht unterbrechungsfrei durchgeführt wird; und/oder
wobei die Verfahrensschritte (a), (b) und (c) zumindest teilweise, insbesondere die Verfahrensschritte (b) und (c), räumlich getrennt voneinander und/oder zeitlich getrennt zueinander, insbesondere räumlich getrennt voneinander und zeitlich getrennt zueinander, durchgeführt werden; und/oder
wobei die Verfahrensschritte (a), (b) und (c) zumindest teilweise, insbesondere die Verfahrensschritte (b) und (c), in voneinander getrennten Verfahrensführungen und/oder in voneinander getrennten Verfahrensräumen (Prozessräumen) durchgeführt werden.

3. Verfahren nach Anspruch 1 oder 2,
wobei, insbesondere in Verfahrensschritt (a), der thermoplastische Kunststoffstrang und/oder das Material für den thermoplastischen Kunststoffstrang, insbesondere das Kunststoffpolymer, insbesondere wie nachfolgend definiert, des thermoplastischen Kunststoffstrangs, in einem formbaren und/oder fließfähigen und/oder hitzeklebrigen Zustand vorliegt und/oder in einen solchen Zustand überführt wird, insbesondere mittels Wärmebeaufschlagung, vorzugsweise auf eine Temperatur oberhalb des Erweichungsbereichs und/oder Erweichungspunkts des thermoplastischen Kunststoffstrangs und/oder des für den thermoplastischen Kunststoffstrang eingesetzten (Ausgangs-)Materials, insbesondere Kunststoffpolymers; und/oder
wobei, insbesondere in Verfahrensschritt (a), die Erzeugung des thermoplastischen Kunststoffstrangs mittels mindestens einer Erzeugungsvorrichtung (A) erfolgt und/oder durchgeführt wird, insbesondere wobei der thermoplastische Kunststoffstrang zumindest im Wesentlichen gleichförmig und/oder mit zumindest im Wesentlichen gleichmäßiger und/oder zumindest im Wesentlichen konstanter Geschwindigkeit erzeugt und/oder aus der Erzeugungsvorrichtung (A) ausgetragen wird, insbesondere mittels Düsenextrusion, vorzugsweise Schlitzdüsenextrusion; und/oder
wobei, insbesondere in Verfahrensschritt (a), die Erzeugung des hitzeklebrigen thermoplastischen Kunststoffstrangs mittels Düse(n), insbesondere Düsenextrusion, vorzugsweise Schlitzdüsenextrusion, erfolgt oder wobei, insbesondere in Verfahrensschritt (a), die Erzeugung des hitzeklebrigen thermoplastischen Kunststoffstrangs mittels Walzen und/oder Walzenaustrag erfolgt; und/oder
wobei, insbesondere in Verfahrensschritt (a), die Erzeugung des hitzeklebrigen thermoplastischen Kunststoffstrangs mittels Düse(n), insbesondere Düsenextrusion, vorzugsweise Schlitzdüsenextrusion, oder mittels Walzen und/oder Walzenaustrag erfolgt; und/oder
wobei, insbesondere in Verfahrensschritt (a), die Erzeugung des thermoplastischen Kunststoffstrangs mit einer Geschwindigkeit im Bereich von 1 m/min bis 300 m/min, insbesondere im Bereich von 10 m/min bis 200 m/min, vorzugsweise im Bereich von 20 m/min bis 100 m/min, erfolgt.

4. Verfahren nach einem der vorangehenden Ansprüche,
wobei, insbesondere in Verfahrensschritt (b), der thermoplastische Kunststoffstrang zumindest im Wesentlichen vollflächig und/oder zumindest im Wesentlichen unterbrechungsfrei und/oder zumindest im Wesentlichen homogen und/oder mit gleichmäßiger Dicke auf dem plattenförmigen Substrat, insbesondere auf der mindestens einen Kante des plattenförmigen Substrats, aufgetragen und/oder fixiert wird; und/oder
wobei, insbesondere in Verfahrensschritt (b), der thermoplastische Kunststoffstrang zumindest im Wesentlichen vollflächig und/oder zumindest im Wesentlichen unterbrechungsfrei auf dem plattenförmigen Substrat, insbesondere auf der mindestens einen Kante des plattenförmigen Substrats, aufgetragen und/oder fixiert wird; und/oder
wobei, insbesondere in Verfahrensschritt (b), die mindestens eine Kante des plattenförmigen Substrats entlang ihrer gesamten Höhe und/oder ihrer gesamten Länge, insbesondere zumindest im Wesentlichen vollflächig, mit dem thermoplastischen Kunststoffstrang beschichtet wird.

5. Verfahren nach einem der vorangehenden Ansprüche,
wobei das plattenförmige Substrat, insbesondere die Kante des plattenförmigen Substrats, insbesondere vor Aufbringen und/oder Fixieren des thermoplastischen Kunststoffstrangs, mit mindestens einem Haftvermittler ausgerüstet wird und/oder einer Vor- und/oder Oberflächenbehandlung und/oder -aktivierung, vorzugsweise mittels Corona- oder Plasmabehandlung, unterzogen wird; oder
wobei in Verfahrensschritt (b) das Aufbringen und/oder Fixieren des thermoplastischen Kunststoffstrangs auf dem insbesondere plattenförmigen Substrat, insbesondere auf der mindestens einen Kante des plattenförmigen Substrats, ohne Verwendung eines Haftvermittlers und/oder ohne Vor- und/oder Oberflächenbehandlung und/oder - aktivierung des plattenförmigen Substrats, insbesondere ohne Verwendung eines Haftvermittlers für die Kante des plattenförmigen Substrats, und/oder ohne Vorbehandlung des thermoplastischen Kunststoffstrangs, insbesondere ohne Vorbehandlung der auf dem Substrat aufzubringenden Seite und/oder Fläche des thermoplastischen Kunststoffstrangs, erfolgt.

6. Verfahren nach einem der vorangehenden Ansprüche,
wobei, insbesondere nach Verfahrensschritt (a), vorzugsweise zumindest im Wesentlichen unmittelbar nach Verfahrensschritt (a), und/oder insbesondere vor Verfahrensschritt (b) und/oder vor Verfahrensschiritt (c) mindestens ein Zwischenschritt, insbesondere mindestens ein Zwischenschritt gemäß Verfahrensschritt (a'), durchgeführt wird;
insbesondere wobei das Verfahren in Reihenfolge der Verfahrensschritte (a), (a'), (b) und (c) durchgeführt wird; oder
insbesondere wobei das Verfahren in Reihenfolge der Verfahrensschritte (a), (a'), (c) und (b) durchgeführt wird; und
wobei als Zwischenschritt, insbesondere als Zwischenschritt gemäß Verfahrensschritt (a'), ein Aufbringen und/oder Fixieren, vorzugsweise Aufbringen und ablösbares und/oder intermediäres Fixieren, des thermoplastischen Kunststoffstrangs, insbesondere Kunststoffprofilstrangs oder Kunststofffilms, auf einem Träger erfolgt,
insbesondere wobei das Aufbringen und/oder Fixieren auf dem Träger mittels Düsenauftrag, vorzugsweise Schlitzdüsenauftrag, Walzenauftrag, Rakeln, Sprühen, Kalandern, Druckverfahren, insbesondere mittels Düsenauftrag bzw. -extrusion und/oder Walzenauftrag, vorzugsweise Schlitzdüsenauftrag, erfolgt und/oder durchgeführt wird; und/oder
insbesondere wobei bei dem und/oder nach dem Aufbringen und/oder Fixieren des thermoplastischen Kunststoffstrangs auf dem Träger eine Formgebung, insbesondere eine weitere Formgebung (weiteres Formatieren bzw. weitere Formatierung), des thermoplastischen Kunststoffstrangs erfolgt; und/oder
insbesondere wobei der Träger mindestens eine Fläche und/oder Seite zur Aufnahme des thermoplastischen Kunststoffstrangs aufweist; und/oder
insbesondere wobei der Träger ein Trägermaterial, ausgewählt aus der Gruppe von vorzugsweise hitzebeständigem Papier, vorzugsweise hitzebeständiger Pappe, Metall, vorzugsweise hitzebeständigem Kunststoff, Holz sowie deren Kombinationen, aufweist oder hieraus besteht.

7. Verfahren nach einem der vorangehenden Ansprüche,
wobei, insbesondere in Verfahrensschritt (c), das Aufbringen der Bedruckung unter Verwendung mindestens einer vorzugsweise mittels Farbstrahldruck und/oder Laserdruck, insbesondere Farbstrahldruck, applizierbaren Druckfarbe erfolgt, insbesondere wobei die Druckfarbe UV-härtbar ausgebildet ist;
insbesondere wobei die Druckfarbe nach deren Aufbringen und/oder Auftrag auf den thermoplastischen Kunststoffstrang und/oder auf der Kantenbeschichtung getrocknet und/oder UV-gehärtet wird, insbesondere mittels mindestens einer Trocknungs- und/oder UV-Härtungsvorrichtung.

8. Verfahren nach einem der vorangehenden Ansprüche,
wobei, insbesondere in Verfahrensschritt (c), der thermoplastische Kunststoffstrang und/oder die Kantenbeschichtung, nach dem Aufbringen der Druckfarbe(n), vorzugsweise nach den Ausführungen der (Ab-)Deckfarbe und der Druckfarbe(n), insbesondere auf der dem Substrat abgewandten Seite, mit einer vorzugsweise transparenten und/oder durchsichtigen Abschluss- und/oder Versiegelungsschicht ausgerüstet wird, insbesondere auf Basis und/oder unter Verwendung mindestens eines (Klar-)Lacks,
insbesondere wobei der (Klar-)Lack zumindest im Wesentlichen vollflächig und/oder zumindest im Wesentlichen unterbrechungsfrei auf den thermoplastischen Kunststoffstrang und/oder die Kantenbeschichtung aufgebracht wird; und/oder
insbesondere wobei die Abschluss- bzw. Versiegelungsschicht matt oder glänzend und/oder strukturgebend ausgebildet wird; und/oder
insbesondere wobei die Abschluss- bzw. Versiegelungsschicht strukturgebend ausgebildet wird, insbesondere mittels eines strukturgebenden (Klar-)Lackauftrags, vorzugsweise mittels eines intermittierenden (Klar-)Lackauftrags oder dergleichen; und/oder
insbesondere wobei der (Klar-)Lack insbesondere unmittelbar nach dessen Aufbringen getrocknet und/oder UV-gehärtet (UV-getrocknet) wird.

9. Verfahren nach einem der vorangehenden Ansprüche,
wobei die Kantenbeschichtung des plattenförmigen Substrats ausschließlich durch den thermoplastische Kunststoffstrang gebildet wird und/oder wobei außer dem thermoplastischen Kunststoffstrang keine weitere Kantenbeschichtung, insbesondere kein weiteres Kantenband, insbesondere kein konventionelles Kantenband, vorzugsweise kein mittels eines Klebstoffs anzubringendes und/oder zu fixierendes Kantenband, auf dem plattenförmigen Substrat aufgebracht und/oder fixiert wird; und/oder
wobei das nach dem Verfahren erhältliche und/oder erhaltene Substrat, insbesondere an seiner verfahrensgemäß beschichteten Kante, außer dem thermoplastischen Kunststoffstrang keine weitere Kantenbeschichtung, insbesondere kein weiteres Kantenband, insbesondere kein konventionelles Kantenband, vorzugsweise kein mittels eines Klebstoffs anzubringendes und/oder zu fixierendes Kantenband, aufweist.

10. Verfahren nach einem der vorangehenden Ansprüche,
wobei der Verbund durch mindestens eine der folgenden Eigenschaften gekennzeichnet ist:
- eine Wasserbeständigkeit im Bereich von 3 bis 5, insbesondere im Bereich von 4 bis 5, insbesondere bestimmt gemäß Ikea TM 0002; und/oder
- eine Hitzebeständigkeit im Bereich von 3 bis 5, insbesondere im Bereich von 4 bis 5, insbesondere bestimmt gemäß Ikea TM 0002; und/oder
- eine Feuchtklimabeständigkeit, insbesondere bestimmt gemäß AMK Modul 2 Merkblatt 005, April 2015 zumindest im Wesentlichen ohne visuell erfassbare und/oder sichtbare Veränderung des Verbunds und/oder der Kantenbeschichtung; und/oder
- eine Wechselklimabeständigkeit, insbesondere bestimmt gemäß AMK Modul 3 Merkblatt 005, April 2015, zumindest im Wesentlichen ohne visuell erfassbare und/oder sichtbare Veränderung des Verbunds und/oder der Kantenbeschichtung; und/oder
- eine Wasserdampfbeaufschlagung, insbesondere bestimmt gemäß AMK Modul 1 Merkblatt 005, April 2015, zumindest im Wesentlichen ohne eine visuell erfassbare und/oder sichtbare Veränderung des Verbunds und/oder der Kantenbeschichtung; und/oder
- eine UV-Beständigkeit gemäß Graumaßstab im Bereich von 3 bis 5, insbesondere im Bereich von 4 bis 5, bevorzugt 5, und/oder gemäß Blaumaßstab (Wollmaßstab) im Bereich von 6 bis 8, insbesondere im Bereich von 7 bis 8, bevorzugt 8, insbesondere bestimmt gemäß DIN EN ISO 4892-2:2013 und/oder gemäß DIN EN 15187:2006.

11. System zur Durchführung eines Verfahrens zur Kantenbeschichtung eines plattenförmigen Substrats nach einem der vorangehenden Ansprüche,
wobei das System die nachfolgenden Komponenten und/oder Vorrichtungen aufweist:
(A) mindestens eine Erzeugungsvorrichtung (A) zur Erzeugung eines hitzeklebrigen thermoplastischen Kunststoffstrangs, insbesondere Kunststoffprofilstrangs oder Kunststofffilms, vorzugsweise in Form eines Kantenbandes, zur Durchführung von Verfahrensschritt (a);
(B) mindestens eine Auftrags- und/oder Fixiervorrichtung (B) zum Aufbringen und/oder Fixieren des thermoplastischen Kunststoffstrangs, insbesondere Kunststoffprofilstrangs oder Kunststofffilms, auf mindestens einer Kante des plattenförmigen Substrats derart, dass eine Kantenbeschichtung des plattenförmigen Substrats resultiert und/oder dass ein Verbund des plattenförmigen Substrats mit der hieran aufgebrachten und/oder fixierten Kantenbeschichtung resultiert, zur Durchführung von Verfahrensschritt (b);
(C) mindestens eine Druck- und/oder Farbauftragsvorrichtung (C) zum Aufbringen einer Bedruckung auf dem thermoplastischen Kunststoffstrang, insbesondere Kunststoffprofilstrang oder Kunststofffilm, und/oder auf der Kantenbeschichtung zur Durchführung von Verfahrensschritt (c)
wobei das Aufbringen der Bedruckung im Mehrfarbendruck und/oder unter Verwendung einer Mehrzahl an farblich voneinander verschiedenen Druckfarben erfolgt und wobei die Druckfarben punkt- und/oder rasterförmig auf dem thermoplastischen Kunststoffstrang und/oder auf der Kantenbeschichtung aufgebracht werden, wobei die resultierende Farbgebung durch Übereinander- und/oder Nebeneinanderanordnung der Druckfarben hervorgerufen wird,
wobei das Aufbringen der Bedruckung elektronisch und/oder computerbasiert mittels Digitaldruck gesteuert und/oder durchgeführt wird, wobei das im Rahmen der Bedruckung zu erstellende Druckbild elektronisch basiert ausgebildet ist und/oder vorgegeben wird,
wobei zunächst die Ausmaße der mit der Kantenbeschichtung und/oder der Bedruckung auszurüstenden Fläche des plattenförmigen Substrats elektronisch und/oder computerbasiert erfasst werden und nachfolgend die Erzeugung des thermoplastischen Kunststoffstrangs und/oder das Aufbringen und/oder Fixieren des thermoplastischen Kunststoffstrang und/oder das Aufbringen der Bedruckung an die ermittelten Ausmaße angepasst und/oder in Abhängigkeit von den ermittelten Ausmaßen elektronisch und/oder computerbasiert gesteuert wird oder werden, und
wobei zunächst vor dem Aufbringen der Bedruckung die optische Ausbildung des plattenförmigen Substrats elektronisch erfasst und/oder analysiert wird und nachfolgend die Bedruckung in Abhängigkeit von der optischen Ausbildung ausgebildet und/oder hieran angepasst wird.

12. System nach Anspruch 11,
wobei die Erzeugungsvorrichtung (A) und die Auftrags- und/oder Fixiervorrichtung (B) als kombinierte Erzeugungs- und Auftrags- bzw. Fixiervorrichtung zusammengefasst sind und/oder ausgebildet sind.

13. System nach Anspruch 11 oder 12,
wobei die Erzeugungsvorrichtung (A), die Auftrags- und/oder Fixiervorrichtung (B), insbesondere die kombinierte Erzeugungs- und Auftrags- bzw. Fixiervorrichtung, und die Druck- und/oder Farbauftragsvorrichtung (C) in einer gemeinsamen Verfahrensstrecke bzw. Systemlinie und/oder in einem gemeinsamen Verfahrensraum angeordnet sind oder aber wobei die Erzeugungsvorrichtung (A), die Auftrags- und/oder Fixiervorrichtung (B), insbesondere die kombinierte Erzeugungs- und Auftrags- bzw. Fixiervorrichtung (AB), und die Druck- und/oder Farbauftragsvorrichtung (C) insbesondere zumindest teilweise in voneinander verschiedenen und/oder voneinander getrennten Verfahrensstrecken bzw. Systemlinien und/oder in voneinander verschiedenen und/oder voneinander getrennten Verfahrensräumen angeordnet sind.

14. System nach einem der Ansprüche 11 bis 13,
wobei die Druck- und/oder Farbauftragsvorrichtung (C) mindestens eine Druck- und/oder Farbauftragseinrichtung, insbesondere eine Mehrzahl an Druck- und/oder Farbauftragseinrichtungen, aufweist, insbesondere wobei die Druck- und/oder Farbauftragseinrichtungen zueinander in Prozessrichtung stromabwärts und/oder in Prozessrichtung hintereinander geschaltet und/oder angeordnet sind; und/oder
wobei die Druck- und/oder Farbauftragsvorrichtung (C) mindestens eine Trocknungseinrichtung, insbesondere eine Mehrzahl an Trocknungseinrichtungen, aufweist, insbesondere zur Trocknung und/oder Härtung, insbesondere UV-Härtung, einer jeweils zuvor aufgebrachten Druckfarbe, insbesondere wobei eine jeweilige Trocknungseinrichtung in Prozessrichtung stromabwärts zu einer jeweiligen Druck- und/oder Farbauftragseinrichtung angeordnet und/oder in Prozessrichtung hierzu nachgeschaltet ist; und/oder
wobei die Druck- und/oder Farbauftragsvorrichtung (C) mindestens eine Lackauftragseinrichtung aufweist, insbesondere zum Auftragen einer vorzugsweise transparenten und/oder durchsichtigen Abschluss- und/oder Versiegelungsschicht, insbesondere auf Basis und/oder unter Verwendung mindestens eines (Klar-)Lacks, insbesondere wobei die Lackauftragseinrichtung in Prozessrichtung stromabwärts zu den Druck- und/oder Farbauftragseinrichtungen angeordnet und/oder in Prozessrichtung hierzu nachgeschaltet ist; und/oder insbesondere wobei in Prozessrichtung stromabwärts und/oder in Prozessrichtung nachgeschaltet zu der Lackauftragseinrichtung mindestens eine Trocknungseinrichtung angeordnet ist, insbesondere zur Trocknung und/oder Härtung und/oder Einstellung des Glanzes und/oder der Mattheit des aufgetragenen (Klar-)Lacks und/oder zur Erzeugung einer strukturierten Lackoberfläche und/oder Strukturlackoberfläche.

15. System nach einem der Ansprüche 11 bis 14,
wobei das System mindestens eine Oberflächen-Bearbeitungsvorrichtung aufweist insbesondere zur Bearbeitung, vorzugsweise Glättung, der Oberfläche des thermoplastischen Kunststoffstrangs und/oder der Kantenbeschichtung, insbesondere wobei die Oberflächen-Bearbeitungsvorrichtung als Glättungs-, Schleif-, Fräs-, Kalibrier-, Schneid- und/oder Poliervorrichtung ausgebildet ist und/oder insbesondere wobei die Oberflächen-Bearbeitungsvorrichtung in Prozessrichtung stromaufwärts zu der Druck- und/oder Farbauftragsvorrichtung (C) angeordnet und/oder in Prozessrichtung hierzu vorgeschaltet ist.

## Claims

1. Method for edge coating a plate-shaped substrate, preferably a plate-shaped wood and/or furniture part, in particular method for applying an edge coating to at least one edge of a plate-shaped substrate, preferably a plate-shaped wood and/or furniture part, wherein the method comprises the following method steps:
(a) producing a heat-adhesive thermoplastic plastic strand, in particular a plastic profile strand or plastic film, preferably in the form of an edge band, preferably using extrusion,
(b) applying and/or fixing, preferably material bonding and/or permanent fixing, of the thermoplastic plastic strand, in particular plastic profile strand or plastic film, to at least one edge of the plate-shaped substrate in such a way that an edge coating of the plate-shaped substrate results and/or that a bond of the plate-shaped substrate with the edge coating applied and/or fixed thereto results,
(c) applying a printing onto the thermoplastic plastic strand, in particular plastic profile strand or plastic film, and/or to the edge coating;
wherein in method step (c) the application of the printing is carried out by multicolor printing and/or using a plurality of printing inks of different colors and wherein the printing inks are applied in dot form and/or screen form onto the thermoplastic plastic strand and/or onto the edge coating, wherein the resulting coloring is produced by superpositioning and/or juxtapositioning the printing inks,
wherein in method step (c) the application of the printing is controlled and/or carried out electronically and/or in a computer-based way using digital printing, wherein the print image to be produced in the course of the printing is configured and/or predetermined in an electronically-based way,
wherein, at first, the dimensions of the area of the plate-shaped substrate to be equipped with the edge coating and/or the printing are determined electronically and/or in a computer-based way and, subsequently, the producing of the thermoplastic plastic strand and/or the applying and/or fixing of the thermoplastic plastic strand and/or the application of the printing is or are adapted to the determined dimensions and/or controlled electronically and/or in a computer-based way in dependence on the determined dimensions, and
wherein, at first, before the application of the printing and/or before method step (c) the optical configuration of the plate-shaped substrate is electronically determined and/or analyzed and, subsequently, in method step (c) the printing is configured as and/or adapted to a function of the optical configuration.

2. Method according to claim 1,
wherein the method, in particular the overall operation of the method steps (a), (b) and (c), is carried out at least substantially continuously and/or uninterruptedly and/or with at least substantially uninterrupted process operation and/or with at least substantially uninterrupted process operation; and/or
wherein the method steps (a), (b) and (c) are carried out spatially coherently and/or temporally coherently, in particular spatially coherently and temporally coherently; and/or
wherein the method steps (a), (b) and (c) are carried out in a joint process operation and/or in a joint process section (system section) or system line and/or in a joint process space (system space), in particular as an in-line method or in-line process;
or else
wherein the method, in particular the overall operation of the method steps (a), (b) and (c), is carried out discontinuously and/or not without interruption; and/or
wherein the method steps (a), (b) and (c), in particular the method steps (b) and (c), are carried out at least in part spatially separated from each other and/or temporally separated from each other, in particular spatially separated from each other and temporally separated from each other; and/or
wherein the method steps (a), (b) and (c), in particular the method steps (b) and (c), are carried out at least in part in from each other separate process operations and/or in from each other separate process spaces (system spaces).

3. Method according to claim 1 or 2,
wherein, in particular in method step (a), the thermoplastic plastic strand and/or the material for the thermoplastic plastic strand, in particular the plastic polymer, in particular as defined below, of the thermoplastic plastic strand, is present in a moldable and/or flowable and/or heat-adhesive state and/or is converted into such a state, in particular by using heat application, preferably to a temperature above the softening range and/or softening point of the thermoplastic plastic strand and/or of the (starting) material used for the thermoplastic plastic strand, in particular plastic polymer; and/or
wherein, in particular in method step (a), producing the thermoplastic plastic strand is effected and/or carried out by means of at least one producing apparatus (A), in particular wherein the thermoplastic plastic strand is produced and/or discharged from the producing apparatus (A) at least substantially uniformly and/or at an at least substantially uniform and/or with at least substantially constant speed, in particular using nozzle extrusion, preferably slot nozzle extrusion; and/or
wherein, in particular in method step (a), producing the heat-adhesive thermoplastic plastic strand is carried out by means of nozzle(s), in particular nozzle extrusion, preferably slot nozzle extrusion, or wherein, in particular in method step (a), producing the heat-adhesive thermoplastic plastic strand is carried out by means of rollers and/or roller discharge; and/or
wherein, in particular in method step (a), producing of the heat-adhesive thermoplastic plastic strand takes place by means of nozzle(s), in particular nozzle extrusion, preferably slot nozzle extrusion, or by means of rolls and/or roll discharge; and/or
wherein, in particular in method step (a), producing of the thermoplastic resin strand takes place at a speed in the range from 1 m/min to 300 m/min, in particular in the range from 10 m/min to 200 m/min, preferably in the range from 20 m/min to 100 m/min.

4. Method according to any of the preceding claims,
wherein, in particular in method step (b), the thermoplastic plastic strand is applied and/or fixed at least substantially over the entire surface and/or at least substantially without interruption and/or at least substantially homogeneously and/or with uniform thickness on the in particular plate-shaped substrate, in particular on the at least one edge of the plate-shaped substrate; and/or
wherein, in particular in method step (b), the thermoplastic plastic strand is applied and/or fixed at least substantially over the entire surface and/or at least substantially without interruption on the in particular plate-shaped substrate, in particular on the at least one edge (narrow side) of the plate-shaped substrate; and/or
wherein, in particular in method step (b), the at least one edge (narrow side) of the plate-shaped substrate is coated along its entire height and/or its entire length, in particular at least substantially over the entire surface, with the thermoplastic plastic strand.

5. Method according to any of the preceding claims,
wherein the plate-shaped substrate, in particular the edge of the plate-shaped substrate, is provided with at least one adhesion promoter (primer) and/or is subjected to a pre- and/or surface treatment and/or activation, preferably using corona or plasma treatment, in particular before applying and/or fixing the thermoplastic plastic strand; or
wherein in method step (b) applying and/or fixing the thermoplastic plastic strand to the in particular plate-shaped substrate, in particular to the at least one edge of the plate-shaped substrate, is carried out without using an adhesion promoter (primer) and/or without pre- and/or surface treatment and/or activation of the plate-shaped substrate, in particular without use of an adhesion promoter for the edge of the plate-shaped substrate, and/or without pretreatment of the thermoplastic resin strand, in particular without pretreatment of the side and/or surface of the thermoplastic resin strand to be applied to the substrate.

6. Method according to any of the preceding claims,
wherein, in particular after method step (a), preferably at least substantially immediately after method step (a), and/or in particular before method step (b) and/or before method step (c), at least one intermediate step is carried out, in particular at least one intermediate step according to method step (a')
in particular wherein the method is carried out in the order of method steps (a), (a'), (b) and (c); or
in particular wherein the method is carried out in the order of method steps (a), (a'), (c) and (b); and
wherein as an intermediate step, in particular as an intermediate step according to method step (a'), an applying and/or fixing, preferably applying and detachable and/or intermediate (non-permanent) fixing, of the thermoplastic plastic strand, in particular plastic profile strand or plastic film, on a carrier is carried out,
in particular wherein applying and/or fixing on the carrier is effected and/or carried out by means of nozzle application, preferably slot nozzle application, roller application, scraping, spraying, calendaring, printing processes, in particular by means of nozzle application or extrusion and/or roller application, preferably slot nozzle application; and/or
in particular wherein shaping (formatting), in particular further shaping (further formatting), of the thermoplastic plastic strand is carried out during and/or after the thermoplastic plastic strand is applied and/or fixed to the carrier; and/or
in particular wherein the carrier comprises at least one surface and/or side for receiving the thermoplastic plastic strand; and/or
in particular wherein the carrier comprises or consists of a carrier material selected from the group of preferably heat-resistant paper, preferably heat-resistant cardboard, metal, preferably heat-resistant plastic, wood and combinations thereof.

7. Method according to any of the preceding claims,
wherein, in particular in method step (c), the application of the printing is carried out using at least one printing ink which can be applied preferably by means of ink jet printing and/or laser printing, in particular ink jet printing, in particular wherein the printing ink is configured to be UV-curable;
in particular wherein the printing ink is dried and/or UV-cured after its application and/or application onto the thermoplastic plastic strand and/or onto the edge coating, in particular using at least one drying and/or UV-curing apparatus.

8. Method according to any of the preceding claims,
wherein, in particular in method step (c), the thermoplastic plastic strand and/or the edge coating, after the application of the printing ink(s), preferably after the configurations of the (top) ink and the printing ink(s), in particular on the side facing away from the substrate, is provided with a preferably transparent and/or translucent finishing and/or sealing layer, in particular based on and/or using at least one (clear) lacquer,
in particular wherein the (clear) lacquer is applied onto the thermoplastic plastic strand and/or the edge coating at least substantially over the entire surface and/or at least substantially without interruption; and/or
in particular wherein the finishing or sealing layer is configured to be matte or glossy and/or textured; and/or
in particular wherein the final or sealing layer is configured in a structuring manner, in particular using a structuring (clear) coating application, preferably using an intermittent (clear) coating application or the like; and/or
in particular wherein the (clear) coating is dried and/or UV-cured (UV-dried) in particular immediately after its application.

9. Method according to any of the preceding claims,
wherein the edge coating of the in particular plate-shaped substrate is formed exclusively by the thermoplastic plastic strand and/or wherein apart from the thermoplastic plastic strand no further edge coating, in particular no further edge tape, in particular no conventional edge tape, preferably no edge tape to be applied and/or fixed using an adhesive, is applied and/or fixed to the in particular plate-shaped substrate; and/or
wherein the substrate obtainable and/or obtained by the method, in particular at its edge coated in accordance with the method, comprises no further edge coating, in particular no further edge tape, in particular no conventional edge tape, preferably no edge tape to be applied and/or fixed by means of an adhesive, other than the thermoplastic plastic strand.

10. Method according to any of the preceding claims,
wherein the composite is **characterized by** at least one of the following properties:
- a water resistance in the range from 3 to 5, in particular in the range from 4 to 5, in particular determined according to Ikea TM 0002; and/or
- a heat resistance in the range from 3 to 5, in particular in the range from 4 to 5, in particular determined according to Ikea TM 0002; and/or
- a resistance to humid climatic conditions, in particular determined in accordance with AMK Module 2 Merkblatt 005, April 2015 at least substantially without any visually detectable and/or visible change in the composite and/or the edge coating; and/or
- an alternating climate resistance, in particular determined according to AMK module 3 data sheet 005, April 2015, at least substantially without any visually detectable and/or visible change of the composite and/or the edge coating; and/or
- a resistance to water vapor, in particular determined in accordance with AMK module 1 data sheet 005, April 2015, at least substantially without a visually detectable and/or visible change in the composite and/or the edge coating; and/or
- a UV resistance according to gray scale in the range from 3 to 5, in particular in the range from 4 to 5, preferably 5, and/or according to blue scale (wool scale) in the range from 6 to 8, in particular in the range from 7 to 8, preferably 8, in particular determined according to DIN EN ISO 4892-2:2013 and/or according to DIN EN 15187:2006.

11. A system for carrying out a method of edge coating a plate-shaped substrate according to any of the preceding claims,
wherein the system comprises the following components and/or apparatuses:
(A) at least one producing apparatus (A) for producing a heat-adhesive thermoplastic plastic strand, in particular plastic profile strand or plastic film, preferably in the form of an edge tape, for carrying out method step (a);
(B) at least one application and/or fixing apparatus (B) for applying and/or fixing the thermoplastic plastic strand, in particular plastic profile strand or plastic film, to at least one edge of the plate-shaped substrate in such a way that an edge coating of the in particular plate-shaped substrate results and/or that a composite of the plate-shaped substrate with the edge coating applied and/or fixed thereto results, for carrying out method step (b);
(C) at least one printing and/or ink application apparatus (C) for applying a printing onto the thermoplastic plastic strand, in particular plastic profile strand or plastic film, and/or onto the edge coating, for carrying out method step (c)
wherein the application of the printing is effected by multicolor printing and/or by using a plurality of printing inks of different colors and wherein the printing inks are applied in dot form and/or screen form onto the thermoplastic resin strand and/or onto the edge coating, the resulting coloring being produced by superpositioning and/or juxtapositioning the printing inks,
wherein the application of the printing is controlled and/or carried out electronically and/or in a computer-based way by means of digital printing, wherein the print image to be produced in the course of the printing is configured and/or is predetermined electronically,
wherein first the dimensions of the area of the plate-shaped substrate to be equipped with the edge coating and/or the printing are determined electronically and/or in a computer-based way and subsequently the producing of the thermoplastic plastic strand and/or the applying and/or fixing of the thermoplastic plastic strand and/or the application of the printing is or are adapted to the determined dimensions and/or controlled electronically and/or in a computer-based way in dependence on the determined dimensions, and
wherein at first before applying the printing the optical configuration of the plate-shaped substrate is electronically determined and/or analyzed and subsequently the printing is configured as a function of the optical configuration and/or adapted thereto.

12. System according to claim 11,
wherein the producing apparatus (A) and the application and/or fixing apparatus (B) are combined and/or configured as a combined producing and application and/or fixing apparatus.

13. System according to claim 11 or 12,
wherein the producing apparatus (A), the application and/or fixing apparatus (B), in particular the combined producing and application or fixing apparatus, and the printing and/or ink application apparatus (C) are arranged in a joint process section or system line and/or in a joint process space or else wherein the producing apparatus (A), the application and/or fixing apparatus (B), in particular the combined producing and application and/or fixing apparatus (AB), and the printing and/or ink application apparatus (C) are in particular arranged at least partially in process sections or system lines which are different from one another and/or separate from one another and/or in process spaces which are different from one another and/or separate from one another.

14. System according to any of claims 11 to 13,
wherein the printing and/or ink application apparatus (C) comprises at least one printing and/or ink application device, in particular a plurality of printing and/or ink application devices, in particular wherein the printing and/or ink application devices are connected and/or arranged one behind the other in the downstream process direction and/or in the upstream process direction; and/or
wherein the printing and/or ink application apparatus (C) comprises at least one drying device, in particular a plurality of drying devices, in particular for drying and/or curing, in particular UV curing, a respective previously applied printing ink, in particular wherein a respective drying device is arranged downstream in the process direction relative to a respective printing and/or ink application device and/or is arranged downstream in the process direction relative thereto; and/or
wherein the printing and/or ink application apparatus (C) comprises at least one varnish application device, in particular for applying a preferably transparent and/or translucent finishing and/or sealing layer, in particular based on and/or using at least one (clear) varnish, in particular wherein the varnish application device is arranged downstream in the process direction relative to the printing and/or ink application devices and/or is arranged downstream in the process direction relative thereto and/or in particular wherein at least one drying device is arranged downstream in the process direction and/or downstream in the process direction from the coating application device, in particular for drying and/or curing and/or setting the gloss and/or mattness of the applied (clear) coating and/or for producing a structured coating surface and/or structured coating surface.

15. System according to any of claims 11 to 14,
wherein the system comprises at least one surface processing apparatus, in particular for processing, preferably smoothing, the surface of the thermoplastic plastic strand and/or the edge coating, in particular wherein the surface processing apparatus is configured as a smoothing, grinding, milling, calibrating, cutting and/or polishing apparatus, and/or in particular wherein the surface processing apparatus is arranged upstream of the printing and/or ink application apparatus (C) in the process direction and/or is connected upstream thereof in the process direction.

## Revendications

1. Procédé de revêtement des bords d'un substrat en forme de plaque, de préférence d'un élément en bois et/ou d'un meuble en forme de plaque, en particulier procédé d'application d'un revêtement de bord sur au moins un bord d'un substrat en forme de plaque, de préférence d'un élément en bois et/ou d'un meuble en forme de plaque,
le procédé comprenant les étapes suivantes:
(a) production d'un cordon thermoplastique thermocollant, en particulier d'un cordon profilé en plastique ou d'un film plastique, de préférence sous la forme d'une bande de chant, de préférence par extrusion,
(b) application et/ou la fixation, de préférence l'application et la fixation par liaison de matière et/ou durable, du cordon de matière synthétique thermoplastique, en particulier du cordon profilé en matière synthétique ou du film en matière synthétique, sur au moins un bord du substrat en forme de plaque de telle sorte qu'il en résulte un revêtement de bord du substrat en forme de plaque et/ou qu'il en résulte une liaison du substrat en forme de plaque avec le revêtement de bord appliqué et/ou fixé sur celui-ci,
(c) application d'une impression sur le boudin thermoplastique, en particulier le boudin profilé en plastique ou le film plastique, et/ou sur le revêtement de bord,
où, dans l'étape de procédé (c), l'application de l'impression s'effectue en impression polychrome et/ou en utilisant une pluralité d'encres d'impression de couleurs différentes les unes des autres et où les encres d'impression sont appliquées sous forme de points et/ou de trames sur le boudin thermoplastique et/ou sur le revêtement des arêtes, la coloration résultante étant provoquée par la superposition et/ou la juxtaposition des encres d'impression,
dans l'étape (c) du procédé, l'application de l'impression est commandée et/ou réalisée par voie électronique et/ou informatique au moyen d'une impression numérique, l'image d'impression à réaliser dans le cadre de l'impression étant réalisée et/ou prédéterminée sur une base électronique,
les dimensions de la surface du substrat en forme de plaque à équiper du revêtement de bord et/ou de l'impression étant tout d'abord saisies électroniquement et/ou par ordinateur, et la production du boudin de matière thermoplastique et/ou l'application et/ou la fixation du boudin de matière thermoplastique et/ou l'application de l'impression étant ensuite adaptée aux dimensions déterminées et/ou commandée électroniquement et/ou par ordinateur en fonction des dimensions déterminées, et
où, tout d'abord, avant l'application de l'impression et/ou avant l'étape de procédé (c), la configuration optique du substrat en forme de plaque est saisie et/ou analysée électroniquement et, ensuite, dans l'étape de procédé (c), l'impression est réalisée en fonction de la configuration optique et/ou adaptée à celle-ci.

2. Procédé selon la revendication 1,
le procédé, en particulier l'exécution totale des étapes de procédé (a), (b) et (c), étant réalisé au moins essentiellement en continu et/ou sans interruption et/ou avec une conduite de procédé au moins essentiellement sans interruption et/ou avec une conduite de procédé au moins essentiellement sans interruption; et/ou
les étapes de procédé (a), (b) et (c) étant réalisées de manière contiguë dans l'espace et/ou dans le temps, en particulier de manière contiguë dans l'espace et dans le temps; et/ou
les étapes de procédé (a), (b) et (c) étant réalisées dans une conduite de procédé commune et/ou dans une section de procédé commune ou une ligne de système commune et/ou dans un espace de procédé commun (espace de processus), en particulier comme *procédé en ligne* ou *processus en ligne*;
ou alors
le procédé, en particulier l'exécution totale des étapes de procédé (a), (b) et (c), étant réalisé de manière discontinue et/ou non ininterrompue; et/ou
les étapes de procédé (a), (b) et (c) étant effectuées au moins en partie, en particulier les étapes de procédé (b) et (c), séparément les unes des autres dans l'espace et/ou séparées les unes des autres dans le temps, en particulier séparées les unes des autres dans l'espace et séparées les unes des autres dans le temps; et/ou
les étapes de procédé (a), (b) et (c) étant réalisées au moins en partie, en particulier les étapes de procédé (b) et (c), dans des guides de procédé séparés les uns des autres et/ou dans des espaces de procédé (espaces de processus) séparés les uns des autres.

3. Procédé selon la revendication 1 ou 2,
où, en particulier dans l'étape de procédé (a), le boudin de matière synthétique thermoplastique et/ou le matériau pour le boudin de matière synthétique thermoplastique, en particulier le polymère de matière synthétique, en particulier comme défini ci-après, du boudin de matière synthétique thermoplastique, se trouve dans un état moulable et/ou fluide et/ou thermocollant et/ou est transformé en un tel état, en particulier au moyen d'une application de chaleur, de préférence à une température supérieure à la zone de ramollissement et/ou au point de ramollissement du boudin thermoplastique et/ou du matériau (de départ) utilisé pour le boudin thermoplastique, en particulier le polymère plastique; et/ou
où, en particulier dans l'étape de procédé (a), la production du boudin de matière thermoplastique est effectuée et/ou réalisée au moyen d'au moins un dispositif de production (A), en particulier où le boudin de matière thermoplastique est produit et/ou évacué du dispositif de production (A) de manière au moins sensiblement uniforme et/ou à une vitesse au moins sensiblement uniforme et/ou au moins sensiblement constante, en particulier au moyen d'une extrusion par filière, de préférence une extrusion par filière à fente; et/ou
où, en particulier dans l'étape de procédé (a), la production du boudin thermoplastique thermocollant s'effectue au moyen d'une ou de plusieurs filières, en particulier d'une extrusion par filière, de préférence d'une extrusion par filière à fente, ou où, en particulier dans l'étape de procédé (a), la production du boudin thermoplastique thermocollant s'effectue au moyen de cylindres et/ou d'une évacuation par cylindre; et/ou
où, en particulier dans l'étape de procédé (a), la production du boudin thermoplastique thermocollant s'effectue au moyen d'une ou de plusieurs filières, en particulier d'une extrusion par filière, de préférence d'une extrusion par filière à fente, ou au moyen de cylindres et/ou d'un déchargement par cylindre; et/ou
où, en particulier dans l'étape de procédé (a), la production du boudin thermoplastique s'effectue à une vitesse dans la plage de 1 m/min à 300 m/min, en particulier dans la plage de 10 m/min à 200 m/min, de préférence dans la plage de 20 m/min à 100 m/min.

4. Procédé selon l'une quelconque des revendications précédentes,
où, en particulier dans l'étape de procédé (b), le cordon de matière thermoplastique est appliqué et/ou fixé au moins sensiblement sur toute la surface et/ou au moins sensiblement sans interruption et/ou au moins sensiblement de manière homogène et/ou avec une épaisseur uniforme sur le substrat en forme de plaque, en particulier sur le au moins un bord du substrat en forme de plaque; et/ou
où, en particulier dans l'étape de procédé (b), le cordon de matière thermoplastique est appliqué et/ou fixé au moins sensiblement sur toute la surface et/ou au moins sensiblement sans interruption sur le substrat en forme de plaque, en particulier sur le au moins un bord du substrat en forme de plaque; et/ou
où, en particulier dans l'étape de procédé (b), l'au moins un bord du substrat en forme de plaque est revêtu sur toute sa hauteur et/ou sur toute sa longueur, en particulier au moins sensiblement sur toute sa surface, avec le cordon de matière thermoplastique.

5. Procédé selon l'une quelconque des revendications précédentes,
où le substrat en forme de plaque, en particulier le bord du substrat en forme de plaque, en particulier avant l'application et/ou la fixation du cordon de matière thermoplastique, est équipé d'au moins un agent adhésif et/ou est soumis à un traitement et/ou une activation préalable et/ou de surface, de préférence au moyen d'un traitement corona ou plasma; ou
où, dans l'étape de procédé (b), l'application et/ou la fixation du cordon de matière synthétique thermoplastique sur le substrat en particulier en forme de plaque, en particulier sur le au moins un bord du substrat en forme de plaque, s'effectue sans utilisation d'un agent adhésif et/ou sans prétraitement et/ou activation de surface du substrat en forme de plaque, en particulier sans utilisation d'un agent adhésif pour le bord du substrat en forme de plaque, et/ou sans prétraitement du boudin thermoplastique, en particulier sans prétraitement du côté et/ou de la surface du boudin thermoplastique à appliquer sur le substrat.

6. Procédé selon l'une quelconque des revendications précédentes,
où, en particulier après l'étape de procédé (a), de préférence au moins sensiblement immédiatement après l'étape de procédé (a), et/ou en particulier avant l'étape de procédé (b) et/ou avant l'étape de procédé (c), au moins une étape intermédiaire, en particulier au moins une étape intermédiaire selon l'étape de procédé (a'), est réalisée
en particulier où le procédé est mis en oeuvre dans l'ordre des étapes de procédé (a), (a'), (b) et (c); ou
en particulier où le procédé est réalisé dans l'ordre des étapes de procédé (a), (a'), (c) et (b); et
une étape intermédiaire, en particulier une étape intermédiaire selon l'étape de procédé (a'), consistant à appliquer et/ou à fixer, de préférence à appliquer et à fixer de manière amovible et/ou intermédiaire, le cordon de matière thermoplastique, en particulier le cordon profilé en matière plastique ou le film en matière plastique, sur un support,
en particulier, l'application et/ou la fixation sur le support étant effectuée et/ou réalisée au moyen d'une application par buse, de préférence par buse à fente, d'une application par rouleau, d'un raclage, d'une pulvérisation, d'un calandrage, d'un procédé d'impression, en particulier au moyen d'une application ou d'une extrusion par buse et/ou d'une application par rouleau, de préférence par buse à fente; et/ou
en particulier où, pendant et/ou après l'application et/ou la fixation du boudin de matière thermoplastique sur le support, on procède à un façonnage, en particulier à un autre façonnage (autre formatage ou autre mise en forme) du boudin de matière thermoplastique; et/ou
en particulier où le support présente au moins une face et/ou un côté pour recevoir le cordon de matière thermoplastique; et/ou
en particulier où le support présente un matériau de support choisi dans le groupe du papier de préférence résistant à la chaleur, du carton de préférence résistant à la chaleur, du métal, du plastique de préférence résistant à la chaleur, du bois ainsi que de leurs combinaisons, ou en est constitué.

7. Procédé selon l'une quelconque des revendications précédentes,
où, en particulier dans l'étape de procédé (c), l'application de l'impression s'effectue en utilisant au moins une encre d'impression pouvant être appliquée de préférence par impression par jet d'encre et/ou impression laser, en particulier par jet d'encre, en particulier où l'encre d'impression est conçue pour être durcissable aux UV;
en particulier où l'encre d'impression est séchée et/ou durcie aux UV après son application et/ou son dépôt sur le boudin thermoplastique et/ou sur le revêtement de bord, en particulier au moyen d'au moins un dispositif de séchage et/ou de durcissement aux UV.

8. Procédé selon l'une quelconque des revendications précédentes,
où, en particulier dans l'étape de procédé (c), le boudin thermoplastique et/ou le revêtement de bord, après l'application de la ou des encres d'impression, de préférence après les réalisations de l'encre de (dé)finition et de la ou des encres d'impression, en particulier sur le côté opposé au substrat, est équipé d'une couche de finition et/ou de scellement, de préférence transparente et/ou translucide, en particulier à base et/ou en utilisant au moins un vernis (transparent),
en particulier où la laque (transparente) est appliquée au moins sensiblement sur toute la surface et/ou au moins sensiblement sans interruption sur le boudin thermoplastique et/ou le revêtement de bord; et/ou
en particulier la couche de finition ou de scellement étant mate ou brillante et/ou structurante; et/ou
en particulier où la couche de finition ou de scellement est réalisée de manière à former une structure, en particulier au moyen d'une application de vernis (clair) donnant une structure, de préférence au moyen d'une application de vernis (clair) intermittente ou similaire; et/ou
en particulier la laque (transparente) étant séchée et/ou durcie aux UV (séchée aux UV) en particulier immédiatement après son application.

9. Procédé selon l'une quelconque des revendications précédentes,
où le revêtement de bord du substrat en forme de plaque est formé exclusivement par le cordon de matière thermoplastique et/ou où, outre le cordon de matière thermoplastique, aucun autre revêtement de bord, en particulier aucune autre bande de bord, en particulier aucune bande de bord conventionnelle, de préférence aucune bande de bord à appliquer et/ou à fixer au moyen d'un adhésif, n'est appliqué et/ou fixé sur le substrat en forme de plaque; et/ou
le substrat obtenu et/ou obtenu selon le procédé, en particulier sur son bord revêtu selon le procédé, ne présentant, outre le cordon de matière synthétique thermoplastique, aucun autre revêtement de bord, en particulier aucune autre bande de bord, en particulier aucune bande de bord conventionnelle, de préférence aucune bande de bord à appliquer et/ou à fixer au moyen d'un adhésif.

10. Procédé selon l'une quelconque des revendications précédentes,
le composite étant **caractérisé par** au moins une des propriétés suivantes:
- une résistance à l'eau de l'ordre de 3 à 5, en particulier de l'ordre de 4 à 5, déterminée notamment selon Ikea TM 0002; et/ou
- une résistance à la chaleur de l'ordre de 3 à 5, en particulier de l'ordre de 4 à 5, déterminée notamment selon Ikea TM 0002; et/ou
- une résistance au climat humide, déterminée en particulier selon le module 2 AMK Merkblatt 005, avril 2015, au moins essentiellement sans altération visuellement détectable et/ou visible de l'assemblage et/ou du revêtement des bords; et/ou
- une résistance aux climats alternatifs, déterminée en particulier selon le module 3 de l'AMK, fiche 005, avril 2015, au moins pour l'essentiel sans altération visuellement détectable et/ou visible de l'assemblage et/ou du revêtement des bords; et/ou
- une exposition à la vapeur d'eau, déterminée en particulier selon le module 1 AMK Merkblatt 005, avril 2015, au moins pour l'essentiel sans modification visuellement détectable et/ou visible du composite et/ou du revêtement des bords; et/ou
- une résistance aux UV selon l'échelle de gris dans la plage de 3 à 5, en particulier dans la plage de 4 à 5, de préférence 5, et/ou selon l'échelle de bleu (échelle de laine) dans la plage de 6 à 8, en particulier dans la plage de 7 à 8, de préférence 8, déterminée en particulier selon DIN EN ISO 4892-2:2013 et/ou selon DIN EN 15187:2006.

11. Système pour la mise en œuvre d'un procédé de revêtement des bords d'un substrat en forme de plaque selon l'une quelconque des revendications précédentes,
le système comprenant les composants et/ou les dispositifs suivants:
(A) au moins un dispositif de production (A) pour produire un cordon thermoplastique thermocollant, en particulier un cordon profilé en matière plastique ou un film en matière plastique, de préférence sous la forme d'une bande de chant, pour la mise en oeuvre de l'étape de procédé (a);
(B) au moins un dispositif d'application et/ou de fixation (B) pour appliquer et/ou fixer le cordon de matière synthétique thermoplastique, en particulier le cordon profilé en matière synthétique ou le film en matière synthétique, sur au moins un bord du substrat en forme de plaque de telle sorte qu'il en résulte un revêtement de bord du substrat en forme de plaque et/ou qu'il en résulte une liaison du substrat en forme de plaque avec le revêtement de bord appliqué et/ou fixé sur celui-ci, pour la mise en oeuvre de l'étape de procédé (b);
(C) au moins un dispositif d'impression et/ou d'application d'encre (C) pour appliquer une impression sur le boudin thermoplastique, en particulier le boudin profilé en plastique ou le film plastique, et/ou sur le revêtement de bord pour réaliser l'étape de procédé (c)
l'application de l'impression s'effectuant par impression polychrome et/ou en utilisant une pluralité d'encres d'impression de couleurs différentes les unes des autres, et les encres d'impression étant appliquées par points et/ou sous forme de trame sur le boudin thermoplastique et/ou sur le revêtement de bord, la coloration résultante étant provoquée par la superposition et/ou la juxtaposition des encres d'impression,
l'application de l'impression étant commandée et/ou réalisée par voie électronique et/ou informatique au moyen d'une impression numérique, l'image d'impression à réaliser dans le cadre de l'impression étant réalisée et/ou prédéfinie par voie électronique,
les dimensions de la surface du substrat en forme de plaque à équiper du revêtement de bord et/ou de l'impression étant tout d'abord saisies électroniquement et/ou par ordinateur, et la production du boudin de matière thermoplastique et/ou l'application et/ou la fixation du boudin de matière thermoplastique et/ou l'application de l'impression étant ensuite adaptée aux dimensions déterminées et/ou commandée électroniquement et/ou par ordinateur en fonction des dimensions déterminées, et
la configuration optique du substrat en forme de plaque étant tout d'abord saisie et/ou analysée électroniquement avant l'application de l'impression et l'impression étant ensuite réalisée en fonction de la configuration optique et/ou adaptée à celle-ci.

12. Système selon la revendication 11,
le dispositif de génération (A) et le dispositif d'application et/ou de fixation (B) étant réunis et/ou conçus comme dispositif combiné de génération et d'application ou de fixation.

13. Système selon la revendication 11 ou 12,
le dispositif de production (A), le dispositif d'application et/ou de fixation (B), en particulier le dispositif combiné de production et d'application ou de fixation, et le dispositif d'impression et/ou d'application d'encre (C) étant disposés dans une section de traitement ou une ligne de système commune et/ou dans un espace de traitement commun, ou bien le dispositif de production (A), le dispositif d'application et/ou de fixation (B), en particulier le dispositif combiné de production et d'application ou de fixation, étant disposés dans des zones de traitement différentes dispositif de fixation (AB), et le dispositif d'impression et/ou d'application d'encre (C) sont disposés en particulier au moins partiellement dans des sections de procédé ou des lignes de système différentes et/ou séparées les unes des autres et/ou dans des espaces de procédé différents et/ou séparés les uns des autres.

14. Système selon l'une quelconque des revendications 11 à 13,
le dispositif d'impression et/ou d'application d'encre (C) présentant au moins un dispositif d'impression et/ou d'application d'encre, en particulier une pluralité de dispositifs d'impression et/ou d'application d'encre, en particulier les dispositifs d'impression et/ou d'application d'encre étant montés et/ou disposés les uns derrière les autres dans le sens du processus en aval et/ou dans le sens du processus; et/ou
le dispositif d'impression et/ou d'application d'encre (C) présentant au moins un dispositif de séchage, en particulier une pluralité de dispositifs de séchage, en particulier pour le séchage et/ou le durcissement, en particulier le durcissement aux UV, d'une encre d'impression respectivement appliquée auparavant, en particulier un dispositif de séchage respectif étant disposé en aval, dans le sens du processus, d'un dispositif d'impression et/ou d'application d'encre respectif et/ou étant monté en aval de celui-ci dans le sens du processus; et/ou
le dispositif d'impression et/ou d'application de couleur (C) présentant au moins un dispositif d'application de laque, en particulier pour l'application d'une couche de finition et/ou de scellement de préférence transparente et/ou translucide, en particulier à base et/ou en utilisant au moins une laque (transparente), en particulier le dispositif d'application de laque étant disposé en aval des dispositifs d'impression et/ou d'application de couleur dans le sens du processus et/ou étant monté en aval de ceux-ci dans le sens du processus; et/ou en particulier où au moins un dispositif de séchage est disposé en aval du dispositif d'application de vernis dans le sens du processus et/ou en aval du dispositif d'application de vernis dans le sens du processus, en particulier pour le séchage et/ou le durcissement et/ou le réglage de la brillance et/ou de la matité du vernis (clair) appliqué et/ou pour la production d'une surface de vernis structurée et/ou d'une surface de vernis structurée.

15. Système selon l'une quelconque des revendications 11 à 14,
le système présentant au moins un dispositif de traitement de surface, en particulier pour le traitement, de préférence le lissage, de la surface du boudin thermoplastique et/ou du revêtement de bord, en particulier le dispositif de traitement de surface étant conçu comme un dispositif de lissage, de ponçage, de fraisage, de calibrage, de coupe et/ou de polissage et/ou en particulier le dispositif de traitement de surface étant disposé dans le sens du processus en amont du dispositif d'impression et/ou d'application de peinture (C) et/ou étant monté en amont de celui-ci dans le sens du processus.
